(19) Europäisches Patentamt
European Patent Office
Office européen des brevets

(11) **EP 4 773 500 A1**

(12) **EUROPEAN PATENT APPLICATION**
published in accordance with Art. 153(4) EPC

(43) Date of publication:
**08.07.2026 Bulletin 2026/28**

(21) Application number: **24859666.0**

(22) Date of filing: **26.08.2024**

(51) International Patent Classification (IPC):
**H02N 2/06** (2006.01)

(52) Cooperative Patent Classification (CPC):
**H02N 2/06**

(86) International application number:
**PCT/JP2024/030122**

(87) International publication number:
**WO 2025/047633 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.08.2023 JP 2023139406**

(71) Applicant: **Canon Kabushiki Kaisha
Tokyo 146-8501 (JP)**

(72) Inventors:
• **KATAOKA, Kenichi
Tokyo 146-8501 (JP)**
• **FUJIMOTO, Kosuke
Tokyo 146-8501 (JP)**

(74) Representative: **Canon Europe Limited
European Intellectual Property Group
4 Roundwood Avenue
Stockley Park
Uxbridge UB11 1AF (GB)**

(54) **VIBRATION-TYPE DRIVE DEVICE**

(57) A vibration actuator including a vibrating body including an elastic body and an electromechanical energy conversion element, and a contact body configured to contact the elastic body, the actuator being a vibration driving apparatus wherein the vibrating body and the contact body are configured to move relatively in a predetermined moving direction due to vibration of the vibrating body, wherein the vibration includes a first vibration component generated in the vibrating body by a voltage applied to the electromechanical energy conversion element, and a second vibration component occurring on the vibrating body due to contact of the contact body and the elastic body, and wherein a signal corresponding to the second vibration component is detected, and a relative speed between the vibrating body and the contact body is detected based on the signal.

**FIG.2**

*SECOND VIBRATION COMPONENT = VIBRATION COMPONENT OCCURRING ON
VIBRATING BODY DUE TO REACTION FORCE RECEIVED FROM CONTACT BODY
THIRD VIBRATION COMPONENT = VIBRATION COMPONENT OCCURRING IN PIEZOELECTRIC BODY 3
FOURTH VIBRATION COMPONENT = VIBRATION COMPONENT OCCURRING IN PIEZOELECTRIC BODY 4

EP 4 773 500 A1

**Description**

Technical Field

The present invention relates to an apparatus that detects and controls the position, speed, and propelling force of a vibration driving apparatus.

Background Art

The moving speed of a contact body driven by vibration of a vibrating body of a vibration actuator, under a no-load condition, is substantially proportional to the vibration amplitude of the vibrating body. In simple speed control applications, a unit that detects the vibration amplitude is thus used for speed control instead of a speed sensor.
In Patent Literature 1, speed control is performed using the vibration amplitude of a vibrating body instead of a speed sensor. However, it has not been possible to detect the speed with high accuracy when external force acts on the moving body.
If an encoder or the like is used for speed detection, it has been difficult to quickly detect a stopped state.

Citation List

Patent Literature

PTL 1: Japanese Patent No. 3191406

Summary of Invention

Technical Problem

In view of the foregoing, the present invention is directed to providing a vibration driving apparatus and a control apparatus of a vibration driving apparatus that can estimate speed with a simple configuration and sufficient accuracy regardless of the occurrence of force (or torque).

Solution to Problem

A control apparatus according to the present invention is a control apparatus of a vibration actuator including a vibrating body including an elastic body and an electromechanical energy conversion element, and a contact body configured to contact the elastic body, wherein the vibrating body and the contact body are configured to move relatively in a predetermined moving direction due to vibration of the vibrating body, wherein the vibration includes a first vibration component generated in the vibrating body by a voltage applied to the electromechanical energy conversion element, and a second vibration component occurring on the vibrating body due to contact of the contact body and the elastic body, and wherein the control apparatus is configured to detect a signal corresponding to the second vibration component and detect a speed between the vibrating body and the contact body based on the signal.

Advantageous Effects of Invention

According to the present invention, speed can be estimated with a simple configuration and sufficient accuracy regardless of the occurrence of force (or torque). Since the speed can be detected along with direction, a stopped state can also be quickly detected.

Brief Description of Drawings

[Fig. 1A] Fig. 1A is a diagram illustrating a first example of a schematic configuration and vibration forms of a vibration actuator according to a first embodiment.
[Fig. 1B] Fig. 1B is a diagram illustrating the first example of the schematic configuration and the vibration forms of the vibration actuator according to the first embodiment.
[Fig. 1C] Fig. 1C is a diagram illustrating the first example of the schematic configuration and the vibration forms of the vibration actuator according to the first embodiment.

[Fig. 1D] Fig. 1D is a diagram illustrating the first example of the schematic configuration and the vibration forms of the vibration actuator according to the first embodiment.

[Fig. 1E] Fig. 1E is a diagram illustrating the first example of the schematic configuration and the vibration forms of the vibration actuator according to the first embodiment.

[Fig. 2] Fig. 2 is a diagram illustrating a first example of a configuration of a driving apparatus of the vibration actuator according to the first embodiment.

[Fig. 3] Fig. 3 is a schematic diagram illustrating a relationship between the relative speed between a vibrating body and a contact body and the vibration locus of the vibrating body.

[Fig. 4A] Fig. 4A is a diagram for describing a first example of detection of a second vibration component according to the first embodiment.

[Fig. 4B] Fig. 4B is a diagram for describing the first example of the detection of the second vibration component according to the first embodiment.

[Fig. 4C] Fig. 4C is a diagram for describing a second example of the detection of the second vibration component according to the first embodiment.

[Fig. 4D] Fig. 4D is a diagram for describing the second example of the detection of the second vibration component according to the first embodiment.

[Fig. 5A] Fig. 5A is a chart illustrating a relationship between speed and inclination of a vibration ellipse according to the first embodiment.

[Fig. 5B] Fig. 5B is a chart illustrating the relationship between the speed and the inclination of the vibration ellipse according to the first embodiment.

[Fig. 6A] Fig. 6A is a chart illustrating a relationship between the speed and (amplitude of current signal IA - amplitude of current signal IB) according to the first embodiment.

[Fig. 6B] Fig. 6B is a chart illustrating the relationship between the speed and (amplitude of current signal IA - amplitude of current signal IB) according to the first embodiment.

[Fig. 7] Fig. 7 is a diagram for describing a fourth example of the detection of the second vibration component according to the first embodiment.

[Fig. 8] Fig. 8 is a diagram for describing a method for determining the magnitudes of vectors of a same-direction component and a normal-direction component relative to a thrust vibration direction from vibration waveforms according to the first embodiment.

[Fig. 9] Fig. 9 is a diagram for describing a fifth example of the detection of the second vibration component according to the first embodiment.

[Fig. 10] Fig. 10 is a diagram for describing sixth and seventh examples of the detection of the second vibration component according to the first embodiment.

[Fig. 11A] Fig. 11A is a diagram illustrating an equivalent circuit model of a driving circuit and the vibrating body according to the first embodiment, and a second example of the configuration of a driving apparatus of the vibration actuator using the equivalent circuit model.

[Fig. 11B] Fig. 11B is a diagram illustrating the equivalent circuit model of the driving circuit and the vibrating body according to the first embodiment, and the second example of the configuration of the driving apparatus of the vibration actuator using the equivalent circuit model.

[Fig. 12A] Fig. 12A is a diagram for describing a third example of the configuration of the driving apparatus of the vibration actuator according to the first embodiment and the function of a current signal generation unit 51 used therein.

[Fig. 12B] Fig. 12B is a diagram for describing the third example of the configuration of the driving apparatus of the vibration actuator according to the first embodiment and the function of the current signal generation unit 51 used therein.

[Fig. 13A] Fig. 13A is a chart illustrating a correction coefficient for determining speed from the second vibration component S and a result of estimation of the speed according to the first embodiment.

[Fig. 13B] Fig. 13B is a chart illustrating a correction coefficient for determining the speed from the second vibration component S and a result of estimation of the speed according to the first embodiment.

[Fig. 13C] Fig. 13C is a chart illustrating the correction coefficient for determining the speed from the second vibration component S and a result of estimation of the speed according to the first embodiment.

[Fig. 13D] Fig. 13D is a chart illustrating the correction coefficient for determining the speed from the second vibration component S and a result of estimation of the speed according to the first embodiment.

[Fig. 14A] Fig. 14A is a diagram illustrating a fourth example of the configuration of the driving apparatus of the vibration actuator according to the first embodiment.

[Fig. 14B] Fig. 14B is a diagram illustrating a fifth example of the configuration of the driving apparatus of the vibration actuator according to the first embodiment.

[Fig. 15] Fig. 15 is a flowchart illustrating an operation for controlling speed, performed by a central processing unit (CPU) 34 according to the first embodiment.

[Fig. 16A] Fig. 16A is a flowchart illustrating an operation for controlling a thrust vibration amplitude, performed by the CPU 34 according to the first embodiment.

[Fig. 16B] Fig. 16B is a flowchart illustrating the operation for controlling the thrust vibration amplitude, performed by the CPU 34 according to the first embodiment.

[Fig. 17] Fig. 17 is a diagram illustrating a sixth example of the configuration of the driving apparatus of the vibration actuator according to the first embodiment.

[Fig. 18A] Fig. 18A is a diagram illustrating a second example of the schematic configuration and the vibration forms of the vibration actuator according to the first embodiment.

[Fig. 18B] Fig. 18B is a diagram illustrating the second example of the schematic configuration and the vibration forms of the vibration actuator according to the first embodiment.

[Fig. 18C] Fig. 18C is a diagram illustrating the second example of the schematic configuration and the vibration form of the vibration actuator according to the first embodiment.

[Fig. 18D] Fig. 18D is a diagram illustrating the second example of the schematic configuration and the vibration form of the vibration actuator according to the first embodiment.

[Fig. 19A] Fig. 19A is a diagram illustrating a third example of the schematic configuration and vibration forms of the vibration actuator according to the first embodiment.

[Fig. 19B] Fig. 19B is a diagram illustrating the third example of the schematic configuration and the vibration forms of the vibration actuator according to the first embodiment.

[Fig. 19C] Fig. 19C is a diagram illustrating the third example of the schematic configuration and the vibration forms of the vibration actuator according to the first embodiment.

[Fig. 19D] Fig. 19D is a diagram illustrating the third example of the schematic configuration and the vibration forms of the vibration actuator according to the first embodiment.

[Fig. 20A] Fig. 20A is a chart illustrating a reference speed according to the first embodiment.

[Fig. 20B] Fig. 20B is a chart illustrating the ratio (β) of a change in propelling force to a change in speed according to the first embodiment.

[Fig. 21] Fig. 21 is a diagram illustrating a seventh example of the configuration of the driving apparatus of the vibration actuator according to the first embodiment.

[Fig. 22A] Fig. 22A is a diagram illustrating an example of an alternating-current signal waveform and the waveform of a VB voltage amplitude command according to the first embodiment.

[Fig. 22B] Fig. 22B is a diagram illustrating an example of the alternating-current signal waveform and the waveform of the VB voltage amplitude command according to the first embodiment.

[Fig. 23A] Fig. 23A is a diagram illustrating a first example of a schematic configuration of a vibration actuator according to a second embodiment.

[Fig. 23B] Fig. 23B is a diagram illustrating the first example of the schematic configuration of the vibration actuator according to the second embodiment.

[Fig. 24] Fig. 24 is a diagram illustrating a first example of a configuration of a driving apparatus of the vibration actuator according to the second embodiment.

[Fig. 25A] Fig. 25A is a diagram for describing a first example of detection of a second vibration component according to the second embodiment.

[Fig. 25B] Fig. 25B is a diagram for describing the first example of the detection of the second vibration component according to the second embodiment.

[Fig. 25C] Fig. 25C is a diagram for describing a second example of the detection of the second vibration component according to the second embodiment.

[Fig. 25D] Fig. 25D is a diagram for describing the second example of the detection of the second vibration component according to the second embodiment.

[Fig. 26] Fig. 26 is a diagram for describing a third example of the detection of the second vibration component according to the second embodiment.

[Fig. 27] Fig. 27 is a diagram for describing a method for determining the magnitudes of vectors of a same-direction component and a normal-direction component relative to a thrust vibration direction from vibration waveforms according to the second embodiment.

[Fig. 28] Fig. 28 is a diagram for describing a fourth example of the detection of the second vibration component according to the second embodiment.

[Fig. 29] Fig. 29 is a diagram for describing fifth and sixth examples of the detection of the second vibration component according to the second embodiment.

[Fig. 30A] Fig. 30A is a diagram illustrating an equivalent circuit model of a driving circuit and a vibrating body according to the second embodiment, and a second example of the configuration of a driving apparatus of the vibration actuator using the equivalent circuit model.

[Fig. 30B] Fig. 30B is a diagram illustrating the equivalent circuit model of the driving circuit and the vibrating body according to the second embodiment, and the second example of the configuration of the driving apparatus of the vibration actuator using the equivalent circuit model.

[Fig. 31A] Fig. 31A is a chart illustrating a correction coefficient for determining speed from a second vibration component S according to the second embodiment.

[Fig. 31B] Fig. 31B is a chart illustrating a correction coefficient for determining the speed from the second vibration component S according to the second embodiment.

[Fig. 32] Fig. 32 is a diagram illustrating a third example of the configuration of the driving apparatus of the vibration actuator according to the second embodiment.

[Fig. 33] Fig. 33 is a flowchart illustrating an operation for controlling speed, performed by a CPU 34 according to the second embodiment.

[Fig. 34A] Fig. 34A is a chart illustrating a reference speed according to the second embodiment.

[Fig. 34B] Fig. 34B is a chart illustrating the ratio (β) of a change in torque to a change in speed according to the second embodiment.

[Fig. 35] Fig. 35 is a diagram illustrating an example of a schematic configuration of a vibration actuator according to a third embodiment.

[Fig. 36] Fig. 36 is a diagram illustrating a configuration example of a driving apparatus of the vibration actuator according to the third embodiment.

[Fig. 37A] Fig. 37A is a diagram illustrating a schematic configuration of a vibration actuator according to a fourth embodiment.

[Fig. 37B] Fig. 37B is a diagram illustrating an electrical connection of piezoelectric body electrodes in the vibration actuator according to the fourth embodiment.

[Fig. 37C] Fig. 37C is a diagram illustrating a first example of a positional relationship of a protrusion structure of a vibrating body and piezoelectric bodies in the vibration actuator according to the fourth embodiment.

[Fig. 38A] Fig. 38A is a diagram illustrating a first example of a configuration of a driving apparatus of the vibration actuator according to the fourth embodiment.

[Fig. 38B] Fig. 38B is a diagram illustrating a second example of the configuration of the driving apparatus of the vibration actuator according to the fourth embodiment.

[Fig. 39A] Fig. 39A is a diagram illustrating a second example of the positional relationship of the protrusion structure disposed on the vibrating body and the piezoelectric bodies in the vibration actuator according to the fourth embodiment.

[Fig. 39B] Fig. 39B is a diagram illustrating a third example of the positional relationship of the protrusion structure disposed on the vibrating body and the piezoelectric bodies in the vibration actuator according to the fourth embodiment.

[Fig. 40] Fig. 40 is a diagram illustrating a third example of the configuration of the driving apparatus of the vibration actuator according to the fourth embodiment.

[Fig. 41A] Fig. 41A is a chart illustrating a reference speed according to the fourth embodiment.

[Fig. 41B] Fig. 41B is a chart illustrating the ratio (β) of a change in torque to a change in speed according to the fourth embodiment.

[Fig. 42A] Fig. 42A is a diagram illustrating a first example of a configuration of a driving apparatus of a vibration actuator according to a fifth embodiment.

[Fig. 42B] Fig. 42B is a diagram illustrating a second example of the configuration of the driving apparatus of the vibration actuator according to the fifth embodiment.

[Fig. 43A] Fig. 43A is a diagram illustrating an example of a schematic configuration of a vibration actuator according to a sixth embodiment.

[Fig. 43B] Fig. 43B is a diagram illustrating the example of the schematic configuration of the vibration actuator according to the sixth embodiment.

[Fig. 43C] Fig. 43C is a diagram illustrating the example of the schematic configuration of the vibration actuator according to the sixth embodiment.

[Fig. 44A] Fig. 44A is a diagram illustrating a vibration mode of the vibration actuator according to the sixth embodiment.

[Fig. 44B] Fig. 44B is a diagram illustrating the vibration mode of the vibration actuator according to the sixth embodiment.

[Fig. 44C] Fig. 44C is a diagram illustrating the vibration mode of the vibration actuator according to the sixth embodiment.

[Fig. 45A] Fig. 45A is a diagram illustrating a first example of a configuration of a driving apparatus of the vibration actuator according to the sixth embodiment.

[Fig. 45B] Fig. 45B is a diagram illustrating a second example of the configuration of the driving apparatus of the vibration actuator according to the sixth embodiment.

Description of Embodiments

A vibration driving apparatus for carrying out the present invention includes the following.

First, the vibration driving apparatus includes a vibration actuator including a vibrating body and a contact body configured to contact an elastic body, the vibrating body including the elastic body and an electromechanical energy conversion element, and a control apparatus of the vibration actuator.

In the vibration driving apparatus, the vibrating body and the contact body move relatively in a predetermined moving direction due to vibration of the vibrating body.

The foregoing vibration includes a first vibration component generated in the vibrating body by a voltage applied to the electromechanical energy conversion element, and a second vibration component occurring on the vibrating body due to contact of the contact body and the elastic body. The control apparatus is then configured to detect a signal corresponding to the second vibration component, and detect a relative speed between the vibrating body and the contact body based on the signal.

A detailed description will now be given with reference to the drawings.

[First Embodiment]

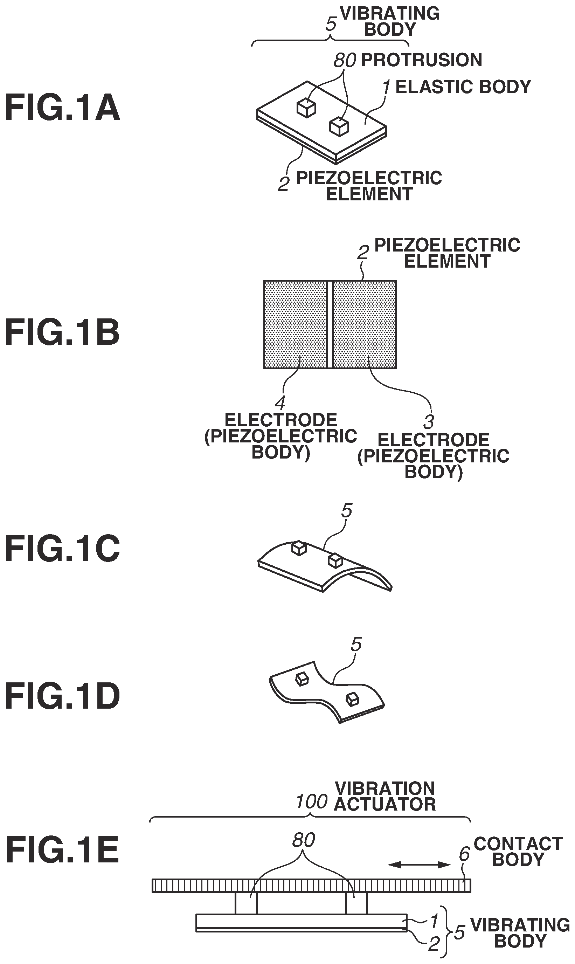

Figs. 1A to 1E are diagrams illustrating an example of a schematic configuration and vibration forms of a vibration actuator 100 according to a first embodiment of the present invention. The schematic configuration and operation principle of the vibration actuator 100 according to the first embodiment will be described with reference to Figs. 1A to 1E.

As illustrated in Fig. 1E, the vibration actuator 100 according to the first embodiment includes a vibrating body 5 and a contact body 6. As illustrated in Figs. 1A and 1E, the vibrating body 5 includes a piezoelectric element 2 and an elastic body 1 having two protrusions 80 to contact the contact body 6. The piezoelectric element 2 is a component that constitutes a part of the vibrating body 5 and is intended to excite the vibrating body 5.

The piezoelectric element 2 is composed of a piezoelectric material and electrodes. As illustrated in Fig. 1B, an electrode 3 and an electrode 4 configured so that voltages can be applied independently of each other are formed on the surface of a polarized piezoelectric material. Piezoelectric ceramics can be used as the piezoelectric material.

The two electrodes are configured as electrodes electrically insulated from each other, and two alternating-current voltages of which phases can be independently changed are applied thereto. The entire back surface of the piezoelectric element 2 is configured as an electrode, and a ground potential can be connected thereto from the surface of the piezoelectric element 2 through a not-illustrated via formed in part of the piezoelectric element 2. This piezoelectric material is a single piece of piezoelectric material. However, for the purpose of description of the electric circuit, the electrode 3, the ground potential electrode, and the portion of the piezoelectric material sandwiched therebetween may be referred to as a piezoelectric body 3. The designation of a piezoelectric body 4 is likewise.

The contact body 6 illustrated in Fig. 1E is a slider that is pressed into contact with the protrusions 80 of the vibrating body 5 at a constant pressing force by a not-illustrated pressing mechanism. This contact body 6 (slider) is configured to move relatively in a direction indicated by the arrow in the diagram due to vibration excited in the vibrating body 5.

Figs. 1C and 1D are diagrams illustrating an example of vibration modes of the vibrating body 5. Fig. 1C illustrates a vibration form in a vibration mode (thrust vibration mode) excited in the vibrating body 5 when in-phase alternating-current voltages of the same amplitude are applied to the piezoelectric bodies 3 and 4. The thrust vibration mode is one of the natural vibration modes of the vibrating body 5. The direction of the natural vibration at the contact surface of the vibrating body 5 with the contact body 6 is substantially perpendicular to the contact surface. The degree of matching in amplitude and phase may be determined by the user based on the desired quality of the vibration wave.

Meanwhile, Fig. 1D illustrates a vibration form in a vibration mode (feed vibration mode) excited in the vibrating body 5 when anti-phase alternating-current voltages of the same amplitude are applied to the piezoelectric bodies 3 and 4.

The feed vibration mode is one of the natural vibration modes of the vibrating body 5. The direction of the natural vibration at the contact surface of the vibrating body 5 with the contact body 6 is substantially horizontal relative to the contact surface and is substantially aligned with the moving direction.

For example, with a phase difference between the alternating-current voltages applied to the piezoelectric bodies 3 and 4 set to 0°, vibration in the vibration mode illustrated in Fig. 1C (thrust vibration mode) is excited. With the phase difference between the alternating-current voltages applied to the piezoelectric bodies 3 and 4 set to 180°, vibration in the vibration mode illustrated in Fig. 1D (feed vibration mode) is excited.

Moreover, with the phase difference between the alternating-current voltages applied to the piezoelectric bodies 3 and 4 set to other than 0° or 180° (in fact, the range of 0° ± 120° or so is used), both the vibration modes illustrated in Figs. 1C and 1D are simultaneously excited. In such a case, the contact body 6 (slider) pressed into contact with the protrusions 80 disposed on the vibrating body 5 moves in the longitudinal direction of the rectangular shape of the vibrating body 5. As the phase difference deviates from 0°, the amplitude of the vibration mode illustrated in Fig. 1D (feed vibration mode) increases and the relative speed between the contact body 6 (slider) and the vibrating body 5 increases.

Forces that the vibrating body 5 receives include a piezoelectric vibration force that is generated by the application of the alternating-current voltages to the piezoelectric bodies 3 and 4 and vibrates the vibrating body 5, a reaction force that the vibrating body 5 receives from a support member, and a reaction force that the vibrating body 5 receives from the contact body 6 (slider). Of these, the vibration corresponding to the force (piezoelectric excitation force) generated by the application of the alternating-current voltages to the piezoelectric bodies 3 and 4 constituting the vibrating body 5 will be referred to as a first vibration component. The vibration occurring on the vibrating body 5 due to the reaction force received from the contact body 6 (slider) will be referred to as a second vibration component.

Furthermore, a vibration component resulting from the piezoelectric excitation force generated by the piezoelectric body 3 alone will be classified as a third vibration component, and a vibration component resulting from the piezoelectric excitation force generated by the piezoelectric body 4 alone as a fourth vibration component.

Hereinafter, the sum or difference of the third vibration component caused by a first driving voltage and the fourth vibration component caused by a second driving voltage may be described. In such a case, a driving vibration occurring in a first direction based on one of the sum and difference and a driving vibration occurring in a second direction based on the other may be described. As employed therein, the direction of a driving vibration refers to the direction in which the vibrating body vibrates at the contact surface between the vibrating body and the contact body in the presence of the driving vibration. The direction when expressed as a direction of natural vibration or the direction of a vibration component in the same direction is also understood in an identical manner.

A "contact body" refers to a member that contacts the vibrating body and moves relative to the vibrating body due to vibration occurring on the vibrating body. The contact of the contact body and the vibrating body is not limited to direct contact with no other member interposed between the contact body and the vibrating body. The contact of the contact body and the vibrating body may be indirect contact with another member interposed between the contact body and the vibrating body as long as the contact body moves relative to the vibrating body due to vibration occurring on the vibrating body. "Another member" is not limited to a member independent of the contact body and the vibrating body (such as a high friction member made of a sintered body). "Another member" may be a surface-treated portion formed on the contact body or the vibrating body by plating, nitriding, or the like.

The "vibrating body" refers to a member that includes an elastic body and an electromechanical energy conversion element, and vibrates due to the application of an alternating-current voltage to the electromechanical energy conversion element. The elastic body is mainly made of metal or ceramics. The electromechanical energy conversion element may also serve as an elastic body.

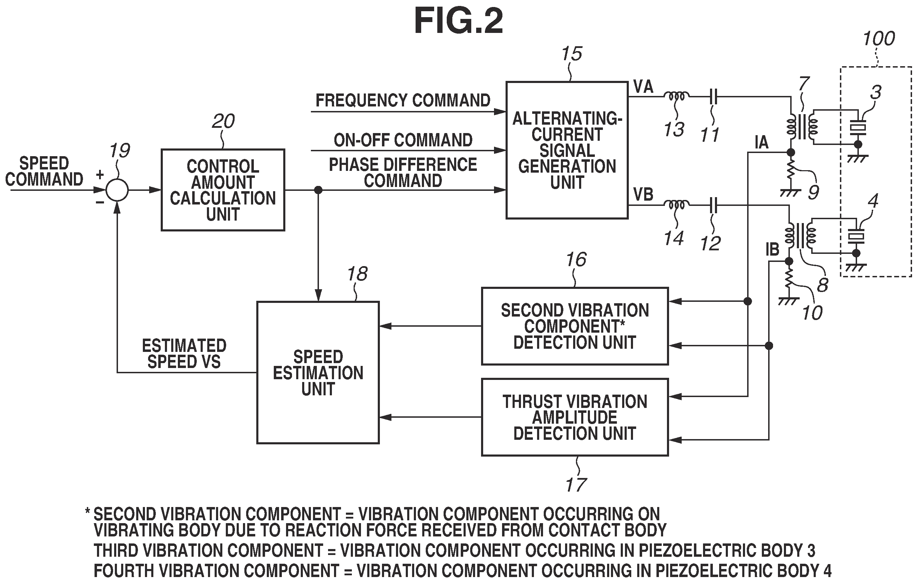

Fig. 2 is a diagram illustrating a first configuration example of a driving apparatus of the vibration actuator 100 according to the first embodiment of the present invention. Fig. 2 includes the vibration actuator 100, a generation unit of the alternating-current voltages to be applied to the vibration actuator 100, and a speed estimation unit and speed control-related portion of the vibration actuator 100. First, the alternating-current voltage generation unit will be described. An alternating-current signal generation unit 15 generates a two-phase alternating-current signal VA (first signal) and alternating-current signal VB (second signal) based on a frequency command and an ON-OFF command from a not-illustrated command unit as well as a phase difference command output from a control amount calculation unit 20 to be described below. The alternating-current signals VA and VB are connected to the primary windings of transformers 7 and 8 via series resonant circuits composed of inductors 13 and 14 and capacitors 11 and 12, respectively. In this example, the transformers 7 and 8 are described to be connected via the series resonant circuits to implement waveform shaping and reduce changes in the amplitudes of the voltages to the piezoelectric bodies 3 and 4. However, only the inductors or the capacitors may be connected, or the series resonant circuits may be omitted. The voltages input to the primary windings of the transformers 7 and 8 are boosted and applied to the piezoelectric bodies 3 and 4 constituting the vibrating body 5 of the vibration actuator 100 connected to the secondary windings as the first and second driving voltages. The piezoelectric bodies 3 and 4, while described above as such for the sake of description of the electric circuit, are part of the integral piezoelectric element 2.

The inductances of the secondary windings of the transformers 7 and 8 are frequency-matched with the damping capacitances of the piezoelectric bodies 3 and 4. Currents substantially proportional to the vibration speed of strain occurring in the piezoelectric bodies 3 and 4 thus flow through the primary windings of the transformers 7 and 8.

Resistors 9 and 10 for current detection are connected in series to the primary windings of the transformers 7 and 8, whereby the currents flowing through the primary windings of the transformers are detected to generate a current signal IA that is a first detection signal and a current signal IB that is a second detection signal. A relationship between the current signals IA and IB and the vibration of the vibrating body 5 will be described separately.

Next, a configuration related to the speed estimation unit will be described. A second vibration component detection unit 16 and a thrust vibration amplitude detection unit 17 input the current signals IA and IB, and detect a second vibration component and a component corresponding to a thrust vibration amplitude.

If the waveforms of the current signals IA and IB contain a large amount of harmonics, the harmonic components may be sufficiently attenuated using low-pass filters or band-pass filters before the current signals IA and IB are input to the second vibration component detection unit 16 and the thrust vibration amplitude detection unit 17.

As described above, the second vibration component is the vibration component corresponding to the vibration caused by the force that the vibrating body 5 receives from the contact body 6 (slider).

The detected second vibration component and the component corresponding to the vibration amplitude in the direction in which the vibrating body 5 thrusts up the contact body 6 (slider) are input to a speed estimation unit 18, and speed is estimated based on the value of a phase difference command signal that is input simultaneously. Details of the speed estimation method and the vibration detection will be described separately.

Next, operation of the speed control unit will be described. First, a comparison unit 19 compares an estimated speed VS from the speed estimation unit 18 with a speed command from the not-illustrated command unit. The comparison result of the comparison unit 19 is then subjected to proportional-integral calculation in the control amount calculation unit 20, whereby a phase difference command signal is generated. A phase difference between the alternating-current signals VA and VB is then set, and speed is controlled based on the magnitude of the amplitude of feed-direction vibration excited on the vibrating body 5.

A relationship between the current signal IA, the current signal IB, and the vibration of the vibrating body 5 will now be described. As described above, the piezoelectric bodies 3 and 4 correspond to the electrodes 3 and 4 disposed on the piezoelectric element 2 constituting the vibrating body 5. The piezoelectric excitation force for vibrating the vibrating body 5 is generated by applying alternating-current signals to the respective electrodes. The vibration of the vibrating body caused by the piezoelectric excitation force generates strain in the piezoelectric bodies.

An average of the strain distributed in a piezoelectric body is considered to be proportional to the vibration displacement of the section to which the piezoelectric body is adhesively bonded. Since a charge proportional to the strain occurs in the piezoelectric body through the piezoelectric effect, the current signal IA, which is the time derivative of the occurring charge, is a signal corresponding to the average vibration speed of the portion where the section of the elastic body 1 to which the electrode 3 is adhesively bonded is projected (i.e., the piezoelectric body 3).

Similarly, the current signal IB is a signal corresponding to the vibration speed of the portion of the elastic body 1 where the section to which the electrode 4 is adhesively bonded is projected (i.e., the piezoelectric body 4).

The current signal IA mainly contains a vibration component in the same direction as that of the third vibration component. The current signal IB mainly contains a vibration component in the same direction as that of the fourth vibration component. The third vibration component is the vibration component resulting from the piezoelectric excitation force generated by the piezoelectric body 3 alone. The fourth vibration component is the vibration component resulting from the piezoelectric excitation force generated by the piezoelectric body 4 alone.

The second vibration component detection unit 16 detects the second vibration component using the two detected signals, i.e., the current signals IA and IB.

Next, the detection of the thrust vibration amplitude by the thrust vibration amplitude detection unit 17 will be described. Thrust vibration corresponds to a component in a direction perpendicular to the flat plate of the flat plate-shaped vibrating body 5.

An example of the vibration mode of thrust vibration is the vibration mode illustrated in Fig. 1C, which occurs when amplitudes of the alternating-current signals VA and VB applied to the piezoelectric bodies 3 and 4 are equal and a phase difference is 0°, for example. The amplitude of the vibration speed of the thrust vibration is thus substantially proportional to the amplitude of a sum signal of the current signals IA and IB.

Further, when the vibration displacement is equal, the amplitude of the vibration speed increases or decreases in proportion to the vibration frequency. Since the alternating-current signals VA and VB do not change significantly in frequency, the amplitude of the vibration speed may be considered to be substantially proportional to the vibration amplitude. In the following description, the current signal IA will thus be handled as a signal corresponding to the displacement of the piezoelectric body 3, and the current signal IB as a signal corresponding to the displacement of the piezoelectric body 4. The amplitude of the sum signal of the current signals IA and IB will be described as a thrust vibration amplitude.

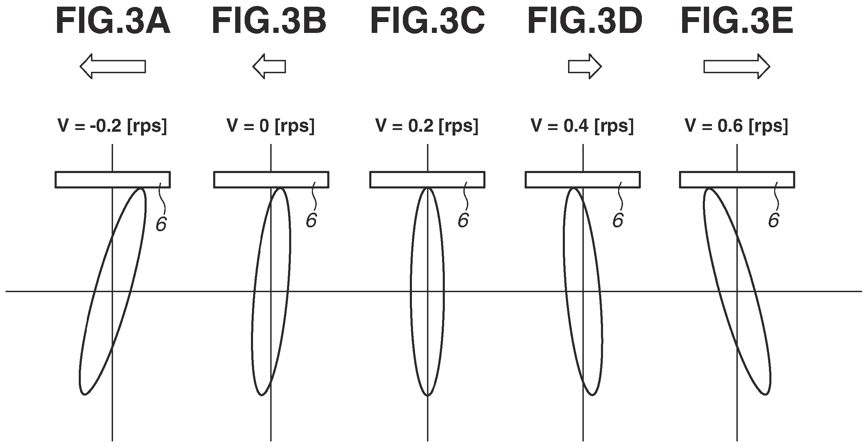

The principle of the speed estimation will now be described. Fig. 3 is a diagram schematically illustrating a relationship between an elliptical vibration locus at the end of a protrusion 80 of the elastic body 1 and the relative force and relative speed acting between the vibrating body 5 and the contact body 6 (slider) via the protrusion 80. All vibration loci in Fig. 3 are ones at the end of the protrusion 80 when the amplitudes of the alternating-current signals VA and VB are equal and a phase difference is 45°. Figs. 3(a) to 3(e) illustrate the vibration loci when the speed between the vibrating body 5 and the contact body 6 (slider) is changed from -0.2 [rps] to 0.6 [rps] using a force externally applied to the contact body 6 (slider). The directions of the arrows in Fig. 3 indicate the direction of the force acting on the contact body 6, and the lengths of the arrows indicate the magnitude of the force. The state of Fig. 3(c) without an arrow is a state where the force externally acting on the contact body 6 is 0 [N] and the contact body 6 moves at +0.2 [rps] relative to the vibrating body 5. The vibrating body 5 and the contact body 6 contact intermittently in the contact area at the end of the protrusion 80, and the relative speed (speed difference) between the vibrating body 5 and the contact body 6 changes even during the contact time. Depending on a difference in relative speed (speed difference) and the contact pressure at the contact area, frictional force occurring between the vibrating body 5 and the contact body 6 also changes.

As the force applied to the contact body 6 changes, the distribution of the speed difference between the vibrating body 5 and the contact body 6 in the contact area of the vibrating body 5 and the contact body 6 changes, and the distribution of the frictional force occurring in the contact area changes accordingly. The vibrating body 5 is excited by the frictional force occurring during the intermittent contact with the contact body 6, and the vibration corresponding to the foregoing speed difference is superposed on the vibrating body 5.

As illustrated in Fig. 3, the vibration locus at the end of the protrusion 80 is elliptical in shape. This vibration ellipse is inclined in a direction opposite to the direction of the force acting at the end of the protrusion 80 depending on the magnitude of the force acting on the protrusion 80 from the contact body 6. This phenomenon occurs from the superposition of the vibration caused by the excitation that the vibrating body 5 receives during contact of the protrusion 80 and the contact body 6, upon the vibrating body 5. The present invention estimates the relative speed between the vibrating body 5 and the contact body 6 by detecting this superposed vibration component (second vibration component).

The characteristic of Fig. 3 is that for the case of driving under a condition where the frequencies of the alternating-current signals VA and B are higher than the natural frequency of the vibration mode of the vibrating body 5. The characteristic under a condition where the frequencies of the alternating-current signals VA and VB are lower than the natural frequency of the vibration mode of the vibrating body 5 differs from the foregoing characteristic, but the principle of speed detection through the detection of the second vibration component that changes with speed does not change.

Since the characteristic of Fig. 3 varies with factors such as the relationship between the natural frequency of the vibration mode of the vibrating body 5 and the frequencies of the alternating-current signals VA and VB, as well the phase difference between the alternating-current signals VA and VB and the like, the detection of the second vibration component and the speed estimation need to be performed depending on the driving condition.

The following description deals with an example of the case of driving under the condition that the frequencies of the alternating-current signals VA and VB are higher than the natural frequency of the vibration mode of the vibrating body 5.

Details of the operation of the second vibration component detection unit 16, which detects the second vibration component that is the vibration occurring on the vibrating body 5 due to excitation from the contact body 6 (slider), will now be described.

There are various methods for detecting the second vibration component. The detection of the inclination of the vibration ellipse as illustrated in Fig. 3 is one of the methods. As described above, the inclination of the vibration ellipse is highly correlated with the relative speed between the vibrating body 5 and the contact body 6 (slider), and detecting such a value constitutes detection of a signal corresponding to the second vibration component.

A first example of detection of the second vibration component according to the first embodiment will now be described.

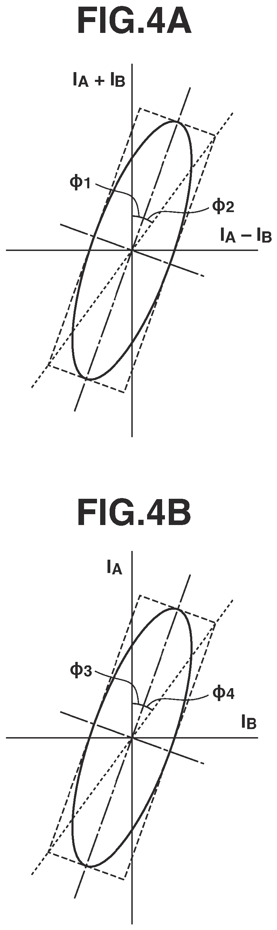

Figs. 4A and 4B are diagrams illustrating Lissajous waveforms (vibration ellipses) for describing the first example of the detection of the second vibration component according to the first embodiment. Fig. 4A illustrates a Lissajous waveform drawn with (current signal IA + current signal IB) on the vertical axis and (current signal IA - current signal IB) on the horizontal axis. (Current signal IA + current signal IB) represents the vibration waveform in the vibration mode of Fig. 1C (thrust vibration mode), and (Current signal IA - current signal IB) in the vibration mode of Fig. 1D (feed vibration mode). Here, the current signal IA is given by Eq. 1, and the current signal IB is given by Eq. 2.

[Exp. 1]

$$I_A = \rho sin(\omega t + \delta_1) \qquad \text{Eq. 1}$$

[Exp. 2]

$$I_B = \sigma sin(\omega t + \delta_2) \qquad \text{Eq. 2}$$

An inclination angle φ1 of the vibration ellipse is given by Eq. 3.

[Exp. 3]

$$\varphi_1 = \frac{1}{2} tan^{-1} \left( \frac{\sigma^2 - \rho^2}{2\rho\sigma cos(\delta_1 - \delta_2)} \right) \qquad \text{Eq. 3}$$

The second vibration component detection unit 16 determines the second vibration component (inclination angle of the vibration ellipse) by detecting an amplitude ρ of the current signal IA, an amplitude σ of the current signal IB, and the phase difference (δ1 - δ2) between the current signals IA and IB, and substituting the amplitudes and phase difference into Eq. 3.

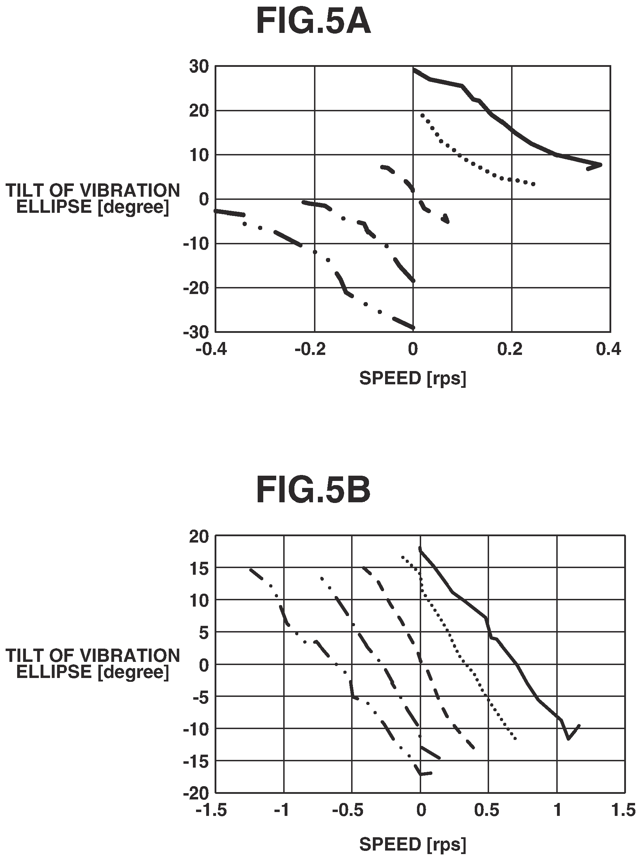

Figs. 5A and 5B are charts illustrating a relationship of the inclination of the Lissajous waveform (vibration ellipse) to the speed. Fig. 5A illustrates an example of a case where the thrust vibration amplitude is small, and Fig. 5B an example of a case where the thrust vibration amplitude is relatively large. The line types in Figs. 5A and 5B indicate variations in the phase difference between the alternating-current signals VA and VB: a solid line (90°), a dotted line (45°), a broken line (0°), a dot-dashed line (-45°), and a double-dot-dashed line (-90°).

The relationship between the relative speed between the contact body 6 and the protrusion 80 and the inclination angle of the vibration ellipse is substantially linear. With the offset and gradient of each line in the graph determined in advance with respect to each thrust vibration amplitude and phase difference between the alternating-current signals VA and VB, the speed can be estimated through inverse calculation from the inclination angle of the vibration ellipse. The greater the thrust vibration amplitude, the higher the sensitivity to the phase difference between the alternating-current signals VA and VB is and the higher the estimation accuracy of the speed can be made.

In the foregoing description, a change in the inclination angle φ1 of the Lissajous waveform (vibration ellipse) is described to be highly correlated with the speed. However, the Lissajous waveform (vibration ellipse) varies not only in inclination angle but also in width (minor axis) with a change in speed. Then, the sum of the inclination angle φ1 of the vibration ellipse and an angle φ2 formed between the diagonal of the circumscribed rectangle of the vibration ellipse illustrated in Fig. 4A and the centerline of the vibration ellipse at a predetermined ratio may be used as the second vibration component.

Alternatively, Eq. 4 derived by extracting only a value-changing portion of Eq. 3 may be used as a second vibration component S. A result of substitution of Eq. 4 into a given function may be used as the second vibration component S.
[Exp. 4]

$$S = \frac{\sigma^2 - \rho^2}{2\rho\sigma cos(\delta_1 - \delta_2)} \qquad \text{Eq. 4}$$

In the foregoing example, the vertical axis of the Lissajous waveform (vibration ellipse) is (current signal IA + current signal IB), and the horizontal axis is (current signal IA - current signal IB). However, the inclination of the vibration ellipse may be determined with the current signal IA on the vertical axis and the current signal IB on the horizontal axis. Fig. 4B illustrates a Lissajous waveform (vibration ellipse) drawn with the current signal IA on the vertical axis and the current signal IB on the horizontal axis.

In such a case, an inclination angle φ3 of the vibration ellipse is given by Eq. 5, and the angle φ3 can be used as the second vibration component.
[Exp. 5]

$$\varphi_3 = \frac{1}{2} tan^{-1} \left( \frac{2\rho\sigma cos(\delta_1 - \delta_2)}{\sigma^2 - \rho^2} \right) \qquad \text{Eq. 5}$$

Alternatively, an angle φ4 may be determined as in the foregoing example, and the sum of the inclination angle φ3 and the angle φ4 at a predetermined ratio may be used as the second vibration component. Eq. 6 derived by extracting only a value-changing portion of Eq. 5 may be used as the second vibration component S. A result of substitution of Eq. 6 into a given function may be used as the second vibration component S.
[Exp. 6]

$$S = \frac{2\rho\sigma cos(\delta_1 - \delta_2)}{\sigma^2 - \rho^2} \qquad \text{Eq. 6}$$

Next, a second example of the detection of the second vibration component according to the first embodiment will be described.

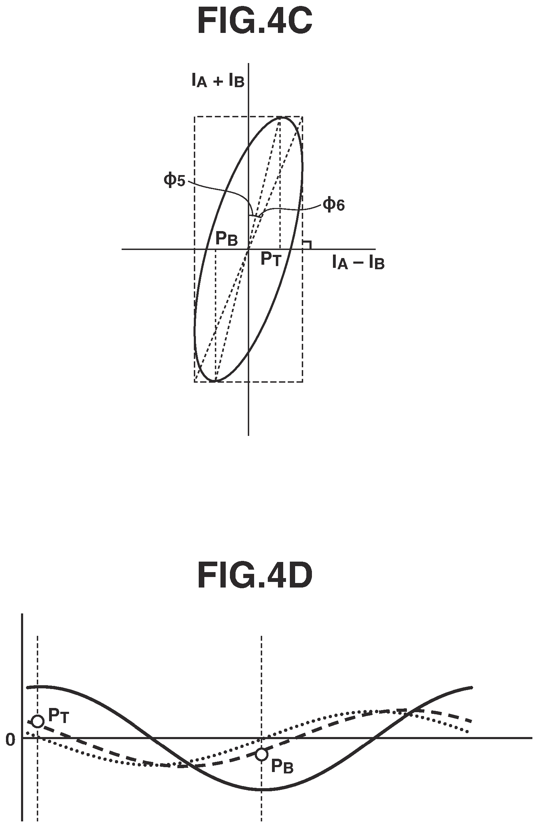

In the first example of the detection of the second vibration component according to the first embodiment, the inclination angle of the vibration ellipse is determined using Eq. 3. However, the inclination angle may be determined using other parameters of the vibration ellipse that vary with the inclination angle of the vibration ellipse. Figs. 4C and 4D are diagrams for describing the second example of the detection of the second vibration component according to the first embodiment. Fig. 4C is a diagram for describing an example where the second vibration component is detected using an

angle $\varphi 5$ that varies with the inclination angle of the vibration ellipse.

The first example of the detection of the second vibration component according to the first embodiment uses the inclination of the axis of the vibration ellipse. Determining this, however, requires complex calculations as in Eq. 3. In this example, the angle $\varphi 5$ to be detected can be directly detected from the sum signal and difference signal of the current signals IA and IB. The angle $\varphi 5$ is the angle between a line connecting the positive and negative peaks of (current signal IA + current signal IB) and the vertical axis. Fig. 4D is a diagram illustrating time-axis waveforms for describing the detection method of the angle $\varphi 5$. The solid line in Fig. 4D represents (current signal IA + current signal IB), the dotted line represents the derivative waveform of the solid-lined waveform, and the broken line represents the waveform of (current signal IA - current signal IB). The angle $\varphi 5$ is determined by sampling the broken-lined waveform at timing of the peaks (maximum and minimum) of (current signal IA + current signal IB) to detect values PT and PB, and using Eq. 7. The timing to detect PT and PB may be the zero-cross timing of the derivative waveform of (current signal IA + current signal IB).

[Exp. 7]

$$\varphi_5 = tan^{-1}\left(\frac{amplitude\ of\ (I_A + I_B) \times 2}{P_T - P_B}\right) \quad \text{Eq. 7}$$

The second vibration component detection unit 16 determines the second vibration component (angle $\varphi 5$) as described above.

Eq. 8 or Eq. 9 may be used as the second vibration component S.

[Exp. 8]

$$S = \frac{P_T - P_B}{amplitude\ of\ (I_A + I_B)} \quad \text{Eq. 8}$$

[Exp. 9]

$$S = P_T - P_B \quad \text{Eq. 9}$$

As in the first example of the detection of the second vibration component according to the first embodiment, the vibration ellipse varies not only in inclination angle but also in width (minor axis) with a change in speed. The sum of an angle $\varphi 6$ formed between the diagonal of the circumscribed rectangle of the vibration ellipse illustrated in Fig. 4C and the line representing the angle $\varphi 5$ and the angle $\varphi 5$ at a predetermined ratio may thus be used as the second vibration component S.

Aside from the inclination angle, minor axis, and the like used in the foregoing description, parameters expressing the Lissajous waveform (vibration ellipse) can be defined in various ways, including major axis, height, and width. Other parameters may therefore be used to detect the second vibration component S as long as the parameters vary with the inclination angle of the Lissajous waveform (vibration ellipse).

Next, a third example of the detection of the second vibration component according to the first embodiment will be described.

In the first and second examples of the detection of the second vibration component according to the first embodiment, the second vibration component is extracted from the shape of the vibration ellipse. In this example, the second vibration component is determined from the current amplitudes. The second vibration component detection unit 16 of this example inputs the current signals IA and IB, determines the amplitude of the current signal IA and the amplitude of the current signal IB, calculates (amplitude of current signal IA - amplitude of current signal IB), and outputs the calculation as the second vibration component S.

Alternatively, the quotient of (amplitude of current signal IA - amplitude of current signal IB) divided by (amplitude of current signal IA + amplitude of current signal IB) may be used as the second vibration component S.

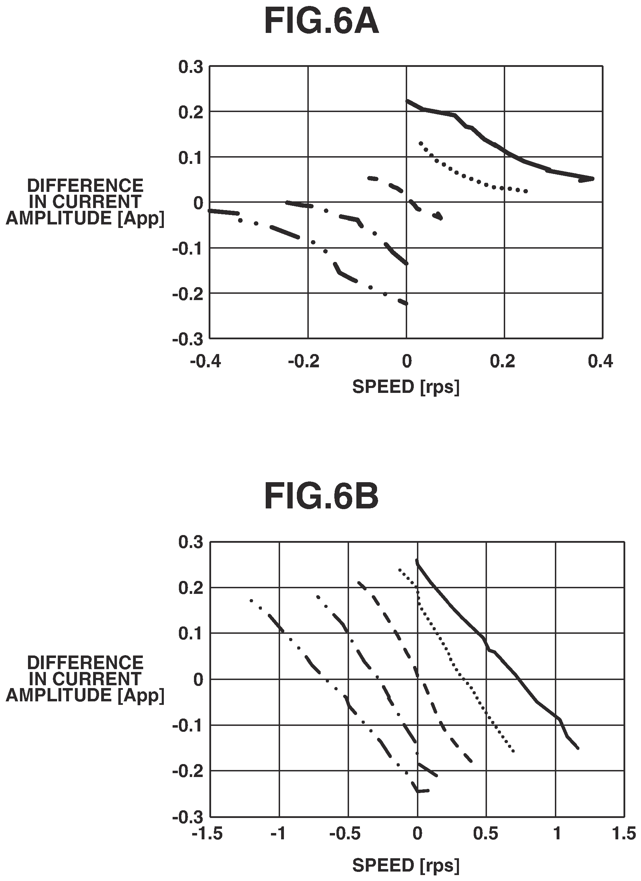

Figs. 6A and 6B are charts illustrating the relationship with speed when (amplitude of current signal IA - amplitude of current signal IB) is assumed as the second vibration component S. Fig. 6A illustrates an example of a case where the thrust vibration amplitude is small, and Fig. 6B an example of a case where the thrust vibration amplitude is relatively large. The line types in Figs. 6A and 6B indicate variations in the phase difference between the alternating-current signals VA and VB: a solid line (90°), a dotted line (45°), a broken line (0°), a dot-dashed line (-45°), and a double-dot-dashed line (-90°).

When the characteristics of Figs. 6A and 6B are compared with those of Figs. 5A and 5B, it is found that the inclination of the vibration ellipse and (amplitude of current signal IA - amplitude of current signal IB) exhibit very similar characteristics.

As in the first example of the second vibration component according to the first embodiment, the relationship between the relative speed between the contact body 6 and the protrusion 80 and (amplitude of current signal IA - amplitude of current signal IB) is linear. With the offset and gradient of each line in the graph determined in advance with respect to each thrust vibration amplitude and phase difference between the alternating-current signals VA and VB, the speed can thus be easily estimated from (amplitude of current signal IA - amplitude of current signal IB).

Next, a fourth example of the detection of the second vibration component according to the first embodiment will be described.

This example is an example of detection where the current signals are represented as vectors.

Specifically, a vector based on the amplitude and phase of the first detection signal is assumed as a first signal vector, and a vector based on the amplitude and phase of the second detection signal as a second signal vector. Moreover, one of the sum and difference of the first and second signal vectors may be referred to as a first vibration vector, and the other as a second vibration vector. A vector component in the same direction as that of the first vibration vector may be referred to as a same-direction component, and a vector component in the normal direction to the first vibration vector as a normal-direction component. The second vibration component may be calculated from a ratio based on a difference between the respective same-direction components of the first and second signal vectors and a difference between the respective normal-direction components of the first and second signal vectors.

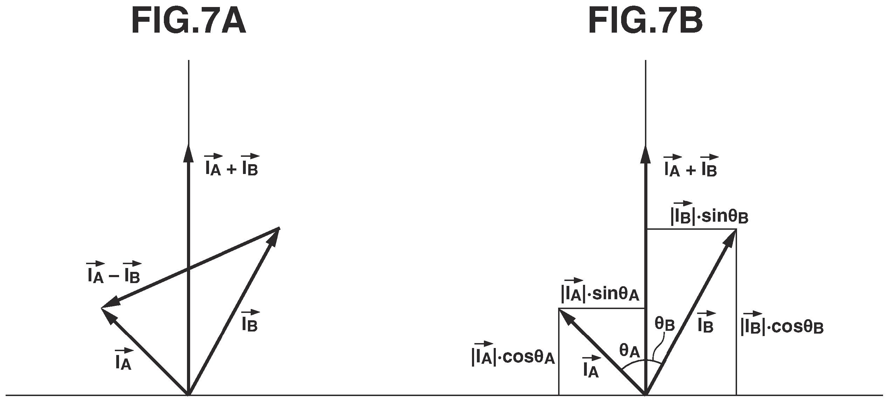

Fig. 7 is a vector diagram of the current signals. Fig. 7(a) is a diagram illustrating the sum and difference signals of the current signals IA and IB as vectors. Using the vectors, the second vibration component S described in the third example of the second vibration component according to the first embodiment can be expressed as Eqs. 10 and 11.

[Exp. 10]

$$ S = \left| \vec{I_A} \right| - \left| \vec{I_B} \right| \qquad \text{Eq. 10} $$

[Exp. 11]

$$ S = \frac{\left| \vec{I_A} \right| - \left| \vec{I_B} \right|}{\left| \vec{I_A} + \vec{I_B} \right|} \qquad \text{Eq. 11} $$

Fig. 7(b) is a vector diagram illustrating the current signal IA and the current signal IB. With the current signal IA as a first signal vector and the current signal IB as a second signal vector, this diagram illustrates each of the two vectors as resolved into two **orthogonal** vibration components. The two orthogonal vibration components are a same-direction vibration component and a normal-direction vibration component relative to (first signal vector + second signal vector), which is a thrust vibration component (first vibration vector). A difference between the respective same-direction components of the first and second signal vectors relative to the thrust vibration component (first vibration vector) is highly correlated with the inclination of the vibration ellipse. As in Eq. 12, the respective same-direction components of the first and second signal vectors relative to the thrust vibration component (first vibration vector) are then determined, and the difference therebetween can be assumed as the second vibration component S. As in Eq. 13, the quotient of the value of Eq. 12 divided by the magnitude of the thrust vibration component (first vibration vector) may be used as the second vibration component S.

[Exp. 12]

$$ S = \left| \vec{I_A} \right| \cdot cos\theta_A - \left| \vec{I_B} \right| \cdot \cos \theta_B \qquad \text{Eq. 12} $$

[Exp. 13]

$$ S = \frac{\left| \vec{I_A} \right| \cdot cos\theta_A - \left| \vec{I_B} \right| \cdot \cos \theta_B}{\left| \vec{I_A} + \vec{I_B} \right|} \qquad \text{Eq. 13} $$

Alternatively, the normal-direction components of the first signal vector (current signal IA) and the second signal vector (current signal IB) relative to the thrust vibration component (first vibration vector) may be used. As in Eq. 14, the sum of a difference between the respective same-direction components and a difference between the respective normal-direction components of the first signal vector (current signal IA) and the second signal vector (current signal IB) relative to the thrust vibration component (first vibration vector) at a predetermined ratio (x:y) may be used as the second vibration component S.

Alternatively, as in Eq. 15, the quotient of the value of Eq. 14 divided by the magnitude of the thrust vibration component (first vibration vector) may be used as the second vibration component S.
[Exp. 14]

$$S = x\left(\left|\overrightarrow{I_A}\right| \cdot cos\theta_A - \left|\overrightarrow{I_B}\right| \cdot cos\theta_B\right) + y\left(\left|\overrightarrow{I_A}\right| \cdot sin\theta_A - \left|\overrightarrow{I_B}\right| \cdot sin\theta_B\right) \qquad \text{Eq. 14}$$

[Exp. 15]

$$S = \frac{x\left(\left|\overrightarrow{I_A}\right| \cdot cos\theta_A - \left|\overrightarrow{I_B}\right| \cdot cos\theta_B\right) + y\left(\left|\overrightarrow{I_A}\right| \cdot sin\theta_A - \left|\overrightarrow{I_B}\right| \cdot sin\theta_B\right)}{\left|\overrightarrow{I_A} + \overrightarrow{I_B}\right|} \qquad \text{Eq. 15}$$

Here, the methods for determining the second vibration component S using Eqs. 12 to 15 will be described. Eqs. 12 to 15 involve calculations including trigonometric functions and require detection of phase differences. This complicates the structure of the second vibration component detection unit 16. In view of this, an example of detection using synchronous detection instead of such calculations will be described. A method for detecting the second vibration component S using synchronous detection will now be described.

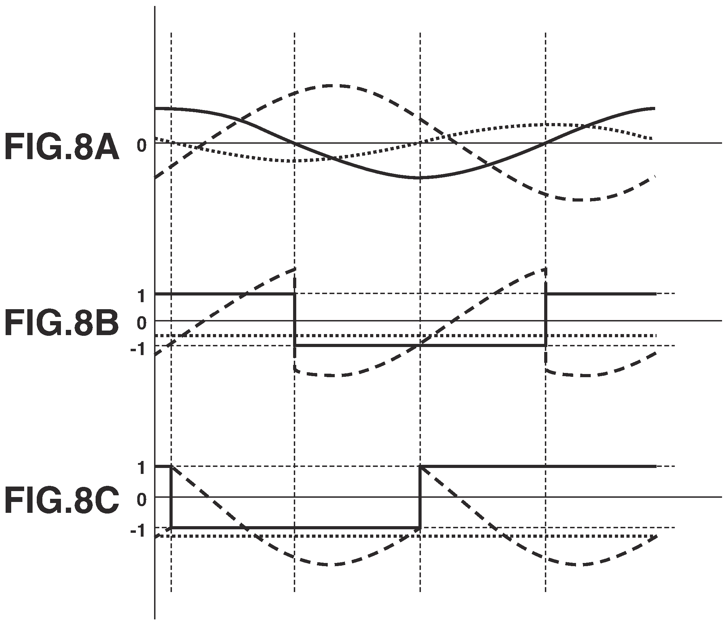

Fig. 8 is a diagram for describing a method for determining the magnitudes of the respective direction components using synchronous detection. Fig. 8(a) illustrates the waveform (solid line) of (current signal IA + current signal IB) serving as a reference, a signal waveform (broken line) to be resolved into components, and the derivative waveform (dotted line) of (current signal IA + current signal IB). Fig. 8(b) illustrates how the component in the same direction as that of the vector of (current signal IA + current signal IB) is detected. Fig. 8(c) illustrates how the component in the normal direction to the vector of (current signal IA + current signal IB) is detected.

The solid line in Fig. 8(b) represents a reference signal that is 1 when the sign of the solid line in Fig. 8(a) is positive, and -1 when negative. The broken line in Fig. 8(b) represents the result of multiplication of the broken-lined signal in Fig. 8(a) by this reference signal. The dotted line in Fig. 8(b) represents an average of the multiplication result, indicating the magnitude of the vibration component in the same direction as that of the vector of (current signal IA + current signal IB).

Next, the solid line in Fig. 8(c) represents a reference signal that is 1 when the sign of the dotted line in Fig. 8(a) is positive, and -1 when negative. The broken line in Fig. 8(c) represents the result of multiplication of the broken-lined signal in Fig. 8(a) by this reference signal. The dotted line in Fig. 8(c) represents an average of the multiplication result, indicating the magnitude of the vibration component in the normal direction to the vector of (current signal IA + current signal IB)

In such a manner, using synchronous detection to eliminate calculations including trigonometric functions facilitates implementation of the second vibration component detection unit 16 with a field-programmable gate array (FPGA) or the like.

Next, a fifth example of the detection of the second vibration component according to the first embodiment will be described.

In the fourth example of the second vibration component according to the first embodiment, the second vibration component is detected by determining the vectors of the respective current signals IA and IB. In the fifth example, the second vibration component S is detected using the vector of (current signal IA - current signal IB).

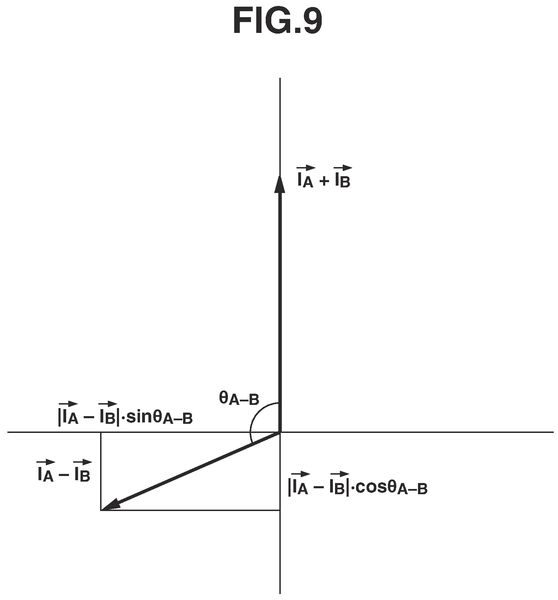

Fig. 9 is a diagram illustrating a relationship between the first vibration vector that is the sum of the first signal vector (current signal IA) and the second signal vector (current signal IB) and the second vibration vector that is the difference of these. As in the fourth example of the second vibration component according to the first embodiment, the same-direction component of the second vibration vector relative to the thrust vibration component (first vibration vector) is highly correlated with the inclination of the vibration ellipse. Values expressed by Eqs. 16 and 17 that determine the second vibration component S using the same-direction component of the second vibration vector relative to the thrust vibration component (first vibration vector) have characteristics similar to those of Figs. 6A and 6B.
[Exp. 16]

$$S = \left|\overrightarrow{I_A} - \overrightarrow{I_B}\right| \cdot cos\theta_{A-B} \qquad \text{Eq. 16}$$

[Exp. 17]

$$S = \frac{\left|\overrightarrow{I_A} - \overrightarrow{I_B}\right| \cdot cos\theta_{A-B}}{\left|\overrightarrow{I_A} + \overrightarrow{I_B}\right|} \qquad \text{Eq. 17}$$

Alternatively, the normal-direction component of the second vibration vector relative to the thrust vibration component (first vibration vector) may be used. As in Eqs. 18 and 19, the second vibration component S may be determined by adding the same-direction component and normal-direction component of the second vibration vector relative to the thrust vibration component (first vibration vector) at a predetermined ratio (x:y).

[Exp. 18]

$$S = x\left(\left|\vec{I_A} - \vec{I_B}\right| \cdot cos\theta_{A-B}\right) + y\left(\left|\vec{I_A} - \vec{I_B}\right| \cdot sin\theta_{A-B}\right) \qquad \text{Eq. 18}$$

[Exp. 19]

$$S = \frac{x\left(\left|\vec{I_A} - \vec{I_B}\right| \cdot cos\theta_{A-B}\right) + y\left(\left|\vec{I_A} - \vec{I_B}\right| \cdot sin\theta_{A-B}\right)}{\left|\vec{I_A} + \vec{I_B}\right|} \qquad \text{Eq. 19}$$

Note that like the fourth example of the second vibration component according to the first embodiment, the second vibration component S can be determined using synchronous detection even in the present example.

Next, a sixth example of the detection of the second vibration component according to the first embodiment will be described.

In the foregoing examples, the methods for detecting the second vibration component S corresponding to Lissajous figures or vector representations have been described. The present example deals with a case of detecting the second vibration component S using synchronous detection on time-axis waveforms. Even in the foregoing examples, vibration components in the same direction as the thrust direction are determined using synchronous detection. In the present example, the second vibration component S is directly determined by synchronous detection.

The second vibration component is a vibration component that is excited by the contact of the vibrating body 5 and the contact body 6 (slider), and occurs on the vibrating body 5 as a response and is superposed on the first vibration component. The second vibration component thus occurs on the vibrating body 5 after a certain phase delay with the timing of contact as the starting point. This timing serving as the starting point is the peak timing of the vibration in the vibration mode illustrated in Fig. 1C (thrust vibration mode), and the occurring vibration is superposed on the first vibration component with a phase delay that differs between the vibration modes, depending on the excitation frequency. The vibration resulting from the frictional force acting in the direction of relative movement between the vibrating body 5 and the contact body 6 (slider) occurs mainly in the vibration mode illustrated in Fig. 1D (feed vibration mode), and is superposed on the vibration in the feed vibration mode of the first vibration component with a phase delay θs corresponding to the response characteristic of the feed vibration mode.

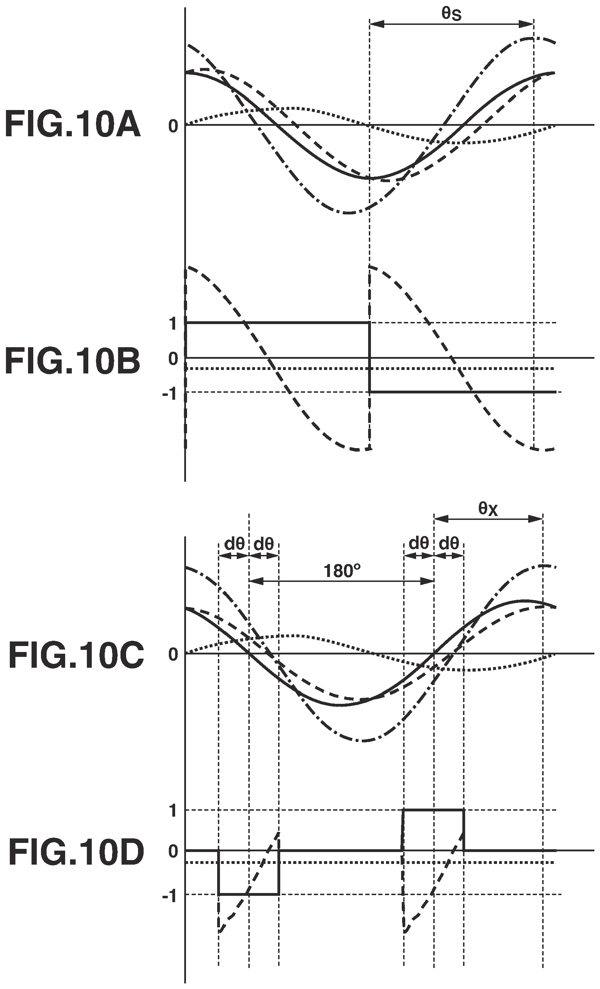

Figs. 10(a) and 10(b) are diagrams for describing the sixth example of the detection of the second vibration component according to the first embodiment, and diagrams for describing the operation of synchronous detection. Fig. 10(a) illustrates the waveform of (current signal IA - current signal IB) under no load (solid line). The diagram also illustrates a superposed vibration waveform (dotted line) to be superposed on the no-load waveform, the waveform (broken line) of (current signal IA - current signal IB) on which the superposed vibration waveform (dotted line) is superposed, and the waveform (dot-dashed line) of (current signal IA + current signal IB). Fig. 10(b) is a diagram illustrating how the component of the superposed vibration waveform is detected by synchronous detection.

The solid line in Fig. 10(b) represents a reference signal that is 1 when the sign of the superposed vibration waveform (dotted line) in Fig. 10(a) is positive, and -1 when negative. The broken line in Fig. 10(b) represents the result of multiplication of the broken-lined signal in Fig. 10(a) by this reference signal. The dotted line in Fig. 10(b) indicates an average of the multiplication result. This value varies with the amplitude of the superposed vibration waveform (dotted line) in Fig. 10(a).

The superposed vibration waveform (dotted line) in Fig. 10(a) represents the vibration component that occurs on the vibrating body 5 due to the excitation of the vibrating body 5 by the contact body 6 (slider), and is unable to be directly detected because of the superposition on the no-load vibration. The second vibration component detection unit 16 thus uses synchronous detection to detect a vibration component that is rich in the vibration component of this superposed vibration waveform. Since the superposed vibration waveform has a phase lagging behind the peak phase of the waveform (dot-dashed line) of (current signal IA + current signal IB) in Fig. 10(a) by θs, first, the reference signal (solid line) illustrated in Fig. 10(b) is generated to extract this phase component. The amount of phase delay θs depends on the driving state and is thus set based on the driving state. Next, the waveform (broken line) of (current signal IA - current signal IB) on which the superposed vibration waveform (dotted line) of Fig. 10(a) is superposed is multiplied by the reference signal (solid line) of Fig. 10(b) by synchronous detection, and averaged to determine the second vibration component S. The quotient of the value obtained by the synchronous detection divided by the amplitude of (current signal IA + current signal IB) may be used as the second vibration component S.

θs values can be measured and determined in advance depending on conditions such as the amplitude of (current signal IA + current signal IB) and the phase difference between the alternating-current signals VA and VB, and prepared in the form of a data table or a function.

While in the present example the reference signal is a pulsed signal, sinusoidal and other waveforms may be used.

Next, a seventh example of the detection of the second vibration component according to the first embodiment will be described.

Figs. 10(c) and 10(d) are diagrams for describing the seventh example of the detection of the second vibration component according to the first embodiment. Fig. 10(c) illustrates the waveform of (current signal IA - current signal IB) under no load (solid line), and the superposed vibration waveform (dotted line) to be superposed thereon. Fig. 10(c) also illustrates the waveform (broken line) of (current signal IA - current signal IB) on which the superposed vibration waveform (dotted line) is superposed, and the waveform (dot-dashed line) of (current signal IA + current signal IB).

Fig. 10(d) is a diagram illustrating how the superposed vibration waveform component is detected by integrating the actually detected waveform (broken line) of (current signal IA - current signal IB) on which the superposed vibration waveform (dotted line) is superposed, over a predetermined phase interval.

The solid line in Fig. 10(d) represents a gate signal that is -1 in a phase interval ($0° \pm d\theta$) about a phase 0° of the waveform of (current signal IA - current signal IB) under no load (solid line) in Fig. 10(c), 1 in a phase interval ($180° \pm d\theta$) about a phase 180°, and 0 in other phase intervals. The broken line in Fig. 10(d) represents the result of multiplication of the broken-lined signal in Fig. 10(c) by this gate signal. The dotted line in Fig. 10(d) indicates the average of this multiplication result. This value varies with the amplitude of the superposed vibration waveform (dotted line) in Fig. 10(c).

The no-load waveform (solid line) of (current signal IA - current signal IB) in Fig. 10(c) can only be detected under no load. A phase difference θx between the no-load waveform (solid line) of (current signal IA - current signal IB) and the waveform (dot-dashed line) of (current signal IA + current signal IB) in Fig. 10(c) is thus set in the form of a data table or a function in advance as a value that varies depending on various vibration conditions. For example, the phase difference θx can be set in advance depending on conditions such as the amplitude of (current signal IA + current signal IB) and the phase difference between the alternating-current signals VA and VB.

The second vibration component detection unit 16 simply outputs the value of this dotted line in Fig. 10(d) as the second vibration component S. The quotient by the amplitude of (current signal IA + current signal IB) may be used as the second vibration component S.

Next, an eighth example of the detection of the second vibration component according to the first embodiment will be described.

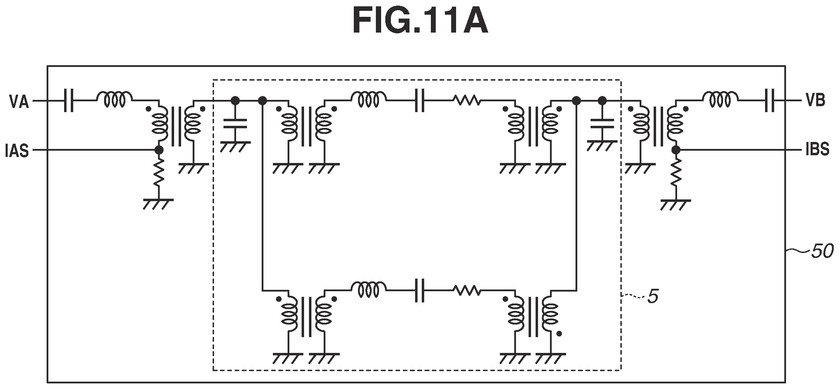

In the present example, (current signal IA - current signal IB) under no load (second comparison signal) for the alternating-current signal VA (first signal) and the alternating-current signal VB (second signal) is generated using an equivalent circuit model for the vibrating body 5 and the driving circuit. The second comparison signal is then subtracted from a difference between the actually measured current signal IA (first detection signal) and current signal IB (second detection signal) to extract a superposed vibration waveform. Fig. 11A illustrates a circuit example of the equivalent circuit model. A filter 50 simulates the operation of the equivalent circuit for the vibrating body 5 and the driving circuit under no load. The circuit diagram in the block includes series resonant circuits composed of inductors 13 and 14 and capacitors 11 and 12, transformers 7 and 8, an equivalent circuit for the vibrating body 5 including the piezoelectric bodies 3 and 4, and resistors 9 and 10 for current detection. The operation of these components is simulated by calculation. When the waveforms of the alternating-current signals VA and VB are input, the filter 50 outputs a current signal IAS simulating the current signal IA and a current signal IBS simulating the current signal IB in real time.

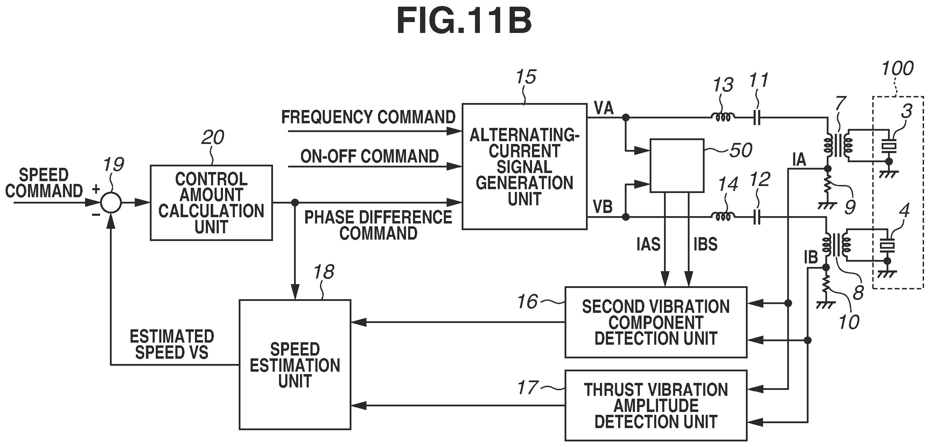

Fig. 11B is a diagram illustrating a second configuration example of the driving apparatus of the vibration actuator 100 according to the first embodiment of the present invention. Fig. 11B illustrates an example where the second vibration component is detected using the filter 50. Components similar to those illustrated in Fig. 2 are denoted by the same reference numerals, and a detailed description thereof will be omitted. The alternating-current signals VA and VB output from the alternating-current signal generation unit 15 are input to the filter 50. The filter 50 outputs the current signal IAS simulating the current signal IA under no load and the current signal IBS simulating the current signal IB under no load. The second vibration component detection unit 16 receives the inputs of the current signals IA and IB and the current signals IAS and IBS. With these inputs, the second vibration component detection unit 16 detects an amplitude SF of the superposed vibration waveform by subtracting (current signal IAS - current signal IBS) (second comparison signal) from the difference between the current signal IA (first detection signal) and the current signal IB (second detection signal). As expressed in Eq. 20, the sign of a phase difference θSAB between the superposed vibration waveform and (current signal IA + current signal IB) is then applied as the sign of the amplitude SF of the superposed vibration waveform, and the resultant is output as the second vibration component S.

In the foregoing example, the second vibration component S is determined from the signal obtained by subtracting the second comparison signal from the difference between the current signal IA (first detection signal) and the current signal IB (second detection signal), with (current signal IAS - current signal IBS) as the second comparison signal. However, depending on the configuration of the vibrating body 5 and the polarization directions of the piezoelectric bodies 3 and 4, (current signal IAS + current signal IBS) may be used as a first comparison signal. In such a case, the second vibration component S may be determined from a signal obtained by subtracting the first detection signal from the sum of the current signal IA (first detection signal) and the current signal IB (second detection signal).

[Exp. 20]

$$S = Sign(\theta_{SAB}) \cdot SF \qquad \text{Eq. 20}$$

Alternatively, the current signal IAS may be used as the first comparison signal, and the current signal IBS as the second comparison signal.

A difference between the current signal IA (first detection signal) and the current signal IAS (first comparison signal) and a difference between the current signal IB (second detection signal) and the current signal IBS (second comparison signal) may be determined, and a difference between the amplitudes of the differences may be used as the second vibration component S. Eq. 21 is a vector representation thereof.

[Exp. 21]

$$S = \left|\overrightarrow{I_A} - \overrightarrow{I_{AS}}\right| - \left|\overrightarrow{I_B} - \overrightarrow{I_{BS}}\right| \qquad \text{Eq. 21}$$

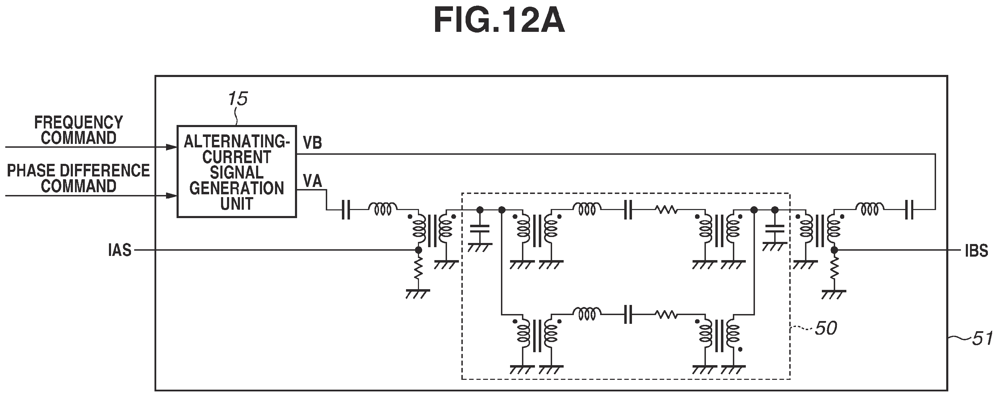

Fig. 12A is a diagram for describing a configuration of a current signal generation unit 51, which is the filter 50 with an alternating-current signal generation unit 15 added thereto. The current signal generation unit 51 outputs the current signals IAS and IBS simulating the current signals IA and IB under no load based on the frequency command from the not-illustrated command unit and the phase difference command from the control amount calculation unit 20.

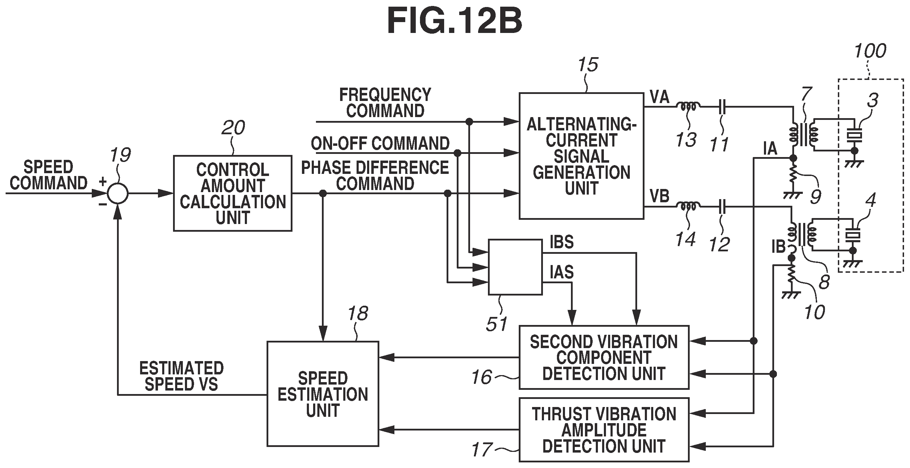

Fig. 12B is a diagram illustrating a third configuration example of the driving apparatus of the vibration actuator 100 according to the first embodiment of the present invention. Fig. 12B illustrates an example where the second vibration component is detected using the current signal generation unit 51. Components similar to those illustrated in Figs. 2 and 11B are denoted by the same reference numerals, and a detailed description thereof will be omitted.

The output of the filter 50 and the current signal generation unit 51 does not need to be analog signals. For example, the output may be digital waveform information or waveform information such as an amplitude and a phase.

Next, the operation of the speed estimation unit 18 will be described. As illustrated in Figs. 6A and 6B, the output of the second vibration component detection unit 16 varies in sensitivity to speed and in an offset value depending on the phase difference between the alternating-current signals VA and VB and the thrust vibration amplitude. To estimate the speed from the second vibration component, the sensitivity and the offset value of the output of the second vibration component detection unit 16 therefore need to be corrected based on the phase difference between the alternating-current signals VA and VB and the thrust vibration amplitude.

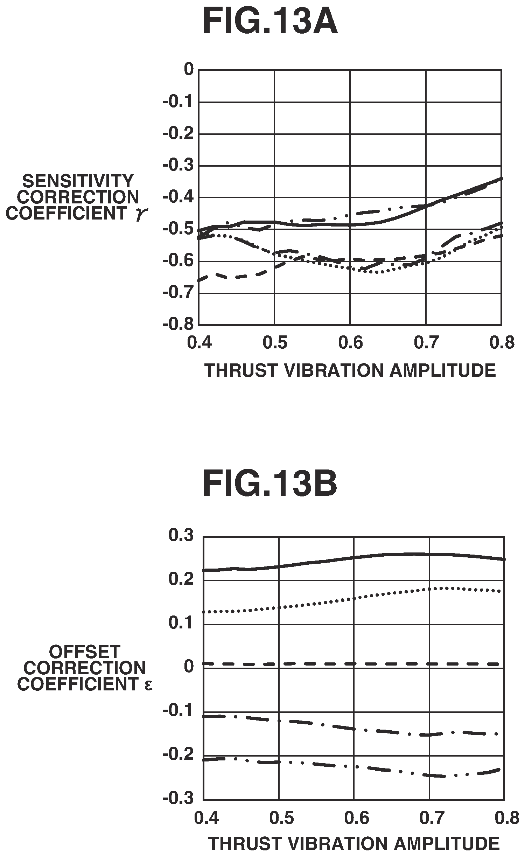

Figs. 13A to 13D are charts illustrating correction coefficients for determining the speed from the second vibration component S illustrated in Figs. 6A and 6B and the results of speed estimation. Fig. 13A illustrates a sensitivity correction coefficient γ, and Fig. 13B an offset correction coefficient ε, for each thrust amplitude and each phase difference between the alternating-current signals VA and VB. The line types indicate representative ones of variations in the phase difference between the alternating-current signals VA and VB: a solid line (90°), a dotted line (45°), a broken line (0°), a dot-dashed line (-45°), and a double-dot-dashed line (-90°). Eq. 22 is an equation for estimating the speed VS from the value of the second vibration component S.

[Exp. 22]

$$V_S = \frac{S - \varepsilon}{\gamma} \qquad \text{Eq. 22}$$

With characteristics where the value of the second vibration component S changes linearly with the speed as in Figs. 6A and 6B, the speed can be estimated by using offset and sensitivity correction coefficients determined in advance for each thrust amplitude and each phase difference between the alternating-current signals VA and VB. The characteristics of Figs. 13A and 13B may be stored in the form of data tables, or in the form of functions T1 and T2 of the thrust vibration amplitude and the phase difference between the alternating-current signals VA and VB. The function T1 for the offset correction coefficient ε is given by Eq. 23, and the function T2 for the sensitivity correction coefficient γ by Eq. 24.

[Exp. 23]

$$\varepsilon = T_1(phase\ difference\ between\ alternating$$

$$- current\ signals\ VA\ and\ VB, thrust\ vibration\ amplitude) \qquad Eq.\ 23$$

[Exp. 24]

$$\gamma = T_2(phase\ difference\ between\ alternating$$

$$- current\ signals\ VA\ and\ VB, thrust\ vibration\ amplitude) \qquad Eq.\ 24$$

Figs. 13A and 13B are charts illustrating the relationship between the phase difference between the alternating-current signals VA and VB, the thrust vibration amplitude, and the correction coefficients. However, the frequency of the alternating-current signals VA and VB may be used instead of the thrust vibration amplitude. In such a case, the sensitivity correction coefficient $\gamma$ and the offset correction coefficient $\varepsilon$ are determined from the frequency of and the phase difference between the alternating-current signals VA and VB during driving, using data tables or functions T3 and T4. The function T3 for the offset correction coefficient $\varepsilon$ is given by Eq. 25, and the function T4 for the sensitivity correction coefficient $\gamma$ by Eq. 26.
[Exp. 25]

$$\varepsilon = T_3(phase\ difference\ between\ alternating$$

$$- current\ signals\ VA\ and\ VB, frequency) \qquad Eq.\ 25$$

[Exp. 26]

$$\gamma = T_4(phase\ difference\ between\ alternating$$

$$- current\ signals\ VA\ and\ VB, frequency) \qquad Eq.\ 26$$

The amplitude of the alternating-current signals VA and VB and other parameters may be added to the input arguments of the functions T3 and T4.

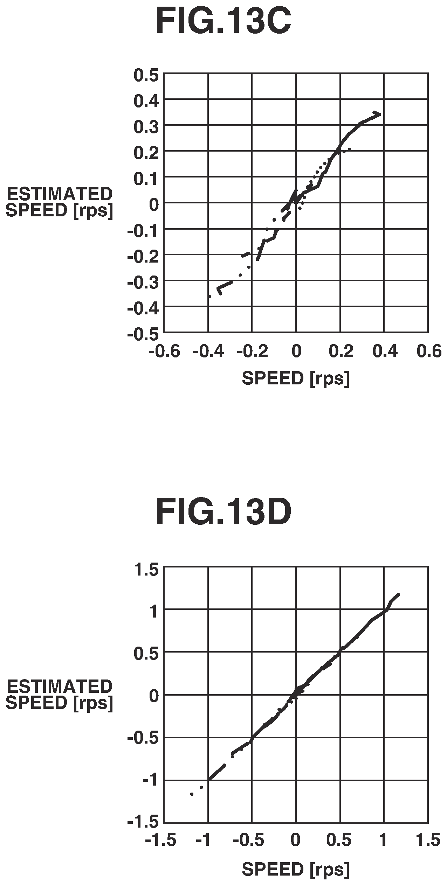

Figs. 13C and 13D are charts illustrating the results of speed estimation from the second vibration components S illustrated in Figs. 6A and 6B, using the correction coefficients of Figs. 13A and 13B, and illustrate the relationship between the actually measured speeds and the estimated speeds. Fig. 13C illustrates the results of speed estimation from the characteristic of Fig. 6A. Fig. 13D illustrates the results of speed estimation from the characteristic of Fig. 6B. Fig. 13D with the larger thrust amplitude tends to have a smaller error in the estimated speed from the actual speed than the characteristic of Fig. 13C.
The foregoing description has dealt with an example where the speed is defined as a linear expression of the second vibration component S, and the speed is estimated using the offset correction coefficient $\varepsilon$ and the sensitivity correction coefficient $\gamma$. However, the relationship with the speed may be defined using polynomial approximation, trigonometric functions, or the like. In such a case, as many coefficients as the number of terms in the approximate expression are configured as functions with multiple arguments like the foregoing functions T1 to T4.
Next, a vibration detection unit used to detect the second vibration component will be described. In the foregoing description, the vibration of the vibrating body 5 is described to be detected from the currents flowing through the primary windings of the transformers. This is predicated on situations where the piezoelectric bodies are connected to the secondary windings of the transformers. In other words, this utilizes the relationship that the vibration speed of the piezoelectric bodies and the fundamental wave components of the currents in the primary windings of the transformers are substantially proportional if the parallel resonant frequency of the damping capacitors of the piezoelectric bodies and the inductors of the secondary windings of the transformers is set close to the driving frequency. Although not illustrated in Figs. 2, 11B, and 12B, capacitors and/or inductors for adjusting the foregoing relationship between the parallel resonant frequency and the driving frequency may be connected in parallel with the piezoelectric bodies. There are also other methods for detecting vibration using a conventional method for motional current detection. The method includes connecting reference capacitors having the capacitances equal to those of the damping capacitors of the piezoelectric bodies in parallel with the piezoelectric bodies, and detecting vibration from differences between the currents flowing through the piezoelectric bodies and those flowing through the reference capacitors. As for the fundamental wave components of the currents in the primary windings of the transformers, the current signals that are substantially equivalent to the conventional motional currents can be obtained.

When the vibration waveform is detected from currents, and when the alternating-current signals VA and VB have rectangular waveforms in particular, the current signals may contain a large amount of harmonic components. In such a case, the current signals detected may be subjected to waveform conversion using low-pass filters, band-pass filters, or the like, and the extracted waveforms of the fundamental wave components may be used as the vibration waveforms.

Alternatively, the vibrating body may include piezoelectric bodies for vibration detection aside from the piezoelectric bodies for driving.

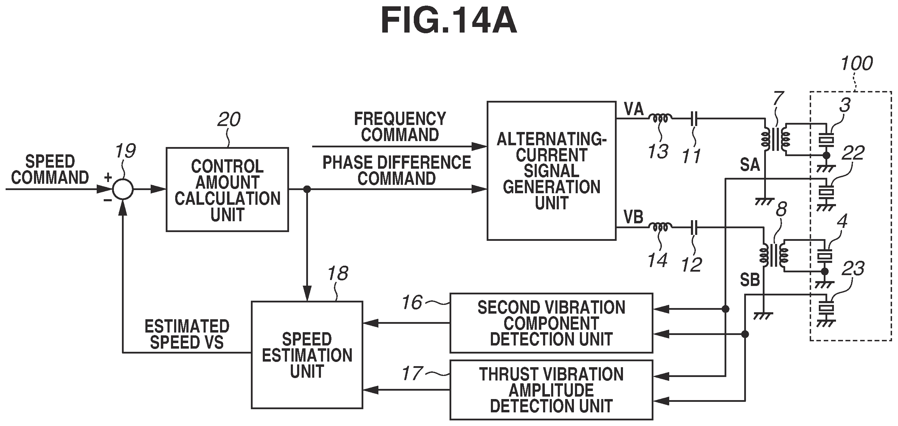

Fig. 14A is a diagram illustrating a fourth configuration example of the driving apparatus of the vibration actuator 100 according to the first embodiment of the present invention. Fig. 14A is a diagram illustrating an example of a case where the vibrating body 5 includes piezoelectric elements for detecting vibration aside from the driving piezoelectric elements. Components similar to those illustrated in Fig. 2 are denoted by the same reference numerals, and a detailed description thereof will be omitted. A piezoelectric body 22 and a piezoelectric body 23 are the piezoelectric elements for vibration detection. The piezoelectric body 22 outputs a vibration detection signal SA, and the piezoelectric body 23 outputs a vibration detection signal SB. The piezoelectric body 22 is stacked on the piezoelectric body 3, and the piezoelectric body 23 is stacked on the piezoelectric body 4. Due to the stacked configuration, the piezoelectric body 22 undergoes strain similar to that of the stacked piezoelectric body, and can detect the vibration of the driving piezoelectric bodies 3 and 4 with high accuracy. Instead of the piezoelectric bodies for vibration detection being disposed aside from the driving piezoelectric elements as described above, detection electrode regions independent of the driving electrodes may be provided on the driving piezoelectric element to form piezoelectric body regions for vibration detection, and used as the piezoelectric bodies for vibration detection.

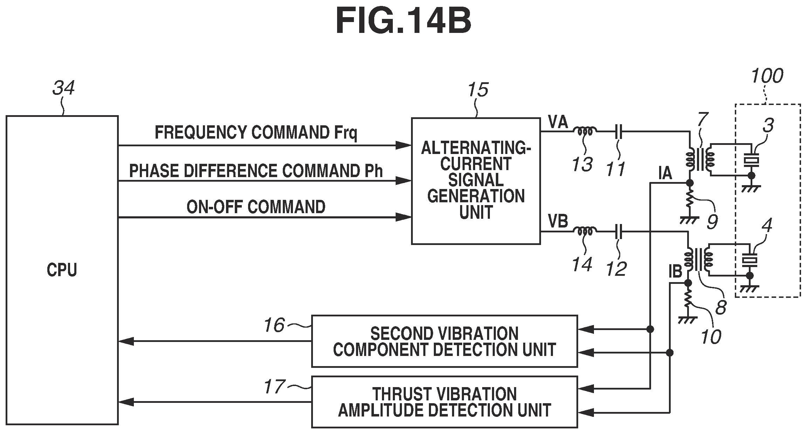

Fig. 14B is a diagram illustrating a fifth configuration example of the driving apparatus of the vibration actuator 100 according to the first embodiment of the present invention. In the configuration of Fig. 14B, a conventional central processing unit (CPU) 34 substitutes the speed estimation unit and the speed-controlling portion of Fig. 2. Components similar to those illustrated in Fig. 2 are denoted by the same reference numerals, and a detailed description thereof will be omitted.

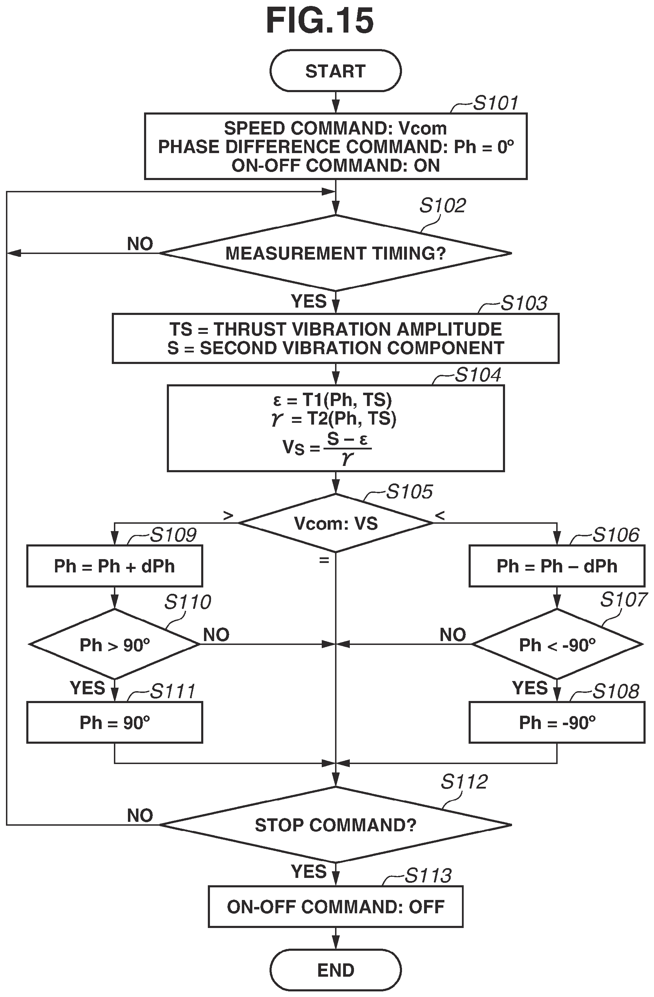

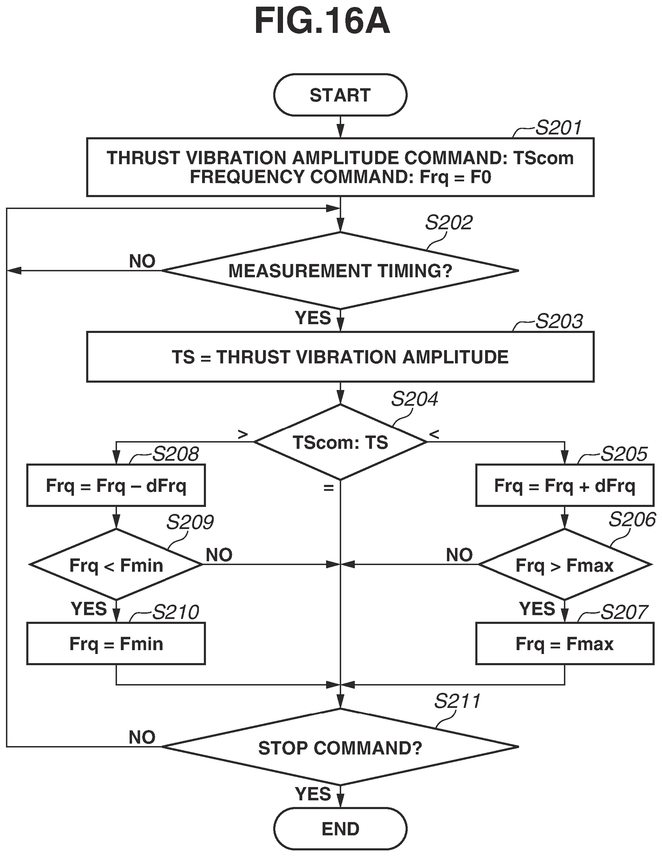

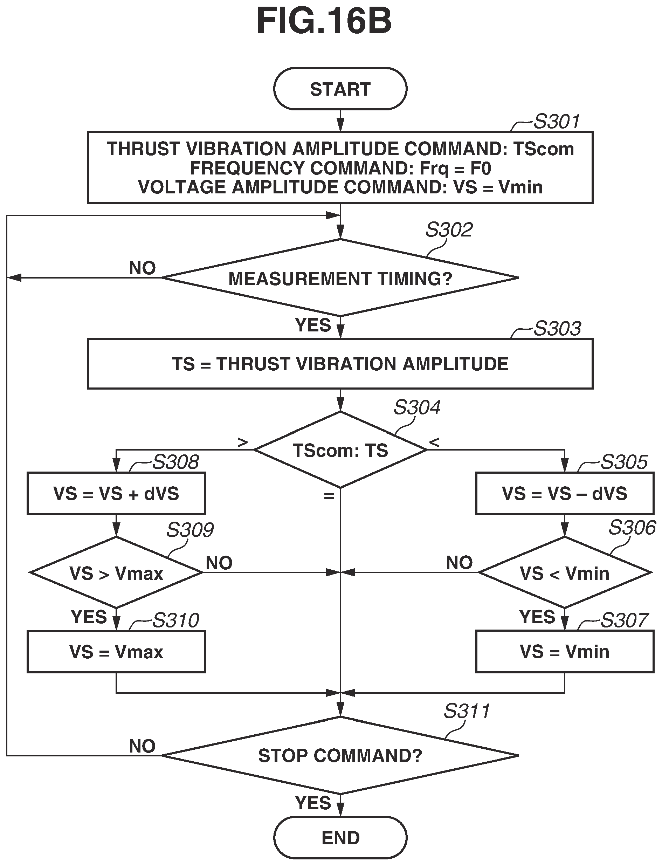

The CPU 34 inputs the second vibration component S output from the second vibration component detection unit 16 and the thrust vibration amplitude output from the thrust vibration amplitude detection unit 17, and performs speed estimation and control as well as control of the thrust vibration amplitude. Figs. 15, 16A, and 16B are flowcharts illustrating the operation of the CPU 34. Fig. 15 illustrates control steps for controlling speed. Figs. 16A and 16B illustrate control steps for controlling the thrust vibration amplitude. First, Fig. 15 will be described. In step S101, the CPU 34 sets a predetermined speed command Vcom, and sets a phase difference command Ph to an initial phase difference of 0° and an ON-OFF command to ON.

Next, in step S102, the CPU 34 determines whether measurement timing has come. If, as a result of this determination, the measurement timing has not come (NO in step S102), the processing waits at step S102.

On the other hand, if, as a result of the determination in step S102, the measurement timing has come (YES in step S102), the processing proceeds to step S103.

In step S103, the CPU 34 acquires the second vibration component S output from the second vibration component detection unit 16 and a thrust vibration amplitude TS output from the thrust vibration amplitude detection unit 17.

Next, in step S104, the CPU 34 performs calculation based on the values of the thrust vibration amplitude TS acquired in step S103 and the phase difference command Ph. More specifically, the CPU 34 calculates the sensitivity correction coefficient $\gamma$ and the offset correction coefficient $\varepsilon$ using these values, data tables, and the functions T1 and T2 defined by calculation formulas or the like. The CPU 34 then calculates speed VS using the second vibration component S acquired in step S103, and the sensitivity correction coefficient $\gamma$ and the offset correction coefficient $\varepsilon$. In subsequent steps, the CPU 34 compares the foregoing speed command Vcom with the speed VS calculated in step S104, and controls the phase difference command Ph.

Next, the control of the phase difference command Ph will be described in steps S105 to S111.

In step S105, the CPU 34 compares the speed command Vcom set in step S101 with the speed VS calculated in step S104.

If, as a result of the comparison in step S105, the speed command Vcom is less than (<) the speed VS, the processing proceeds to step S106.

In step S106, the CPU 34 subtracts a predetermined phase dPh from the phase difference command Ph.

Next, in step S107, the CPU 34 determines whether the phase difference command Ph is less than -90°.

If, as a result of the determination in step S107, the phase difference command Ph is less than -90° (YES in step S107), the processing proceeds to step S108.

In step S108, the CPU 34 sets the phase difference command Ph to -90°.

If, as a result of the comparison in step S105, the speed command Vcom is greater than (>) the speed VS, the processing proceeds to step S109.

In step S109, the CPU 34 adds the predetermined phase dPh to the phase difference command Ph.

Next, in step S110, the CPU 34 determines whether the phase difference command Ph is greater than +90°.

If, as a result of the determination in step S110, the phase difference command Ph is greater than +90° (YES in step S110), the processing proceeds to step S111.

In step S111, the CPU 34 sets the phase difference command Ph to +90°.

When the processing of step S108 ends, when the processing of step S111 ends, or when the speed command Vcom is equal to (=) the speed VS in the comparison in step S105, the processing proceeds to step S112. Through repetition of the operation of these steps S105 to S111, the phase difference command Ph is controlled so that the speed VS approaches the speed command Vcom.

Next, in step S112, the CPU 34 determines whether a stop command is input. If, as a result of this determination, no stop command is input (NO in step S112), the processing returns to step S102, and the CPU 34 performs the processing of step S102 and subsequent steps.

On the other hand, if, as a result of the determination in step S112, a stop command is input (YES in step S112), the processing proceeds to step S113.

In step S113, the CPU 34 sets the ON-OFF command to OFF. As a result, the outputs of the alternating-current signals VA and VB output from the alternating-current signal generation unit 15 become 0 V, and the contact body 6 (slider) of the vibration actuator 100 stops.

Once the processing of step S113 ends, the processing of the flowchart illustrated in Fig. 15 ends.

Next, Fig. 16A will be described. First, in step S201, the CPU 34 sets a predetermined thrust vibration amplitude command TScom, and sets a frequency command Frq to an initial frequency F0.

Next, in step S202, the CPU 34 determines whether the measurement timing has come. If, as a result of this determination, the measurement timing has not come (NO in step S202), the processing waits at step S202.

On the other hand, if, as a result of the determination in step S202, the measurement timing has come (YES in step S202), the processing proceeds to step S203.

In step S203, the CPU 34 acquires the thrust vibration amplitude TS output from the thrust vibration amplitude detection unit 17.

In subsequent steps, the CPU 34 compares the foregoing thrust vibration amplitude command TScom with the thrust vibration amplitude TS detected in step S203, and controls the frequency command Frq.

Next, the control of the frequency command Frq will be described in steps S204 to **S210.**

In step S204, the CPU 34 compares the thrust vibration amplitude command TScom set in step S201 with the thrust vibration amplitude TS detected in step S203.

If, as a result of the comparison in step S204, the thrust vibration amplitude command TScom is less than (<) the thrust vibration amplitude TS, the processing proceeds to step S205.

In step S205, the CPU 34 adds a predetermined frequency dFrq to the frequency command Frq.

Next, in step S206, the CPU 34 determines whether the frequency command Frq is greater than Fmax.

If, as a result of the determination in step S206, the frequency command Frq is greater than Fmax (YES in step S206), the processing proceeds to step S207.

In step S207, the CPU 34 sets the frequency command Frq to Fmax.

If, as a result of the comparison in step S204, the thrust vibration amplitude command TScom is greater than (>) the thrust vibration amplitude TS, the processing proceeds to step S208.

In step S208, the CPU 34 subtracts the predetermined frequency dFrq from the frequency command Frq.

Next, in step S209, the CPU 34 determines whether the frequency command Frq is less than Fmin.

If, as a result of the determination in step S209, the frequency command Frq is less than Fmin (YES in step S209), the processing proceeds to step S210.

In step S210, the CPU 34 sets the frequency command Frq to Fmin.

When the processing of step S207 ends, when the processing of step S210 ends, or when the thrust vibration amplitude command TScom is equal to (=) the thrust vibration amplitude TS in the comparison in step S204, the processing proceeds to step S211. Through repetition of the operation of these steps S204 to S210, the frequency command Frq is controlled so that the thrust vibration amplitude TS approaches the thrust vibration amplitude command TScom.

Next, in step S211, the CPU 34 determines whether a stop command is input. If, as a result of this determination, no stop command is input (NO in step S211), the processing returns to step S202, and the CPU 34 performs the processing of step S202 and subsequent steps.

On the other hand, if, as a result of the determination in step S211, a stop command is input (YES in step S211), the processing of the flowchart illustrated in Fig. 16A ends.

In the description of Fig. 15, the sensitivity correction coefficient $\gamma$ and the offset correction coefficient $\varepsilon$ are calculated by substituting the values of the thrust vibration amplitude TS and the phase difference command Ph into the functions T1 and T2. However, the functions T3 and T4 using the frequency command Frq instead of the thrust vibration amplitude TS may be used.

In the foregoing example, the thrust vibration amplitude is controlled by the frequency command Frq for the alternating-current signal generation unit 15. However, the amplitudes of the alternating-current signals VA and VB output from the alternating-current signal generation unit 15 may be controlled. Fig. 16B is a flowchart illustrating operation for controlling the thrust vibration amplitude in the case where the alternating-current signal generation unit 15 controls the amplitudes of the alternating-current signals VA and VB based on a not-illustrated voltage amplitude command. The steps of Fig. 16B will now be described.

First, in step S301, the CPU 34 sets the predetermined thrust vibration amplitude command TScom, and sets the frequency command to the initial frequency F0 and a voltage amplitude command VS to a minimum voltage amplitude Vmin.

Next, in step S302, the CPU 34 determines whether the measurement timing has come. If, as a result of this determination, the measurement timing has not come (NO in step S302), the processing waits at step S302.

On the other hand, if, as a result of the determination in step S302, the measurement timing has come (YES in step S302), the processing proceeds to step S303.

In step S303, the CPU 34 acquires the thrust vibration amplitude TS output from the thrust vibration amplitude detection unit 17.

In subsequent steps, the CPU 34 compares the foregoing thrust vibration amplitude command TScom with the thrust vibration amplitude TS detected in step S303, and controls the voltage amplitude command VS.

Next, the control of the voltage amplitude command VS will be described in steps S304 to S310.

In step S304, the CPU 34 compares the thrust vibration amplitude command TScom set in step S301 with the thrust vibration amplitude TS detected in step S303.

If, as a result of the comparison in step S304, the thrust vibration amplitude command TScom is less than (<) the thrust vibration amplitude TS, the processing proceeds to step S305.

In step S305, the CPU 34 subtracts a predetermined voltage dVS from the voltage amplitude command VS.

Next, in step S306, the CPU 34 determines whether the voltage amplitude command VS is less than Vmin.

If, as a result of the determination in step S306, the voltage amplitude command VS is less than Vmin (YES in step S306), the processing proceeds to step S307.

In step S307, the CPU 34 sets the voltage amplitude command VS to Vmin.

If, as a result of the comparison in step S304, the thrust vibration amplitude command TScom is greater than (>) the thrust vibration amplitude TS, the processing proceeds to step S308.

In step S308, the CPU 34 adds the predetermined voltage dVS to the voltage amplitude command VS.

Next, in step S309, the CPU 34 determines whether the voltage amplitude command VS is greater than Vmax.

If, as a result of the determination in step S309, the voltage amplitude command Vs is greater than Vmax (YES in step S309), the processing proceeds to step S310.

In step S310, the CPU 34 sets the voltage amplitude command VS to Vmax.

When the processing of step S307 ends, when the processing of step S310 ends, or when the thrust vibration amplitude command TScom is equal to (=) the thrust vibration amplitude TS in the comparison in step S304, the processing proceeds to step S311. Through repetition of the operation of these steps S304 to S310, the voltage amplitude command VS is controlled so that the thrust vibration amplitude TS approaches the thrust vibration amplitude command TScom.

Next, in step S311, the CPU 34 determines whether a stop command is input. If, as a result of this determination, no stop command is input (NO in step S311), the processing returns to step S302, and the CPU 34 performs the processing of step S302 and subsequent steps.

On the other hand, if, as a result of the determination in step S311, a stop command is input (YES in step S311), the processing of the flowchart illustrated in Fig. 16B ends.

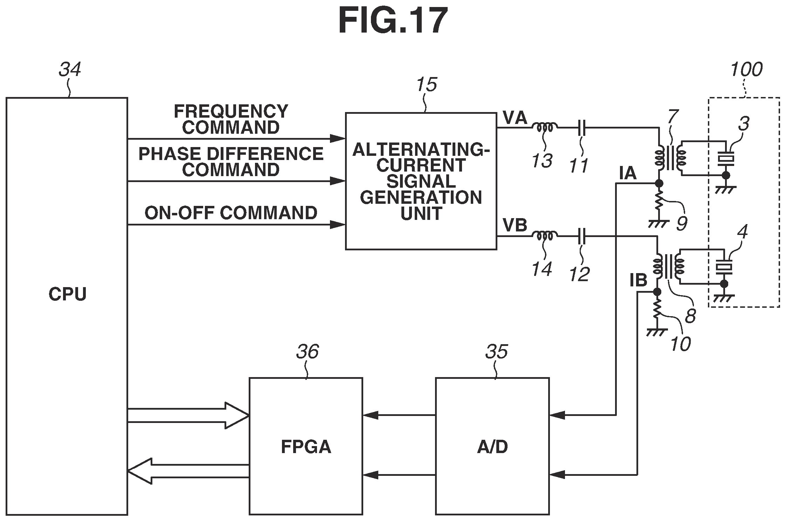

Fig. 17 is a diagram illustrating a sixth configuration example of the driving apparatus of the vibration actuator 100 according to the first embodiment of the present invention. In Fig. 17, the functions of the second vibration component detection unit 16 and the thrust vibration amplitude detection unit 17 are implemented by an analog-to-digital (A/D) converter 35 and an FPGA 36. Components similar to those illustrated in Fig. 2 are denoted by the same reference numerals, and a detailed description thereof will be omitted. The waveform information about the current signals IA and IB is converted into digital data by the A/D converter 35 and taken into the FPGA 36, and the second vibration component and the thrust vibration amplitude are detected within the FPGA 36. Various detection methods of the second vibration component described above can be selected within the FPGA 36, and the second vibration component S is detected by composite calculation of results detected by multiple detection methods.

The CPU 34 reads the second vibration component S and the thrust vibration amplitude from the FPGA 36, and performs processing following the flowcharts of Figs. 15 and 16A.

Next, other examples of the vibration actuator will be described.

In the foregoing description, the speed estimation technique has been described by using the vibration actuator that employs the plate-shaped vibrating body 5 having two different natural vibration modes illustrated in Figs. 1A to 1E as an example. However, some vibration actuators of other types are also capable of speed estimation by a similar method.

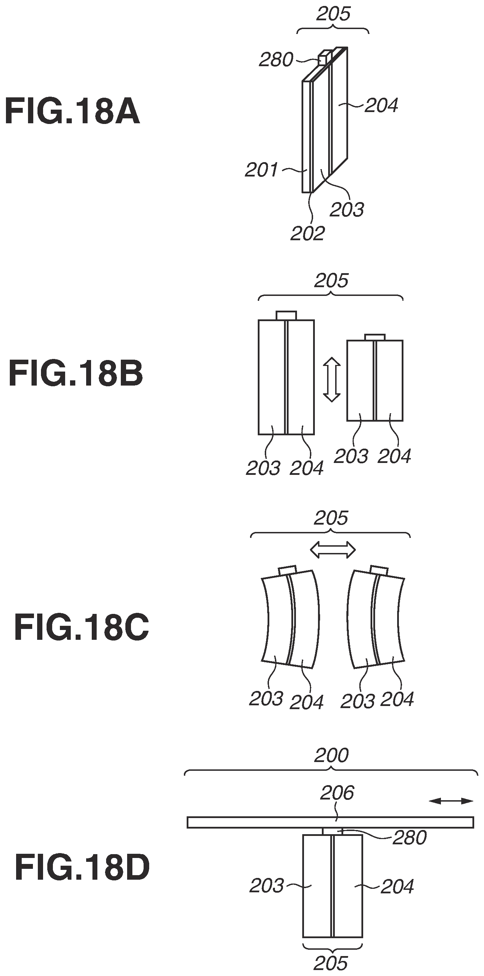

Figs. 18A to 18D are diagrams illustrating an example of a schematic configuration and vibration forms of a vibration actuator 200. The schematic configuration and operation principle of the vibration actuator 200 according to the first embodiment will be described with reference to Figs. 18A to 18D.

As illustrated in Fig. 18D, the vibration actuator 200 according to the first embodiment includes a vibrating body 205 and a contact body 206. The vibrating body 205 is a plate-shaped vibrating body made of a conductive material. As illustrated in Figs. 18A and 18D, the vibrating body 205 includes a piezoelectric element 202 and an elastic body 201 that has a protrusion 280 to contact the contact body 206 on a plate-shaped surface. The piezoelectric element 202 is a component that constitutes a part of the vibrating body 205 and is intended to excite the vibrating body 205.

As illustrated in Fig. 18A, two electrodes 203 and 204 are formed on the surface of the piezoelectric element 202. The two electrodes 203 and 204 are configured as electrodes electrically insulated from each other, and two alternating-current voltages with independently changing phases are applied thereto. The entire back surface of the piezoelectric element 202 is configured as an electrode, and a ground potential can be connected thereto from the surface of the piezoelectric element 202 through a not-illustrated via formed in part of the piezoelectric element 202. In the following description, the electrodes 203 and 204 will be referred to as piezoelectric bodies 203 and 204, respectively.

The contact body 206 illustrated in Fig. 18D is a slider that is pressed into contact with the protrusion 280 of the vibrating body 205 at a constant pressing force by a not-illustrated pressing mechanism. This contact body 206 (slider) is configured to move in the direction of the arrow in the diagram due to vibration excited on the vibrating body 205.

Figs. 18B and 18C are diagrams illustrating examples of vibration modes of the vibrating body 205. Fig. 18B illustrates a vibration form (expansion-contraction vibration) in a vibration mode (thrust vibration mode) excited in the vibrating body 205 when in-phase alternating-current voltages of the same amplitude are applied to the piezoelectric bodies 203 and 204. Fig. 18C illustrates a vibration form (bending vibration) in a vibration mode (feed vibration mode) excited in the vibrating body 205 when anti-phase alternating-current voltages of the same amplitude are applied to the piezoelectric bodies 203 and 204. In other words, when the phase difference between the alternating-current voltages applied to the piezoelectric bodies 203 and 204 of the vibrating body 205 is set to 0°, the vibration mode illustrated in Fig. 18B (thrust vibration mode) is excited. When the phase difference between the alternating-current voltages applied to the piezoelectric bodies 203 and 204 of the vibrating body 205 is set to 180°, the vibration mode illustrated in Fig. 18C (feed vibration mode) is excited. Moreover, when the phase difference between the alternating-current voltages applied to the piezoelectric bodies 203 and 204 of the vibrating body 205 is set to a phase other than 0° or 180° (in fact, the range of $0° \pm 120°$ or so is used), both the vibration modes of Figs. 18B and 18C are simultaneously excited. In such a case, the contact body 206 (slider) pressed into contact with the protrusion 280 disposed on the vibrating body 205 moves in the transverse direction of the rectangular shape of the vibrating body 205.

As the phase difference deviates from 0°, the amplitude of the vibration mode illustrated in Fig. 18C (feed vibration mode) increases and the relative speed between the contact body 206 (slide) and the vibrating body 205 increases.

With the piezoelectric bodies 203 and 204 substituted for the foregoing piezoelectric bodies 3 and 4, the driving apparatus of the vibration actuator 100 according to the foregoing first embodiment can be applied.

In the foregoing example, the amplitude of the sum signal of the current signals IA and IB serves as the thrust vibration amplitude. However, depending on the structure of the vibration actuator, the amplitude of the difference signal of the current signals IA and IB may serve as the thrust vibration amplitude.

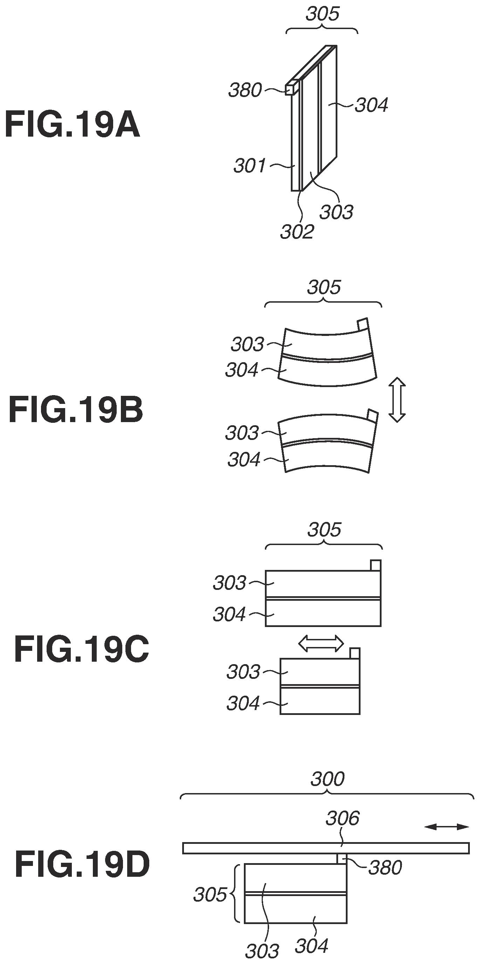

Figs. 19A to 19D are diagrams illustrating a schematic configuration of a vibration actuator 300. The vibration actuator 300 uses vibration modes similar to those of the vibration actuator 200, but the position of the protrusion to contact the contact body is different, and the amplitude of (current signal IA - current signal IB) corresponds to the thrust vibration amplitude.

Figs. 19B and 19C are diagrams illustrating an example of the vibration modes of the vibrating body 305. Fig. 19B illustrates a vibration form (bending vibration) in a vibration mode (thrust vibration mode) excited in the vibrating body 305 when anti-phase alternating-current voltages of the same amplitude are applied to piezoelectric bodies 303 and 304. Fig. 19C illustrates a vibration form (expansion-contraction vibration) in a vibration mode (feed vibration mode) excited in the vibrating body 305 when in-phase alternating-current voltages of the same amplitude are applied to the piezoelectric bodies 303 and 304.

In the foregoing example, the second vibration component is described to be detected by using (current signal IA - current signal IB), and the thrust vibration amplitude by using (current signal IA + current signal IB). For the vibration actuator 300, the correspondence is reversed. More specifically, in the case of the vibration actuator 300, the second vibration component is detected by using (current signal IA + current signal IB), and the thrust vibration amplitude by using (current signal IA - current signal IB).

In view of this, with the correspondence between the thrust vibration and feed vibration reversed and the piezoelectric bodies 303 and 304 substituted for the piezoelectric bodies 3 and 4, the driving apparatus of the vibration actuator 100 according to the foregoing first embodiment can be applied.

In the foregoing example, the phase difference command is input to the speed estimation unit 18. However, an actual phase difference measured between the alternating-current signals VA and VB or between driving voltages generated based on the alternating-current signals may be input.

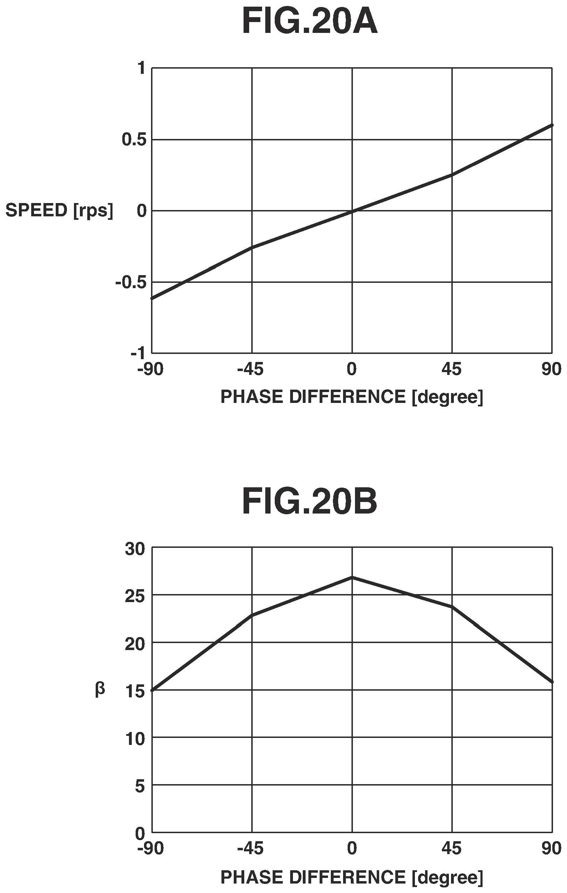

Propelling force can also be estimated from the speed VS that is estimated from the second vibration component S in the foregoing example. A method thereof will now be described. Speed when a predetermined propelling force F0 is generated and the gradient of a change in the propelling force to a change in speed are determined in advance with respect to the phase difference between the alternating-current signals VA and VB. Fig. 20A is a chart illustrating the phase difference between the alternating-current signals VA and VB and the speed (reference speed: V0) when the propelling force has a predetermined value F0. Fig. 20B is a chart illustrating the ratio ($\beta$) of a change in the propelling force to a change in speed. Propelling force FS then can be determined by Eq. 27.

[Exp. 27]

$$F_S = F_0 + \beta_{(phase\ difference)} \cdot \left( V_S - V_{0(F_0,,phase\ difference)} \right) \qquad \text{Eq. 27}$$

In the foregoing example, the speed is controlled by operating the phase difference between the alternating-current signals VA and VB. However, the speed may be controlled by controlling the voltage amplitude of the alternating-current signal VB with the phase difference fixed to a predetermined phase difference.

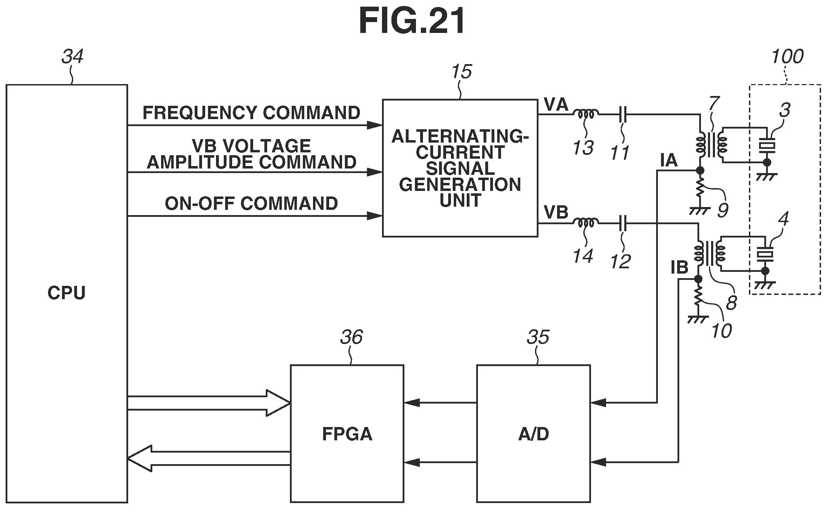

Fig. 21 is a diagram illustrating a seventh example of the configuration of the vibration actuator according to the first embodiment, where the phase difference command from the CPU 34 to the alternating-current signal generation unit 15 in Fig. 17 is replaced with a VB voltage amplitude command. Since the sign of the speed is also controlled using a VB voltage amplitude, the VB voltage amplitude is handled with a sign, and the output of the alternating-current signal VB is operated by multiplying the alternating-current signal VB with the sign.

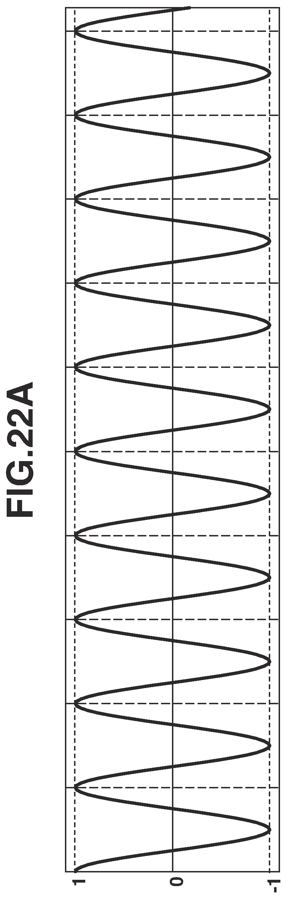

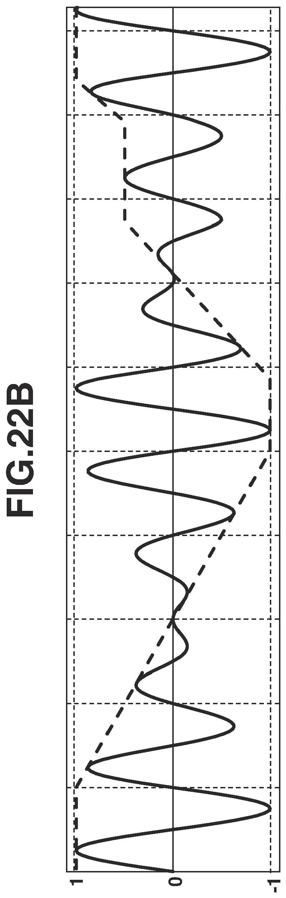

Figs. 22A and 22B illustrate an example of the waveforms of the alternating-current signals VA and VB and the VB voltage amplitude command. Fig. 22A illustrates the signal waveform of the alternating-current signal VA. Fig. 22B illustrates the signal waveforms of the alternating-current signal VB (solid line) and the VB voltage amplitude command (broken line). The alternating-current signal VB is 90° shifted in phase from the alternating-current signal VA, with the sign of the phase difference between the alternating-current signals VA and VB switched by the sign of the VB voltage amplitude (broken line).

In the foregoing example, the speed is controlled by operating the phase difference between the alternating-current signals VA and VB. As expressed in Eqs. 23 to 26, the speed is thus estimated using the offset correction coefficient $\varepsilon$ and the sensitivity correction coefficient $\gamma$ with the phase difference as a parameter. Similarly, in the case of controlling the speed using the VB voltage amplitude, the speed needs to be estimated using an offset correction coefficient $\varepsilon$ and a sensitivity correction coefficient $\gamma$ with the VB voltage amplitude as a parameter, instead of the phase difference.

Eq. 27 determines the propelling force using the reference speed: V0 and the ratio ($\beta$) of a change in the propelling force to a change in speed with the phase difference as a parameter. Again, the propelling force can be determined by using a reference speed V0 and the ratio ($\beta$) of a change in the propelling force to a change in speed with the VB voltage amplitude as a parameter.

In the foregoing description, since the amplitude of the thrust vibration does not change much relative to a change in the speed of the contact body 6 due to the force acting on the contact body 6, the speed is estimated using the thrust vibration amplitude detected by the thrust vibration amplitude detection unit 17. However, the feed vibration amplitude may be used for speed estimation. The feed vibration amplitude can be detected by measuring the amplitude of the difference signal of the current signals IA and IB.

[Second Embodiment]

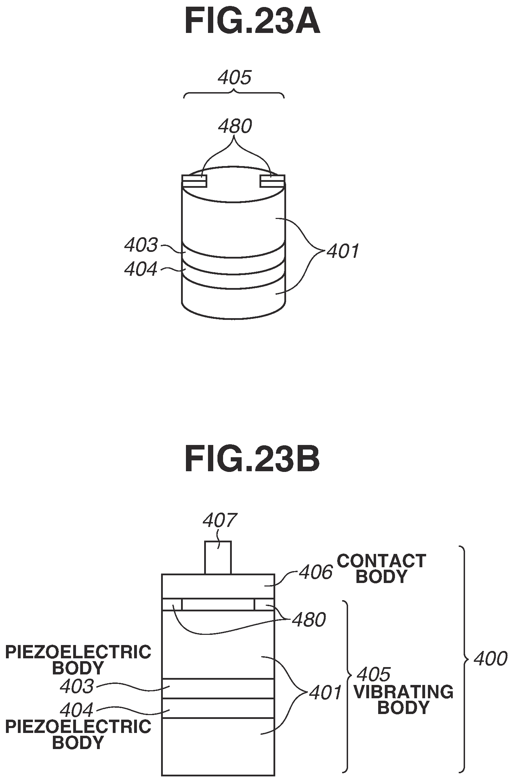

Figs. 23A and 23B are diagrams illustrating an example of a schematic configuration of a vibration actuator 400 according to a second embodiment of the present invention. The schematic configuration and operation principle of the vibration actuator 400 according to the second embodiment will be described with reference to Figs. 23A and 23B.

As illustrated in Fig. 23B, the vibration actuator 400 according to the second embodiment includes a vibrating body 405, a contact body 406, and a rotating shaft 407 connected to the contact body 406. As illustrated in Fig. 23A, the vibrating body 405 is a cylindrical vibrating body made of a conductive material, and includes a piezoelectric body 403, a piezoelectric body 404, and elastic bodies 401 that sandwich these piezoelectric bodies from above and below and have protrusions 480 at the cylinder top. The piezoelectric body 403 is a component for exciting vibration that causes the vibrating body 405 to expand and contract in the height direction of the cylinder. The piezoelectric body 404 is a component for exciting torsional vibration of the vibrating body 405 about the center axis of the cylinder. The piezoelectric bodies 403 and 404 are sandwiched and fixed between the elastic bodies 401 by a not-illustrated fastening member.

The contact body 406 illustrated in Fig. 23B is a rotor that is pressed into contact with the protrusions 480 of the vibrating body 405 at a constant pressing force by a not-illustrated pressing mechanism. This contact body 406 (rotor) rotates the rotating shaft 407 and the contact body 406 (rotor) with vibration excited in the vibrating body 405.

The driving operation of the vibration actuator 400 will now be described. The vibration actuator 400 is an actuator that drives the contact body 406 (rotor) to rotate with composite vibration of expansion-contraction vibration (thrust vibration) and torsional vibration (feed vibration) excited in the vibrating body 405. When an alternating-current voltage of a predetermined frequency is applied to the piezoelectric body 403, expansion-contraction vibration (thrust vibration) is excited in the vibrating body 405, and when applied to the piezoelectric body 404, torsional vibration (feed vibration) is excited in the vibrating body 405. Exciting both expansion-contraction vibration (thrust vibration) and torsional vibration (feed vibration) with a temporal shift in phase rotates the contact body 406 (rotor).

Differences between the vibration actuator 400 and the vibration actuator 100 will now be described. Aside from the differences in shape, these actuators have a significant difference related to driving. The difference is that, while the vibration actuator 100 excites thrust vibration with in-phase components of the two-phase alternating-current voltages applied and feed vibration with anti-phase components, each of the two-phase alternating-current voltages individually corresponds to thrust vibration and feed vibration. While the vibration actuator 100 controls the amplitude balance between the thrust vibration and feed vibration using the phase difference between the two-phase alternating-current voltages applied, the amplitude balance between the thrust vibration and feed vibration of the vibration actuator 400 remains unchanged even when the phase difference is operated. The vibration actuator 400 then controls the balance of the thrust vibration and feed vibration by operating the amplitude balance between the two-phase alternating-current voltages or the voltage amplitude of one of the two-phase alternating-current voltages.

Next, excitation of vibration on the vibrating body 405 due to external force on the vibration actuator 400 will be described. An example of a case of driving under a condition where the frequency of the two-phase alternating-current voltages is higher than the natural frequency of the thrust vibration mode of the vibrating body 405 will be described. Even in the vibration actuator 400, the loci of the vibration ellipses at the contact portions of the protrusions 480 and the contact body 406 (rotor) have a tendency similar to that in Fig. 3.

As in Fig. 3, the vibration locus at the end of each protrusion 480 during driving of the vibration actuator 400 has an elliptical shape. This vibration ellipse is inclined in a direction opposite to that of the force acting at the end of the protrusion 480 depending on the magnitude of force. Such a phenomenon occurs because vibration caused by the excitation that the vibrating body 405 receives during contact of the protrusion 480 and the contact body 406 (rotor) is superposed on the vibrating body 405. This superposed vibration component (second vibration component) is detected for speed estimation. The detection of the second vibration component and the speed estimation need to be performed in a manner depending on the driving condition, because of changes arising from the relationship between the natural frequencies of the vibration modes of the vibrating body 405 and the frequency of the alternating-current voltages applied to the piezoelectric bodies.

The following description deals with a case of driving under a condition where the frequency of the two-phase alternating-current voltages is higher than the natural frequencies of the vibration modes of the vibrating body 5.

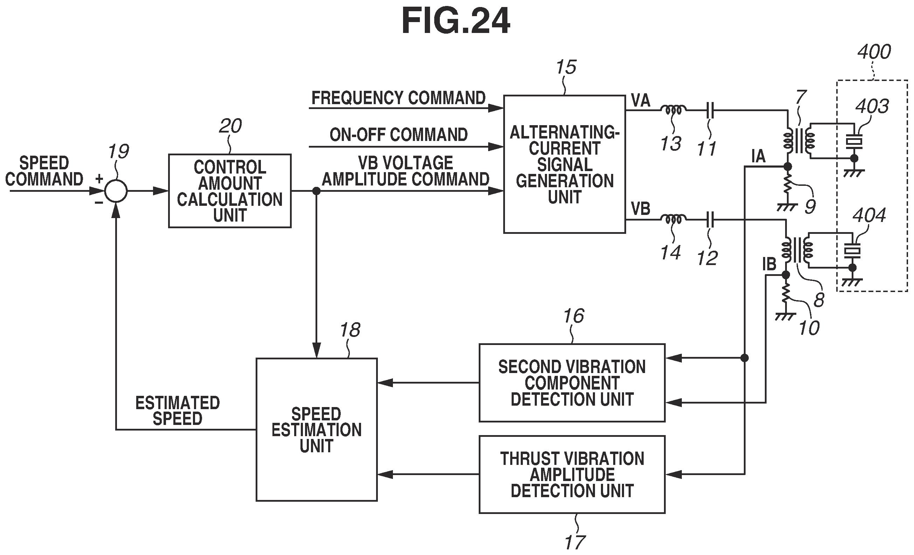

Fig. 24 is a diagram illustrating a first configuration example of a driving apparatus of the vibration actuator 400 according to the second embodiment of the present invention.

First, an alternating-current voltage generation unit will be described. An alternating-current signal generation unit 15 generates two-phase alternating-current signals VA (first signal) and VB (second signal) with 90° different phases based on a frequency command from a not-illustrated command unit and a VB voltage amplitude command output from a control amount calculation unit 20. The alternating-current signal VA has a predetermined amplitude, and the alternating-current signal VB has an amplitude based on the VB voltage amplitude command. If the VB voltage amplitude command has a negative value, the alternating-current signal VB is output with its polarity inverted.

The alternating-current signals VA and VB are connected to the primary windings of transformers 7 and 8 via series resonant circuits composed of inductors 13 and 14 and capacitors 11 and 12, respectively. The voltages input to the primary windings of the transformers 7 and 8 are boosted and applied to the piezoelectric bodies 403 and 404 of the vibration actuator 400 connected to the secondary windings as a first driving voltage and a second driving voltage. Here, the inductances of the secondary windings of the transformers 7 and 8 are frequency-matched with the damping capacitances of the piezoelectric bodies 403 and 404. As a result, currents substantially proportional to the vibration speed of the piezoelectric bodies 403 and 404 flow through the primary windings of the transformers 7 and 8.

Meanwhile, resistors 9 and 10 are connected to the primary windings of the transformers 7 and 8 in series. These resistors 9 and 10 convert the currents flowing through the primary windings of the connected transformers into voltages to generate a current signal IA and a current signal IB. The current signal IA (first detection signal) is a signal corresponding to vibration in an expansion-contraction mode (thrust vibration mode) of the vibrating body 405, and the current signal IB (second detection signal) a torsional vibration mode (feed vibration mode) of the vibrating body 405.

Next, a configuration related to speed estimation and control will be described. A second vibration component detection unit 16 and a thrust vibration amplitude detection unit 17 input the current signals IA and IB and detect the second vibration component and a thrust vibration amplitude. A speed estimation unit 18 detects speed using the values of the second vibration component detected here, the vibration amplitude of the vibrating body 405 in the expansion-contraction vibration mode (thrust vibration mode), and the VB voltage amplitude command.

A comparison unit 19 compares the detected speed with a speed command from the not-illustrated command unit, and the control amount calculation unit 20 generates a VB voltage amplitude command signal based on the comparison result. Then, the voltage amplitude of the alternating-current signal VB is set, and the speed is controlled by the magnitude of the amplitude of the feed vibration mode excited in the vibrating body 405.

Details of the speed estimation method and the vibration detection will be described separately.

A first example of the detection of the second vibration component according to the second embodiment will now be described.

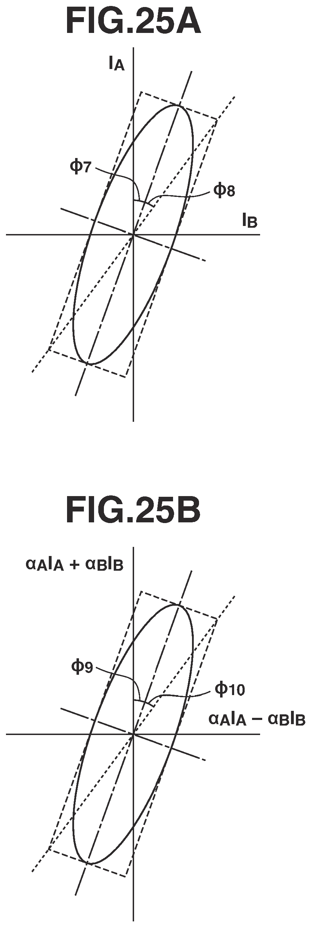

Figs. 25A and 25B are diagrams for describing the first example of the detection of the second vibration component according to the second embodiment, and diagrams illustrating an example of Lissajous waveforms (vibration ellipses) used for the detection of the second vibration component. Fig. 25A illustrates a Lissajous waveform (vibration ellipse) drawn with the current signal IA on the vertical axis and the current signal IB on the horizontal axis. The current signal IA represents the vibration waveform of the vibrating body 405 in the expansion-contraction vibration mode (thrust vibration mode), and the current signal IB represents the vibration waveform of the vibrating body 405 in the torsional vibration mode (feed vibration mode). $\varphi 7$ represents the inclination angle of the vibration ellipse.

The current signal IA is given by Eq. 28, and the current signal IB by Eq. 29.

[Exp. 28]

$$I_A = \rho sin(\omega t + \delta_1) \qquad \text{Eq. 28}$$

[Exp. 29]

$$I_B = \sigma sin(\omega t + \delta_2) \qquad \text{Eq. 29}$$

The inclination angle $\varphi 7$ of the vibration ellipse is given by Eq. 30.

[Exp. 30]

$$\varphi_7 = \frac{1}{2} tan^{-1} \left( \frac{2\rho\sigma cos(\delta_1 - \delta_2)}{\rho^2 - \sigma^2} \right) \qquad \text{Eq. 30}$$

The second vibration component detection unit 16 determines the second vibration component (inclination angle of the vibration ellipse) by detecting an amplitude $\rho$ of the current signal IA, an amplitude $\sigma$ of the current signal IB, and a phase difference $(\delta 1 - \delta 2)$ between the current signals IA and IB, and substituting the amplitudes and phase difference into Eq. 30.

In the foregoing description, the change in the inclination angle $\varphi 7$ of the vibration ellipse is described to be highly correlated with the speed. However, the vibration ellipse varies not only in the inclination angle but also in width (minor axis) with a change in speed. Taking this effect into account, the sum of the inclination angle $\varphi 7$ of the vibration ellipse and an angle $\varphi 8$ formed between a diagonal of the circumscribed rectangle of the vibration ellipse and the centerline of the vibration ellipse at a predetermined ratio may be used as the second vibration component S.

Eq. 31 derived by extracting only a value-changing portion of Eq. 30 may be used as the second vibration component S. A result of substitution of Eq. 31 into a given function may be used as the second vibration component S.

[Exp. 31]

$$S = \frac{2\rho\sigma cos(\delta_1 - \delta_2)}{\rho^2 - \sigma^2} \qquad \text{Eq. 31}$$

In the foregoing example, the vertical axis of the Lissajous waveform (vibration ellipse) is the current signal IA, and the horizontal axis is the current signal IB.

However, the inclination of the vibration ellipse may be determined with (current signal IA + current signal IB) on the vertical axis and (current signal IA - current signal IB) on the horizontal axis. Fig. 25B illustrates a Lissajous waveform (vibration ellipse) drawn using signals obtained by multiplying the current signals IA and IB by coefficients $\alpha$A and $\alpha$B, respectively, with their sum signal on the vertical axis and their difference signal on the horizontal axis.

With the coefficients $\alpha$A and $\alpha$B set to 1, an inclination angle $\varphi 9$ of the vibration ellipse is given by Eq. 32, and the inclination angle $\varphi 9$ can be used as the second vibration component S.

[Exp. 32]

$$\varphi_9 = \frac{1}{2} tan^{-1}\left(\frac{\sigma^2 - \rho^2}{2\rho\sigma cos(\delta_1 - \delta_2)}\right) \quad \text{Eq. 32}$$

An angle $\varphi 10$ may be determined as in the foregoing example, and the sum of the inclination angle $\varphi 9$ and the angle $\varphi 10$ at a predetermined ratio may be used as the second vibration component S. Eq. 33 derived by extracting only a value-changing portion of the equation may be used as the second vibration component S. A result of substitution of Eq. 33 into a given function may be used as the second vibration component S.
[Exp. 33]

$$S = \frac{\sigma^2 - \rho^2}{2\rho\sigma cos(\delta_1 - \delta_2)} \quad \text{Eq. 33}$$

Next, a second example of the detection of the second vibration component according to the second embodiment will be described.

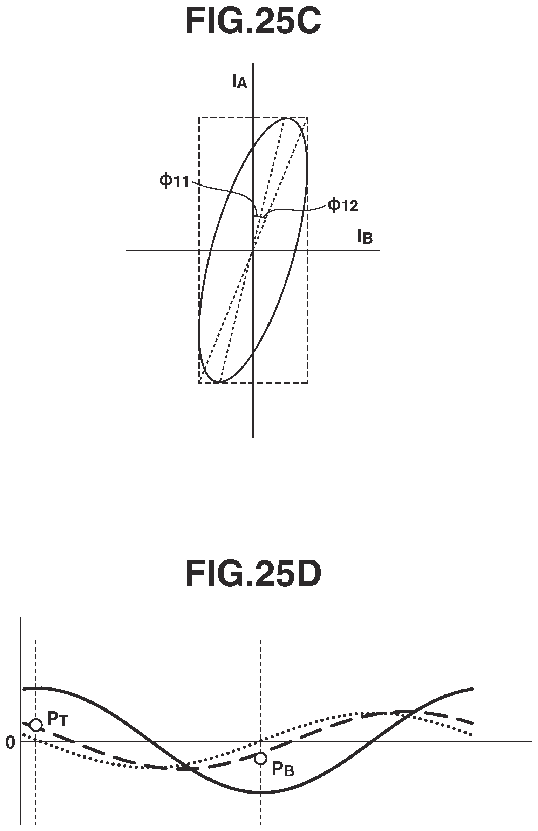

In the first example of the detection of the second vibration component according to the second embodiment, the inclination angle of the vibration ellipse is determined using Eq. 30. However, the inclination angle of the vibration ellipse may be determined using other parameters of the vibration ellipse that vary with the inclination angle. Figs. 25C and 25D are diagrams for describing the second example of the detection of the second vibration component according to the second embodiment. Fig. 25C is a diagram for describing an example where the second vibration component is detected using an angle $\varphi 11$ that varies with the inclination angle of the vibration ellipse. The first example of the detection of the second vibration component according to the second embodiment uses the inclination of the axis of the vibration ellipse. However, the determination of the inclination requires complex calculations like Eq. 30. In the present example, the angle $\varphi 11$ to be detected can be directly detected from the current signals IA and IB. The angle $\varphi 11$ is the angle between a line connecting the positive and negative peaks of the current signal IA and the vertical axis. Fig. 25D is a diagram for describing a method for detecting the angle $\varphi 11$. The solid line in Fig. 25D represents the waveform of the current signal IA, the dotted line the derivative waveform of the solid-line waveform, and the broken line the waveform of the current signal IB. The angle $\varphi 11$ is determined by sampling the broken-lined signal at the timing of the peaks of the current signal IB to detect values PT and PB, and using Eq. 34. The timing to detect PT and PB may be the zero-cross timing of the derivative waveform of the current signal IA.
[Exp. 34]

$$\varphi_{11} = tan^{-1}\left(\frac{amplitude\ of\ I_B \times 2}{P_T - P_B}\right) \quad \text{Eq. 34}$$

The second vibration component detection unit 16 determines the second vibration component (angle $\varphi 11$) as described above.

Alternatively, Eq. 35 or Eq. 36 may be used as the second vibration component S
[Exp. 35]

$$S = \frac{P_T - P_B}{amplitude\ of\ I_B} \quad \text{Eq. 35}$$

[Exp. 36]

$$S = P_T - P_B \quad \text{Eq. 36}$$

As with the first example of the detection of the second vibration component according to the second embodiment, the vibration ellipse varies not only in the inclination angle but also in width (minor axis) with a change in speed. The sum of an angle $\varphi 12$ formed between the diagonal of the circumscribed rectangle of the vibration ellipse illustrated in Fig. 25C and the line representing the angle $\varphi 11$ and the angle $\varphi 11$ at a predetermined ratio then may be used as the second vibration component S.

Next, a third example of the detection of the second vibration component according to the second embodiment will be described.

In the first and second examples of the detection of the second vibration component according to the second embodiment, the second vibration component is extracted from the shape of the vibration ellipse. However, the second vibration component may be directly determined from the amplitudes of the currents. The second vibration component detection unit 16 of the present example inputs the current signals IA and IB and determines the amplitudes of (current signal IA + current signal IB) and (current signal IA - current signal IB). The second vibration component detection unit 16 then calculates (amplitude of (current signal IA + current signal IB) - amplitude of (current signal IA - current signal IB)) as the second vibration component S. In the calculation above, the current signals IA and IB are directly added and subtracted. However, the current signals IA and IB may be multiplied by different coefficients αA and αB before addition and subtraction. The reason is that the expansion-contraction vibration that is thrust vibration and the torsional vibration that is feed vibration are excited using totally different phenomena. Specifically, the expansion-contraction vibration uses the longitudinal effect or transverse effect of the piezoelectric bodies, while the torsional vibration uses the thickness shear effect of the piezoelectric bodies. The current signals IA and IB are therefore multiplied by the coefficients αA and αB, respectively, to adjustment the sensitivities of the currents to the vibrations. The quotient of the foregoing calculation divided by the amplitude of the current signal IA may be used as the second vibration component S.

In the following description, the signal obtained by multiplying the current signal IA by the coefficient αA will be referred to as a current signal αIA, and the signal obtained by multiplying the current signal IB by the coefficient αB as a current signal αIB, except in diagrams and equations.

Next, a fourth example of the detection of the second vibration component according to the second embodiment will be described.

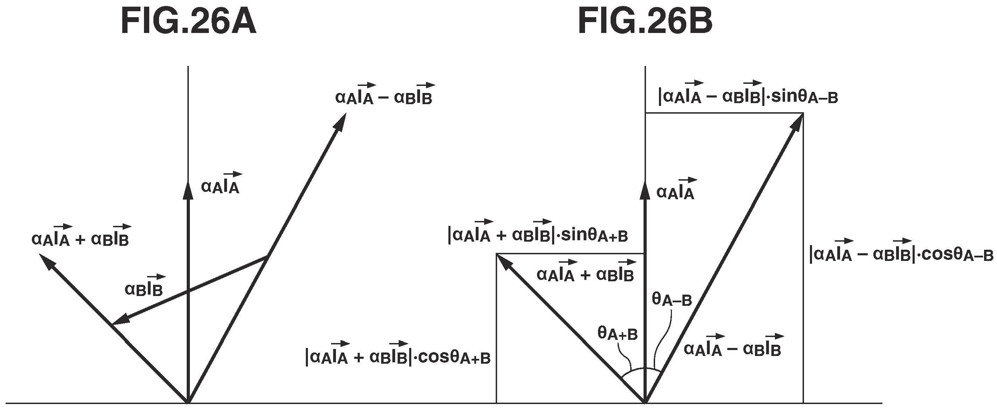

The present example deals with detection when the current signals are represented as vectors. Fig. 26 is a vector diagram of the current signals. Fig. 26(a) is a diagram illustrating the current signals αIA and αIB and the sum and difference signals thereof as vectors. The second vibration component S described in the third example of the second vibration component according to the second embodiment can be expressed as Eq. 37 or Eq. 38.

[Exp. 37]

$$S = \left| \alpha_A \vec{I_A} + \alpha_B \vec{I_B} \right| - \left| \alpha_A \vec{I_A} - \alpha_B \vec{I_B} \right| \qquad \text{Eq. 37}$$

[Exp. 38]

$$S = \frac{\left| \alpha_A \vec{I_A} + \alpha_B \vec{I_B} \right| - \left| \alpha_A \vec{I_A} - \alpha_B \vec{I_B} \right|}{\left| \alpha_A \vec{I_A} \right|} \qquad \text{Eq. 38}$$

Fig. 26(b) is a diagram illustrating the vectors of (current signal αIA + current signal αIB) and (current signal αIA - current signal αIB) resolved into the same direction as that of the vector of the current signal αIA that is the thrust vibration component and the direction normal thereto. The difference between the components of the vectors of (current signal αIA + current signal αIB) and (current signal αIA - current signal αIB) in the same direction as that of the vector of the current signal αIA is highly correlated with the inclination of the vibration ellipse, and values given by Eqs. 39 and 40 may be used as the second vibration component S.

[Exp. 39]

$$S = \left| \alpha_A \vec{I_A} + \alpha_B \vec{I_B} \right| \cdot cos\theta_{A+B} - \left| \alpha_A \vec{I_A} - \alpha_B \vec{I_B} \right| \cdot cos\theta_{A-B} \qquad \text{Eq. 39}$$

[Exp. 40]

$$S = \frac{\left| \alpha_A \vec{I_A} + \alpha_B \vec{I_B} \right| \cdot cos\theta_{A+B} - \left| \alpha_A \vec{I_A} - \alpha_B \vec{I_B} \right| \cdot cos\theta_{A-B}}{\left| \alpha_A \vec{I_A} \right|} \qquad \text{Eq. 40}$$

Alternatively, the second vibration component S may be determined by detecting components in the normal direction to the vector of the current signal αIA as well and adding the components to Eq. 39 or Eq. 40 at a predetermined ratio (x:y). This is expressed as Eqs. 41 and 42.

[Exp. 41]

$$S = x\left(\left|\alpha_A\vec{I_A} + \alpha_B\vec{I_B}\right| \cdot cos\theta_{A+B} - \left|\alpha_A\vec{I_A} - \alpha_B\vec{I_B}\right| \cdot cos\theta_{A-B}\right)$$
$$+ y\left(\left|\alpha_A\vec{I_A} + \alpha_B\vec{I_B}\right| \cdot sin\theta_{A+B} - \left|\alpha_A\vec{I_A} - \alpha_B\vec{I_B}\right| \cdot sin\theta_{A-B}\right) \qquad \text{Eq. 41}$$

[Exp. 42]

$$S = \frac{\begin{aligned}x\left(\left|\alpha_A\vec{I_A} + \alpha_B\vec{I_B}\right| \cdot cos\theta_{A+B} - \left|\alpha_A\vec{I_A} - \alpha_B\vec{I_B}\right| \cdot cos\theta_{A-B}\right) \\ + y\left(\left|\alpha_A\vec{I_A} + \alpha_B\vec{I_B}\right| \cdot sin\theta_{A+B} - \left|\alpha_A\vec{I_A} - \alpha_B\vec{I_B}\right| \cdot sin\theta_{A-B}\right)\end{aligned}}{\left|\alpha_A\vec{I_A}\right|} \qquad \text{Eq. 42}$$

The methods for determining the second vibration component S using Eqs. 39 to 41 will now be described. Eqs. 39 to 42 involve calculations including trigonometric functions and also require detection of phase differences. This complicates the structure of the second vibration component detection unit 16. In view of this, an example of using synchronous detection instead of these calculations will be described.

A method for detecting the second vibration component S using synchronous detection will now be described.

Specifically, with one of the sum signal and difference signal of the first and second detection signals as a reference signal and the other as a signal to be measured, the phase of the reference signal is assumed as a reference phase. A signal corresponding to the second vibration component is detected through interval integration of the signal to be measured over a phase interval set relative to the reference phase.

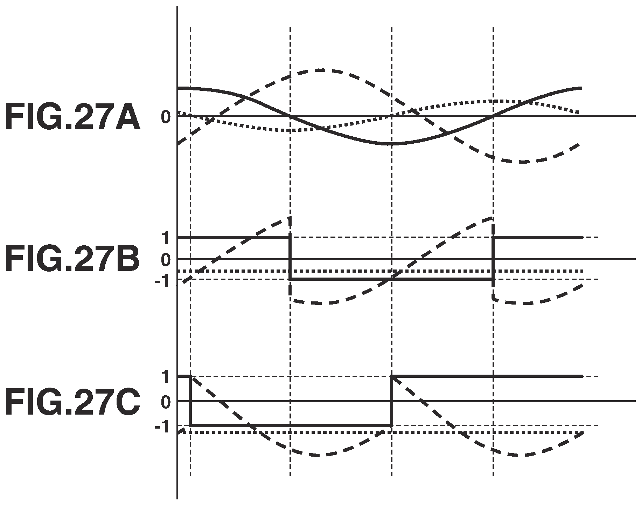

Fig. 27 is a diagram for describing a method for determining the magnitudes of respective direction components by synchronous detection. Fig. 27(a) illustrates the waveform (solid line) of the current signal $\alpha$IA serving as a reference, the signal waveform (broken line) to be resolved into components, and the derivative waveform (dotted line) of the current signal $\alpha$IA. Fig. 27(b) illustrates how the component in the same direction as that of the vector of the current signal $\alpha$IA is detected, and Fig. 27(c) how the component in the normal direction to the vector of the current signal $\alpha$IA is detected.

The solid line in Fig. 27(b) represents a reference signal that is 1 when the sign of the solid line in Fig. 27(a) is positive, and -1 when negative. The broken line in Fig. 27(b) represents the result of multiplication of the broken-lined signal in Fig. 27(a) by this reference signal. The dotted line in Fig. 27(b) represents the average of the multiplication result, indicating the magnitude of the vibration component in the same direction as that of the vector of the current signal $\alpha$IA.

The solid line in Fig. 27(c) represents a reference signal that is 1 when the sign of the dotted line in Fig. 27(a) is positive, and -1 when negative. The broken line in Fig. 27(c) represents the result of multiplication of the broken-lined signal in Fig. 27(a) by this reference signal. The dotted line in Fig. 27(c) represents the average of the multiplication result, indicating the magnitude of the vibration component in the normal direction to the vector of the current signal $\alpha$IA.

Next, a fifth example of the detection of the second vibration component according to the second embodiment will be described.

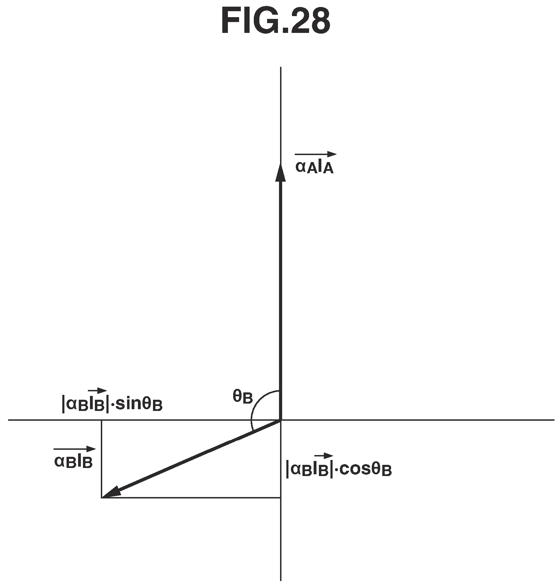

In the fifth example of the second vibration component according to the second embodiment, the second vibration component is detected using the vector of the current signal $\alpha$IB. Fig. 28 is a diagram illustrating a relationship between the vector of the current signal $\alpha$IA and the vector of the current signal $\alpha$IB. As in the fourth example of the second vibration component according to the second embodiment, the component in the same direction as that of the vector of the current signal $\alpha$IA is rich in the second vibration component. Values expressed by Eqs. 43 and 44 have characteristics similar to those of Figs. 6A and 6B described in the first embodiment.

[Exp. 43]

$$S = \left|\alpha_B\vec{I_B}\right| \cdot cos\theta_B \qquad \text{Eq. 43}$$

[Exp. 44]

$$S = \frac{\left|\alpha_B\vec{I_B}\right| \cdot cos\theta_B}{\left|\alpha_A\vec{I_A}\right|} \qquad \text{Eq. 44}$$

Alternatively, the second vibration component S may be determined by detecting the component in the normal direction to the vector of the current signal $\alpha$IA as well, and adding Eq. 43 or Eq. 44 and the component at a predetermined ratio (x:y). This is expressed as Eqs. 45 and 46.

[Exp. 45]

$$S = x\left(\left|\alpha_B\overrightarrow{I_B}\right| \cdot cos\theta_B\right) + y\left(\left|\alpha_B\overrightarrow{I_B}\right| \cdot sin\theta_B\right) \qquad \text{Eq. 45}$$

[Exp. 46]

$$S = \frac{x\left(\left|\alpha_B\overrightarrow{I_B}\right| \cdot cos\theta_B\right) + y\left(\left|\alpha_B\overrightarrow{I_B}\right| \cdot sin\theta_B\right)}{\left|\alpha_A\overrightarrow{I_A}\right|} \qquad \text{Eq. 46}$$

The methods for determining the second vibration component S using Eqs. 43 to 46 will be described. As in the fourth example of the detection of the second vibration component according to the second embodiment, calculations may be performed by using Eqs. 43 to 46, while the second vibration component S can also be determined using synchronous detection.

Next, a sixth example of the detection of the second vibration component according to the second embodiment will be described.

In the foregoing examples, the methods for detecting the second vibration component S corresponding to Lissajous figures or vector representations have been described. The present example deals with a method for detecting the second vibration component S using synchronous detection on time-axis waveforms. Even in the foregoing examples, synchronous detection is used to determine a vibration component in the same direction as the thrust direction. In the present example, the output of the synchronous detection is directly output as the second vibration component S.

The second vibration component is a vibration component that is excited by the contact of the vibrating body 405 and the contact body 406 (rotor), and occurs on the vibrating body 405 as a response and is superposed on the first vibration component. The second vibration component thus occurs on the vibrating body 405 with a certain phase delay with the timing of contact as the starting point. This timing serving as the starting point is when the displacement reaches the peak of vibration of the vibrating body 405 in the expansion-contraction vibration mode (thrust vibration mode), and the occurring vibration is superposed on the first vibration component with a phase delay that varies between the vibration modes, depending on the excitation frequency. The vibration resulting from the frictional force acting in the direction of relative movement between the vibrating body 405 and the contact body 406 (rotor) may occur mainly in the torsional vibration mode (feed vibration mode). In such a case, the vibration is superposed on the vibration in the torsional vibration mode (feed vibration mode) of the first vibration component with a phase delay θs corresponding to the response characteristic of the feed vibration mode.

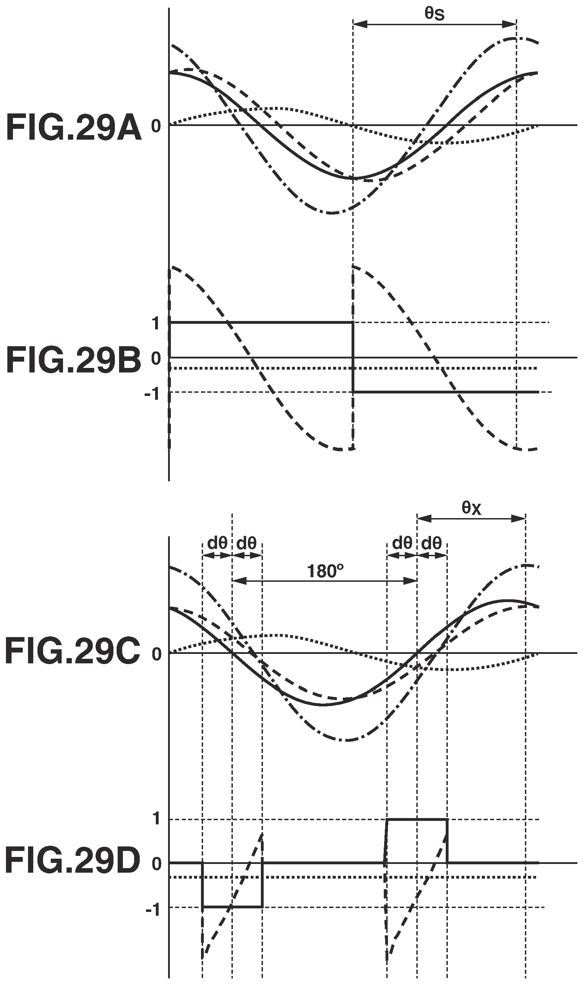

Figs. 29(a) and 29(b) are diagrams for describing the fifth example of the detection of the second vibration component according to the second embodiment, and diagrams for describing the operation of synchronous detection. Fig. 29(a) illustrates the waveform (solid line) of the current signal IB under no load, a superposed vibration waveform (dotted line) to be superposed on the no-load waveform, the waveform (broken line) of the current signal IB with the superposed vibration waveform (dotted line) superposed, and the waveform (dot-dashed line) of the current signal IA. Fig. 29(b) is a diagram illustrating how the superposed vibration waveform component is detected by synchronous detection.

The solid line in Fig. 29(b) represents a reference signal that is 1 when the sign of the superposed vibration waveform (dotted line) in Fig. 29(a) is positive, and -1 when negative. The broken line in Fig. 29(b) represents the result of multiplication of the broken-lined signal in Fig. 29(a) by this reference signal. The dotted line in Fig. 29(b) indicates the average of the multiplication result, which varies with the amplitude of the superposed vibration waveform (dotted line) in Fig. 29(a).

Here, the superposed vibration waveform (dotted line) in Fig. 29(a) is a vibration component that occurs on the vibrating body 405 due to the excitation of the vibrating body 405 by the contact body 406 (rotor), and is difficult to directly detect due to the superposition on the no-load vibration. However, since the phase of the superposed vibration waveform lags behind that of the peak of the waveform (dot-dashed line) of the current signal IA in Fig. 29(a) by a phase θs, the reference signal (solid line) in Fig. 29(b) can be generated using this relationship if θs is known. The second vibration component detection unit 16 selects θs based on the driving state, performs synchronous detection, and outputs the obtained average. Alternatively, the quotient of the value obtained by the synchronous detection, divided by the amplitude of the current signal IA, may be used as the second vibration component S.

θs values can be determined by measurement in advance depending on the amplitude of the current signal IA, the voltage amplitude of the alternating-current signal VB, and other conditions, and prepared in the form of a data table or a function.

While in the present example the reference signal is a pulsed signal, sinusoidal or other waveforms may be used.

Next, a seventh example of the detection of the second vibration component according to the second embodiment will be described.

Figs. 29(c) and 29(d) are diagrams for describing the seventh example of the detection of the second vibration component according to the second embodiment. Fig. 29(c) illustrates the waveform of the current signal IB under no load (solid line), a superposed vibration waveform (dotted line) to be superposed thereon, the waveform (broken line) of the current signal IB with the superposed vibration waveform (dotted line) superposed, and the waveform (dot-dashed line) of the current signal IA. Fig. 29(d) is a diagram illustrating how the superposed vibration waveform component is detected by integrating the waveform (broken line) of the current signal IB with the superposed vibration waveform (dotted line) superposed thereon over a predetermined phase interval.

The solid line in Fig. 29(d) is a gate signal that is -1 in a phase interval ($0° \pm d\theta$) about the phase 0° of the waveform of the current signal IB under no load (solid line) in Fig. 29(c), 1 in a phase interval ($180° \pm d\theta$) about the phase 180°, and 0 in other phase intervals. The broken line in Fig. 29(d) represents the result of multiplication of the broken-lined signal in Fig. 29(c) by this gate signal. The dotted line in Fig. 29(d) indicates the average of the multiplication result. This value varies with the amplitude of the superposed vibration waveform (dotted line) in Fig. 29(c).

Here, the no-load waveform (solid line) of the current signal IB in Fig. 29(c) can only be detected under no load. Phase differences $\theta X$ between the no-load waveform (solid line) of the current signal IB and the waveform (dot-dashed line) of the current signal IA in Fig. 29(c) for various vibration states are therefore set in advance in the form of a data table. For example, the phase difference $\theta x$ can be set in advance depending on the amplitude of the current signal IA, the voltage amplitude of the alternating-current signal VB, and other states.

The second vibration component detection unit 16 may simply output the value of the dotted line in Fig. 29(d) as the second vibration component S. The quotient by the amplitude of the current signal IA may be used as the second vibration component S.

Next, an eighth example of the detection of the second vibration component according to the second embodiment will be described.

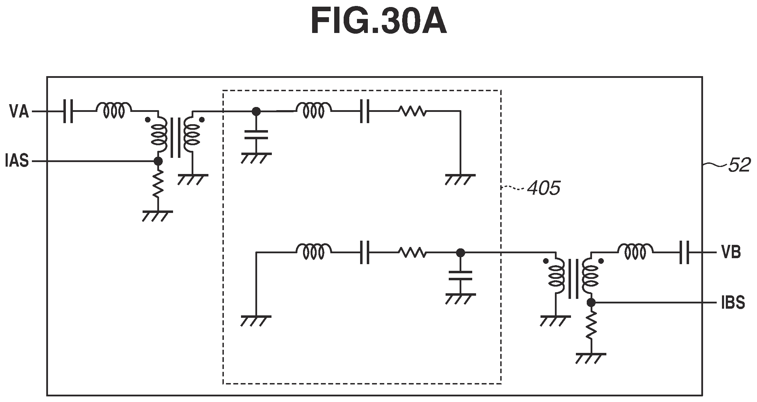

In the present example, the no-load current signal IB signal corresponding to the alternating-current signals VA and VB is generated using an equivalent current model for the vibrating body 405 and the driving circuit, and the superposed vibration waveform is extracted by subtracting this from the actually measured current signal IB. Fig. 30A illustrates a circuit example of the equivalent circuit model. A filter 52 simulates the operation of the equivalent circuit for the vibrating body 405 and the driving circuit under no load. The circuit diagram within the block includes series resonant circuits composed of inductors 13 and 14 and capacitors 11 and 12, transformers 7 and 8, an equivalent circuit for the vibrating body 405 including the piezoelectric bodies 403 and 404, and resistors 9 and 10 for current detection. The operation of these components is simulated by calculation. When the waveforms of the alternating-current signals VA and VB are input to the filter 52, a current signal IAS simulating the current signal IA and a current signal IBS simulating the current signal IB are output in real time.

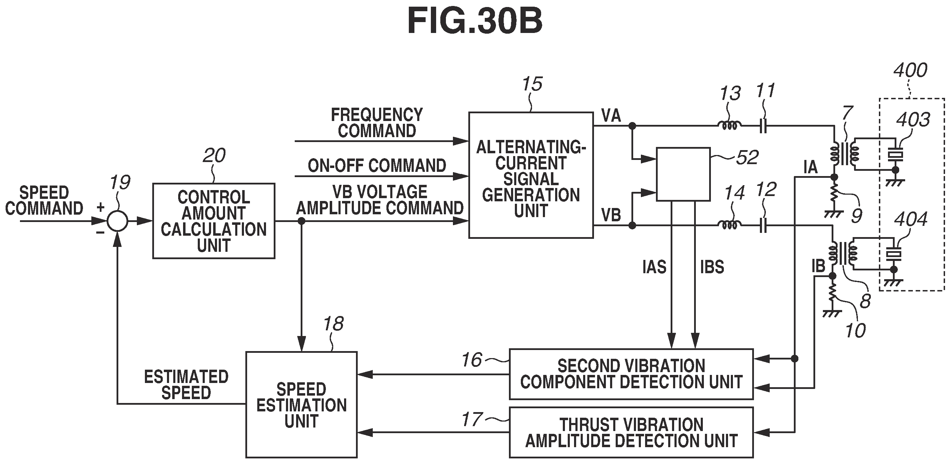

Fig. 30B is a diagram illustrating a second configuration example of the driving circuit of the vibration actuator 400 according to the second embodiment of the present invention, and illustrates an example where the second vibration component is detected using the filter 52. Components similar to those illustrated in Fig. 2 are denoted by the same reference numerals, and a detailed description thereof will be omitted. The alternating-current signals VA and VB output from the alternating-current signal generation unit 15 are input to the filter 52. In such a case, the filter 52 outputs the current signal IAS (first comparison signal) simulating the current signal IA under no load and the current signal IBS (second comparison signal) simulating the current signal IB under no load. The second vibration component detection unit 16 inputs the current signals IA and IB and the current signals IAS and IBS, and detects an amplitude SF of the superposed vibration waveform from a difference between the current signal IB (second detection signal) and the current signal IBS (second comparison signal).

As expressed by Eq. 47, the sign of a phase difference $\theta SA$ between the superposed vibration waveform and the current signal IA is applied as the sign of the amplitude SF of the superposed vibration waveform, and the resultant is output as the second vibration component S.

[Exp. 47]

$$S = Sign(\theta_{SA}) \cdot SF \qquad \text{Eq. 47}$$

There are also other methods for determining the second vibration component S. For example, signals obtained by multiplying the current signals IA and IAS by a coefficient $\alpha A$ will be referred to as current signals $\alpha IA$ and $\alpha IAS$, and signals obtained by multiplying the current signs IB and IBS by a coefficient $\alpha B$ will be referred to as current signals $\alpha IB$ and $\alpha IBS$. Then, a difference between the amplitude of the difference signal of (current signal $\alpha IA$ + current signal $\alpha IB$) and (current signal $\alpha IAS$ + current signal $\alpha IBS$) and that of the difference signal of (current signal $\alpha IA$ - current signal $\alpha IB$) and (current signal $\alpha IAS$ - current signal $\alpha IBS$) can also be used as the second vibration component S. Eq. 48 is a vector representation thereof.

[Exp. 48]

$$S = \left| \left( \alpha_A \overrightarrow{I_A} + \alpha_B \overrightarrow{I_B} \right) - \left( \alpha_A \overrightarrow{I_{AS}} + \alpha_B \overrightarrow{I_{BS}} \right) \right| - \left| \left( \alpha_A \overrightarrow{I_A} - \alpha_B \overrightarrow{I_B} \right) - \left( \alpha_A \overrightarrow{I_{AS}} - \alpha_B \overrightarrow{I_{BS}} \right) \right| \quad \text{Eq. 48}$$

Note that the outputs of the filter 52 do not need to be analog signals. For example, digital waveform information or phase information such as an amplitude and a phase may be output.

Next, the operation of the speed estimation unit 18 will be described.

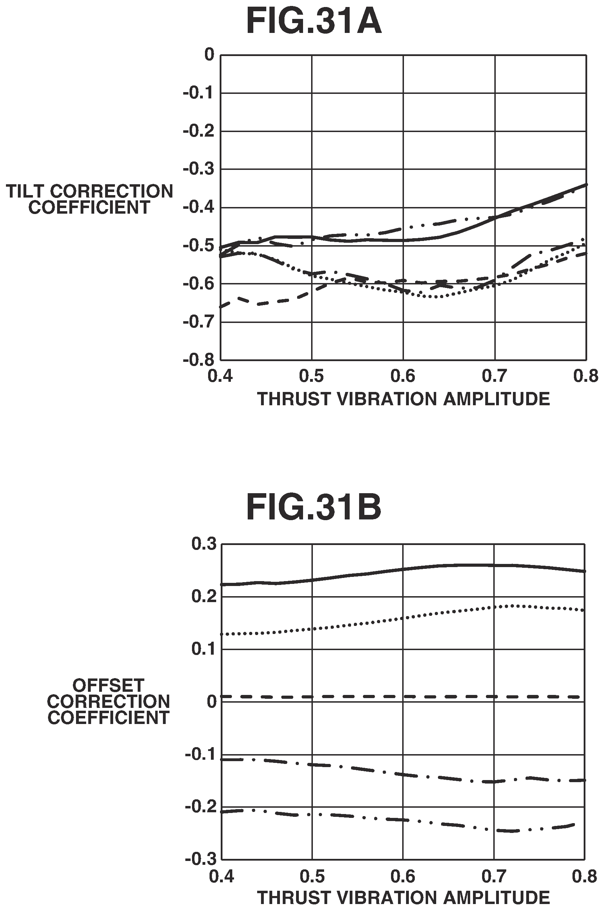

Figs. 31A and 31B are charts illustrating examples of correction coefficients for determining speed from the second vibration component S, and illustrate examples of the coefficients for each thrust amplitude and voltage amplitude of the alternating-current signal VB. Fig. 31A illustrates the relationship between the sensitivity correction coefficient $\gamma$ and the thrust amplitude, and Fig. 31B illustrates the relationship between the offset correction coefficient $\varepsilon$ and the thrust amplitude. The line types indicate representative ones of voltage amplitudes of the alternating-current signal VB: a solid line (100 V), a dotted line (50 V), a broken line (0 V), a dot-dashed line (-50 V), and a double-dot-dashed line (-100 V). Eq. 49 is an equation for estimating the speed VS from the value of the second vibration component S when the value of the second vibration component S changes linearly.

[Eq. 49]

$$V_S = \frac{S - \varepsilon}{\gamma} \quad \text{Eq. 49}$$

In such a manner, when the value of the second vibration component S changes linearly with the speed, the speed can be estimated using a simple equation, using the offset and sensitivity correction coefficients determined for each thrust amplitude and voltage amplitude of the alternating-current signal VB in advance. The characteristics of Figs. 31A and 31B may be stored as data tables, or in the form of functions T5 and T6 of the thrust vibration amplitude and the voltage amplitude of the alternating-current signal VB. The function T5 for the offset correction coefficient $\varepsilon$ is given by Eq. 50, and the function T6 for the sensitivity correction coefficient $\gamma$ by Eq. 51.

[Eq. 50]

$$\varepsilon = T_5(VB\ voltage\ amplitude, thrust\ vibration\ amplitude) \quad \text{Eq. 50}$$

[Eq. 51]

$$\gamma = T_6(VB\ voltage\ amplitude, thrust\ vibration\ amplitude) \quad \text{Eq. 51}$$

Figs. 31A and 31B are charts illustrating the relationship between the voltage amplitude of the alternating-current signal VB, the thrust vibration amplitude, and the correction coefficients. However, the frequency of the alternating-current signals VA and VB may be used instead of the threshold vibration amplitude. In such a case, the sensitivity correction coefficient $\gamma$ and the offset correction coefficient $\varepsilon$ are determined from the frequency of the alternating-current signals VA and VB during driving and the voltage amplitude of the alternating-current signal VB, using data tables or functions T7 and T8. The function T7 for the offset correction coefficient $\varepsilon$ is given by Eq. 52, and the function T8 for the sensitivity correction coefficient $\gamma$ by Eq. 53.

[Exp. 52]

$$\varepsilon = T_7(VB\ voltage\ amplitude, frequency) \quad \text{Eq. 52}$$

[Exp. 53]

$$\gamma = T_8(VB\ voltage\ amplitude, frequency) \quad \text{Eq. 53}$$

The foregoing description has dealt with an example where the speed is defined as a linear expression of the second vibration component S, and the speed is estimated using the offset correction coefficient $\varepsilon$ and the sensitivity correction coefficient $\gamma$. However, the relationship with the speed may be defined using polynomial approximation, trigonometric functions, or the like. In such a case, the coefficients of the terms are configured as functions with multiple arguments like the foregoing functions T5 to T8.

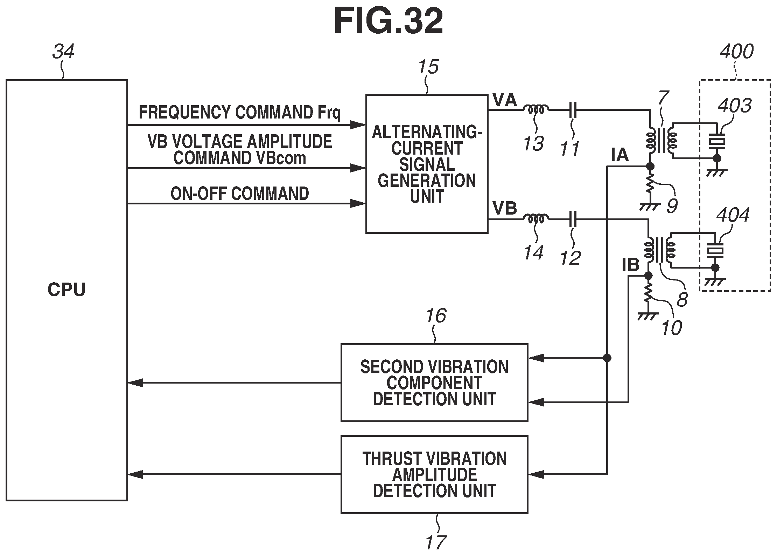

Fig. 32 is a diagram illustrating a third configuration example of the driving apparatus of the vibration actuator 400 according to the second embodiment of the present invention. Fig. 32 illustrates a case where the speed estimation unit and the speed-controlling portion of the driving apparatus in Fig. 24 are implemented by a conventional CPU 34.

Components similar to those illustrated in Fig. 24 are denoted by the same reference numerals, and a detailed description thereof will be omitted.

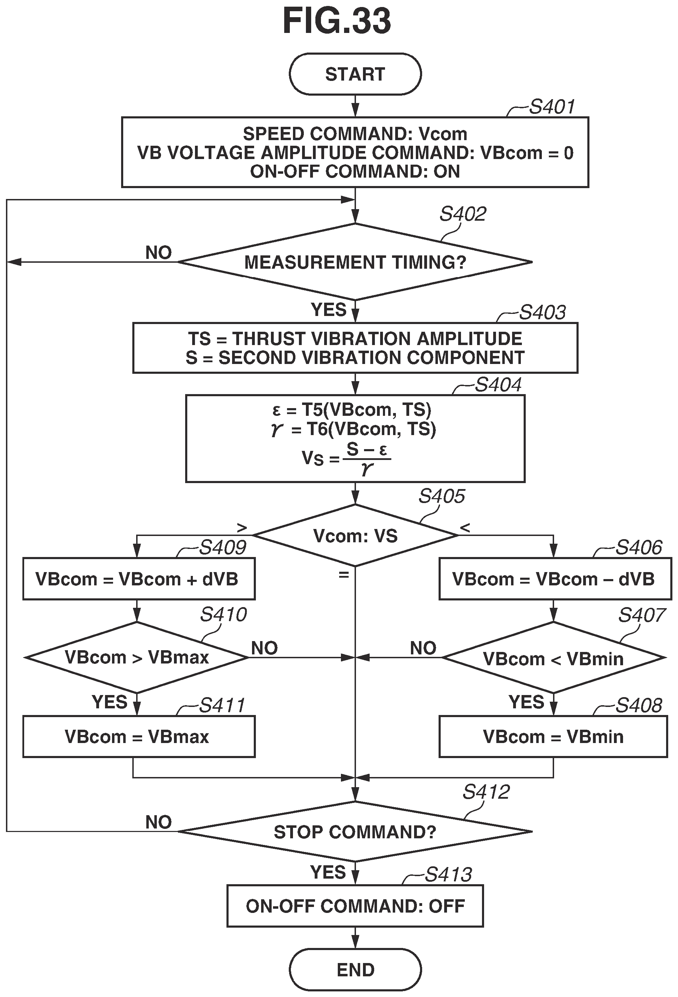

Fig. 33 is a flowchart illustrating the operation of the CPU 34, and illustrates control steps for controlling speed using the VB voltage amplitude. Frequency command control steps are similar to those described in the first embodiment, and a description thereof will thus be omitted.

First, in step S401, the CPU 34 sets a predetermined speed command Vcom, and sets a VB voltage amplitude command VBcom to an initial voltage of 0 and an ON-OFF command to ON.

Next, in step S402, the CPU 34 determines whether the measurement timing has come. If, as a result of this determination, the timing has not come (NO in step S402), the processing waits at step S402.

On the other hand, if, as a result of the determination in step S402, the measurement timing has come (YES in step S402), the processing proceeds to step S403.

In step S403, the CPU 34 acquires the second vibration component S output from the second vibration component detection unit 16 and the thrust vibration amplitude TS output from the thrust vibration amplitude detection unit 17.

Next, in step S404, the CPU 34 performs calculation based on the values of the thrust vibration amplitude TS acquired in step S403 and the VB voltage amplitude command VBcom. More specifically, the CPU 34 calculates the sensitivity correction coefficient $\gamma$ and the offset correction coefficient $\epsilon$ using these values, as well as the data tables and the functions T5 and T6 defined by calculation formulas or the like. The CPU 34 then calculates the speed VS using the second vibration component S acquired in step S403, the sensitivity correction coefficient y, and the offset correction coefficient $\epsilon$. In subsequent steps, the CPU 34 compares the foregoing speed command Vcom with the speed VS set in step S404, and controls the VB voltage amplitude command VBcom.

Next, the control of the VB voltage amplitude command VBcom will be described in steps S405 to S411.

In step S405, the CPU 34 compares the speed command Vcom set in step S401 with the speed VS calculated in step S404.

If, as a result of the comparison in step S405, the speed command Vcom is less than (<) the speed VS, the processing proceeds to step S406.

In step S406, the CPU 34 subtracts a predetermined voltage dVB from the VB voltage amplitude command VBcom.

Next, in step S407, the CPU 34 determines whether the VB voltage amplitude command VBcom is less than VBmin.

If, as a result of the determination in step S407, the VB voltage amplitude command VBcom is less than VBmin (YES in step S407), the processing proceeds to step S408.

In step S408, the CPU 34 sets the VB voltage amplitude command VBcom to VBmin.

If, as a result of the comparison in step S405, the speed component Vcom is greater than (>) the speed VS, the processing proceeds to step S409.

In step S409, the CPU 34 adds the predetermined voltage dVB to the VB voltage amplitude command VBcom.

Next, in step S410, the CPU 34 determines whether the VB voltage amplitude command VBcom is greater than VBmax.

If, as a result of the determination in step S410, the VB voltage amplitude command VBcom is greater than VBmax (YES in step S410), the processing proceeds to step S411.

In step S411, the CPU 34 sets the VB voltage amplitude command VBcom to VBmax.

When the processing of step S408 ends, when the processing of step S411 ends, or when the speed command Vcom is equal to (=) the speed VS in the comparison in step S405, the processing proceeds to step S412. Through repetition of the operation of these steps S405 to S411, the VB voltage amplitude command VBcom is controlled so that the speed VS approaches the speed command Vcom.

Next, in step S412, the CPU 34 determines whether a stop command is input. If, as a result of this determination, no stop command is input (NO in step S412), the processing returns to step S402, and the CPU 34 performs the processing of step S402 and subsequent steps.

On the other hand, if, as a result of the determination in step S412, a stop command is input (YES in step S412), the processing proceeds to step S413.

In step S413, the CPU 34 sets the ON-OFF command to OFF. As a result, the outputs of the alternating-current signals VA and VB output from the alternating-current signal generation unit 15 become 0 V, and the contact body 406 (rotor) of the vibration actuator 400 stops.

Once the processing of step S413 ends, the processing of the flowchart illustrated in Fig. 33 ends.

In the foregoing second embodiment, the value of the VB voltage amplitude command is described to be used as an argument for setting the correction coefficients. However, the amplitude ratio of the alternating-current signals VA and VB, the actually measured amplitude of the alternating-current signal VB, or the amplitude of the driving voltage generated based thereon may be used.

Torque (or force) can also be estimated from the speed VS that is estimated from the second vibration component S as in the first embodiment. The method will be described by using estimation of torque as an example; however, a method for detecting force acting between the vibrating body and the contact body is also similar.

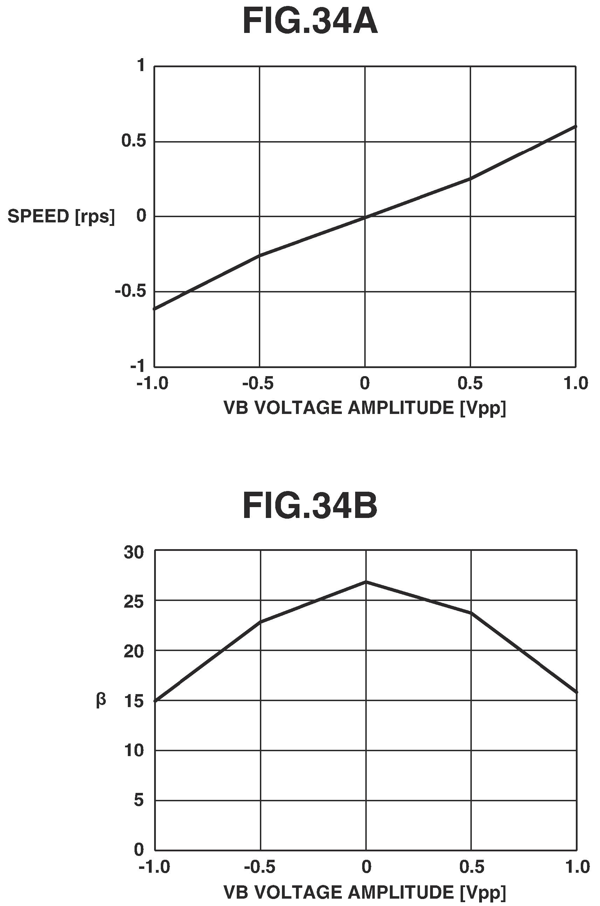

The speed when a predetermined torque T0 occurs and the gradient of a change in torque relative to a change in speed are determined in advance with respect to the voltage amplitude of the alternating-current signal VB. Fig. 34A is a chart illustrating the voltage amplitude of the alternating-current signal VB and the speed (reference speed: V0) when the torque has a predetermined value T0. Fig. 34B is a chart illustrating the ratio (β) of a change in torque to a change in speed. Torque TR can be determined using Eq. 54.

This reference speed: V0 is a reference value of speed.

[Exp. 54]

$$TR = T_0 + \beta_{(VB\ voltage)} \cdot \left(V_S - V_{0(T_0, VB\ voltage)}\right) \qquad \text{Eq. 54}$$

In the foregoing example, the speed is controlled by operating the voltage amplitude of the alternating-current signal VB with the phase difference between the alternating-current signals VA and VB fixed to 90°. However, the speed may be controlled by controlling the phase difference between the alternating-current signals VA and VB.

In the foregoing example, since the speed is controlled by operating the voltage amplitude of the alternating-current signal VB, the speed is estimated using the offset correction coefficient ε and the sensitivity correction coefficient γ with the VB voltage amplitude as a parameter, as in Eqs. 50 to 53. Similarly, in the case of controlling the speed using the phase difference between the alternating-current signals VA and VB, the speed needs to be estimated using an offset correction coefficient ε and a sensitivity correction coefficient γ with the phase difference as a parameter instead of the VB voltage amplitude.

Eq. 54 determines the torque using the reference speed: V0 and the ratio (β) of a change in torque to a change in speed with the VB voltage amplitude as a parameter. Again, the torque can be determined by using a reference speed V0 and the ratio (β) of a change in torque to a change in speed with the phase difference as a parameter instead of the VB voltage amplitude.

In the present embodiment, the piezoelectric body 403 excites expansion-contraction vibration in the vibrating body 405, and the piezoelectric body 404 excites torsional vibration in the vibrating body 405. Alternatively, similar effects can be obtained if the piezoelectric body 403 is configured to excite bending in the left-right direction in Fig. 23B, and the piezoelectric body 404 bending in the depth direction of the diagram. In such a case, the bending vibration excited by the piezoelectric body 403 serves as thrust vibration at the protrusions 480, and the bending vibration excited by the piezoelectric body 404 serves as feed vibration at the protrusions 480.

In the foregoing description, the speed is estimated using the thrust vibration amplitude detected by the thrust vibration amplitude detection unit 17, since the amplitude of the thrust vibration does not vary much with a change caused in the speed of the contact body 6 by the force acting on the contact body 6. However, the feed vibration amplitude may be used for speed estimation. The feed vibration amplitude can be detected by measuring the amplitude of the current signal IB.

[Third Embodiment]

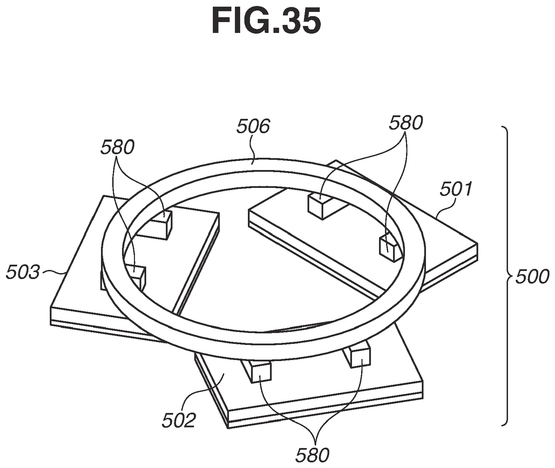

Fig. 35 is a diagram illustrating a schematic configuration of a vibration actuator 500 according to a third embodiment.

Vibrating bodies 501, 502, and 503 are the same as the vibrating body 5 illustrated in Figs. 1A to 1E, and contact an annular contact body 506 along its circumference at the contact surfaces of the respective protrusions 580. The propelling forces of the three vibrating bodies 501, 502, and 503 are combined for increased output torque.

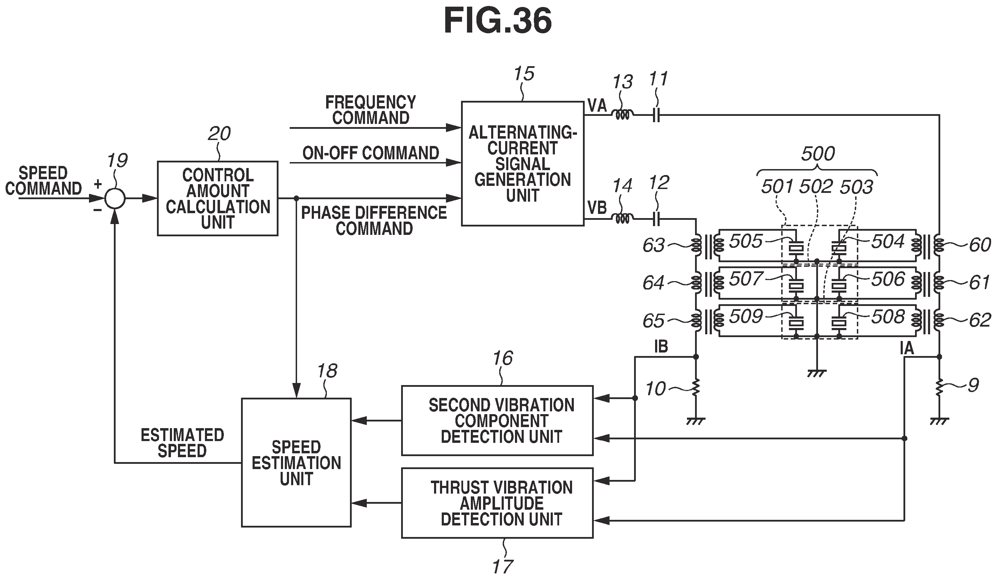

Fig. 36 is a diagram illustrating a first configuration example of a driving apparatus of the vibration actuator 500 according to the third embodiment of the present invention. Components similar to those illustrated in Fig. 2 are denoted by the same reference numerals, and a detailed description thereof will be omitted.

The vibrating body 501 includes piezoelectric bodies 504 and 505, the vibrating body 502 piezoelectric bodies 506 and 507, and the vibrating body 503 piezoelectric bodies 508 and 509, as excitation piezoelectric bodies. The piezoelectric bodies can be divided into respective A-phase piezoelectric bodies connected to an alternating-current signal VA via an inductor 13, a capacitor 11, and three transformers, and respective B-phase piezoelectric bodies connected to an alternating-current signal VB via an inductor 14, a capacitor 12, and three transformers.

The A-phase piezoelectric bodies are the piezoelectric bodies 504, 506, and 508, which are connected to the secondary windings of transformers 60, 61, and 62, respectively. The primary windings of the transformers 60, 61, and 62 are connected in series. One end of the series connection is connected to the capacitor 11, and the other to a resistor 9 for current detection.

Meanwhile, the B-phase piezoelectric bodies are the piezoelectric bodies 505, 507, and 509, which are connected to the secondary windings of transformers 63, 64, and 65, respectively. The primary windings of the transformers 63, 64, and 65 are connected in series. One end of the series connection is connected to the capacitor 12, and the other to a resistor 10 for current detection.

The resistor 9 detects a current signal IA corresponding to the vibration speed of the A-phase piezoelectric bodies, and the resistor 10 detects a current signal IB corresponding to the vibration speed of the B-phase piezoelectric bodies.

Since the vibrating bodies 501, 502, and 503 are driven in series connection, well-synchronized vibrations are generated when an alternating-current voltage is applied to the primary side of the transformers. Vibrations superposed on the respective vibrating bodies by excitation due to the frictional forces acting between the protrusions 580 of the vibrating bodies 501, 502, and 503 and the contact body 506 (rotor) also change in a well-synchronized manner. Since the vibrations of the vibrating bodies are well-synchronized, the vibrations of the vibrating bodies can be detected as a single vibration by detecting the current through the primary windings of the transformers as with the first embodiment.

In other words, also in the present embodiment where a plurality of vibrating bodies is connected in series and driven, the same techniques as the detection techniques of the second vibration component S described in the first embodiment can be used.

The third embodiment has dealt with an example where the plurality of vibrating bodies is connected to the transformers and connected in series, and voltages are applied across the transformers. However, the piezoelectric bodies of the plurality of vibrating bodies may be directly connected in series without the intermediary of transformers. Moreover, while in the foregoing example the vibrations are detected from the currents of the primary windings of the transformers, piezoelectric elements for vibration detection may be separately disposed on the vibrating bodies. In such a case, since the vibrations of the vibrating bodies are synchronized by the series connection, the second vibration component S can be detected by detecting the vibration of one of the vibrating bodies. Speed and torque can thus be estimated and controlled as with the foregoing embodiments.

[Fourth Embodiment]

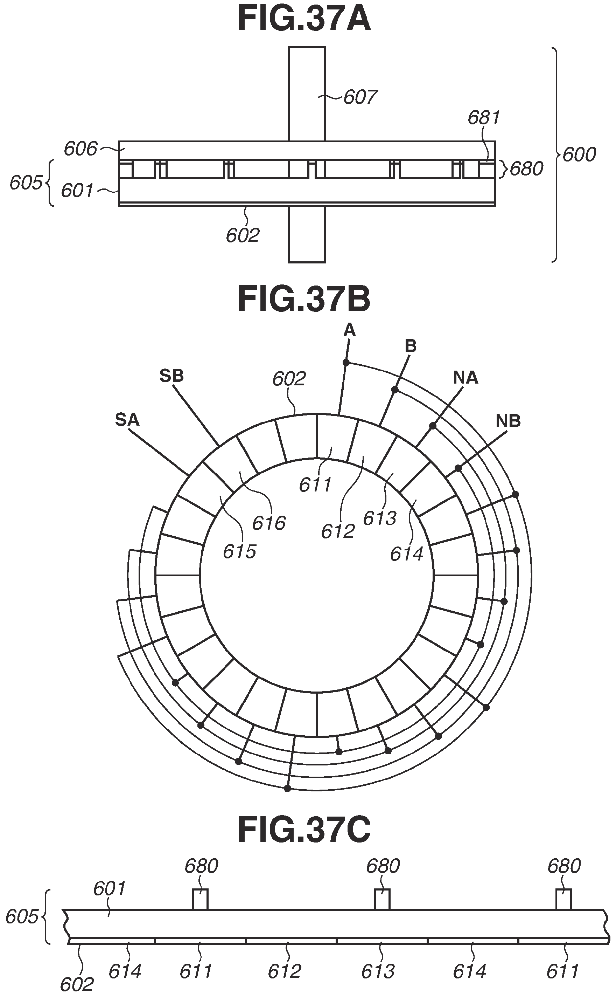

Fig. 37A is a diagram illustrating a schematic configuration of a vibration actuator 600 according to a fourth embodiment.

The vibration actuator 600 according to the fourth embodiment includes a vibrating body 605, a contact body 606 that is an annular rotor, and a rotating shaft 607 connected to the contact body 606 (rotor). The vibrating body 605 is an annular vibrating body made of a conductive material, and includes a piezoelectric element 602 and an elastic body 601 having protrusions 680 to contact the contact body 606 (rotor) on its annular top surface. The protrusions 680 include friction members 681 made of resin at the contact portions with the contact body 606 (rotor). The piezoelectric element 602 is a component that constitutes a part of the vibrating body 605 and is intended to excite the vibrating body 605.

Fig. 37B is a diagram illustrating an example of a plurality of electrode structures included in the piezoelectric element 602 illustrated in Fig. 37A and electric connection wiring.

As illustrated in Fig. 37B, the piezoelectric element 602 is provided with 24 electrodes circumferentially arranged at equal distances. Every fourth electrode of the piezoelectric element 602 along the circumference is electrically connected by the connection wiring. The regions of the piezoelectric element 602 where groups of mutually connected electrodes are located will be referred to, connection by connection, as piezoelectric bodies 611, piezoelectric bodies 612, piezoelectric bodies 613, and piezoelectric bodies 614.

The piezoelectric bodies 611 are located circumferentially at intervals of 60°, and when an alternating-current voltage A is applied, form six waves of out-of-plane flexural vibration along the circumference of the vibrating body 605. When an alternating-current voltage B, an alternating-current voltage NA, and an alternating-current voltage NB that are 90° shifted in phase in order from the alternating-current voltage A are applied to the piezoelectric bodies 612, the piezoelectric bodies 613, and the piezoelectric bodies 614, respectively, six-wave out-of-plane progressive vibration waves are also formed on the vibrating body 605. The six-wave progressive vibration waves produce a relative force between the protrusions 680 of the vibrating body 605 and the contact body 606 (rotor), whereby the contact body 606 (rotor) is rotated.

The piezoelectric element 602 is provided with a plurality of electrodes for vibration detection. The regions of the piezoelectric element 602 where these electrodes are located will be referred to as a piezoelectric body 615 and a piezoelectric body 616. The piezoelectric body 615 detects vibration excited by the piezoelectric bodies 611 and the piezoelectric bodies 613, and outputs a vibration detection signal SA. The piezoelectric body 616 detects vibration excited by the piezoelectric bodies 612 and the piezoelectric bodies 614, and outputs a vibration detection signal SB.

Fig. 37C is a diagram illustrating a first example of the positional relationship between the piezoelectric bodies 611 to 614 and the protrusions 680. The protrusions 680 are disposed at the centers of the electrode sections of the piezoelectric bodies 611 and the piezoelectric bodies 613 connected to the alternating-current voltage A and the alternating-current voltage NA. The excitation by the piezoelectric bodies 611 and 613 will be referred to as A-phase excitation, and the excitation by the piezoelectric bodies 612 and 614 as B-phase excitation. The A-phase excitation excites thrust vibration for thrusting up the protrusions 680 toward the contact body 606. The B-phase excitation excites feed vibration for driving the contact body 606 in tangential directions of the contact surfaces of the protrusions 680.

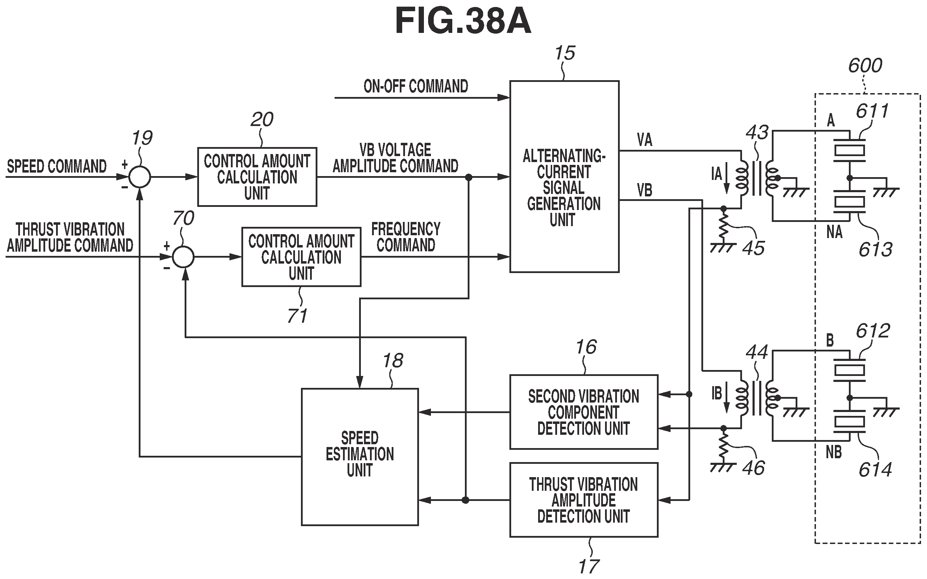

Fig. 38A is a diagram illustrating a first configuration example of a driving apparatus of the vibration actuator 600 according to the fourth embodiment of the present invention. Components similar to those illustrated in Fig. 24 are denoted by the same reference numerals, and a detailed description thereof will be omitted.

The vibration actuator 600 is an actuator driven by the four-phase alternating-current voltages. The alternating-current voltages A and NA, as well as the alternating-current voltages B and NB, are opposite-phase alternating-current voltages with mutually inverted phases. The pairs of piezoelectric bodies 611 and 613 and the pairs of piezoelectric bodies 612 and 614 to which the opposite-phase alternating-current voltages are applied are connected to the center-tapped secondary windings of transformers 43 and 44. An alternating-current signal VA and an alternating-current signal VB, which are the outputs of an alternating-current signal generation unit, are applied to one end of each of the primary windings of the transformers 43 and 44. Resistors 45 and 46 for current detection are connected to the other ends.

A current signal IA and a current signal IB that are signals detected by the resistors 45 and 46 are input to a second vibration component detection unit 16 and a thrust vibration amplitude detection unit 17. A second vibration component S and a thrust vibration amplitude are then detected through the operation described in the foregoing second embodiment, and the rotation speed of the contact body 606 (rotor) is detected by a speed estimation unit 18. A comparison unit 19 then compares the detected rotation speed with a speed command from a not-illustrated command unit. A control amount calculation unit 20 generates a VB voltage amplitude command signal based on the comparison result, whereby the voltage amplitude of the alternating-current signal VB is controlled to control the rotation speed.

In the fourth embodiment, the thrust vibration amplitude is also controlled aside from the speed control. A comparison unit 70 compares the output of the thrust vibration amplitude detection unit 17 with a thrust vibration amplitude command from the not-illustrated command unit. The output of the comparison unit 70 is then input to a control amount calculation unit 71, and a frequency command signal is generated by proportional-integral calculation. The alternating-current signal generation unit 15 then sets the frequency of the alternating-current signals VA and VB based on the frequency command signal, whereby the thrust vibration amplitude is controlled.

With the thrust vibration amplitude controlled to be constant, the contact state between the contact body 606 (rotor) and the vibrating body 605 is stabilized, and the stability of the speed estimation can be improved.

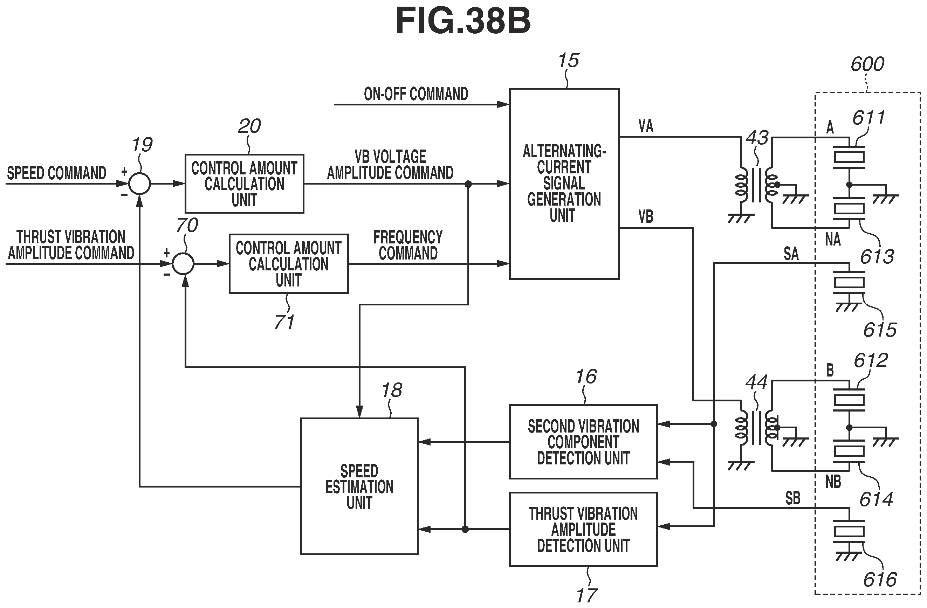

Fig. 38B is a diagram illustrating a second configuration example of the driving apparatus of the vibration actuator 600 according to the fourth embodiment of the present invention. Components similar to those illustrated in Fig. 38A are denoted by the same reference numerals, and a detailed description thereof will be omitted.

In the first configuration example of the driving apparatus of the vibration actuator 600 according to the fourth embodiment, vibration is described to be detected using the current signals IA and IB. In the second configuration example, vibration is detected using the piezoelectric bodies 615 and 616. The piezoelectric body 615 outputs a vibration detection signal SA, and the piezoelectric body 616 outputs a vibration detection signal SB. Since vibration is directly detected instead of the current signals, the accuracy of speed estimation can be improved.

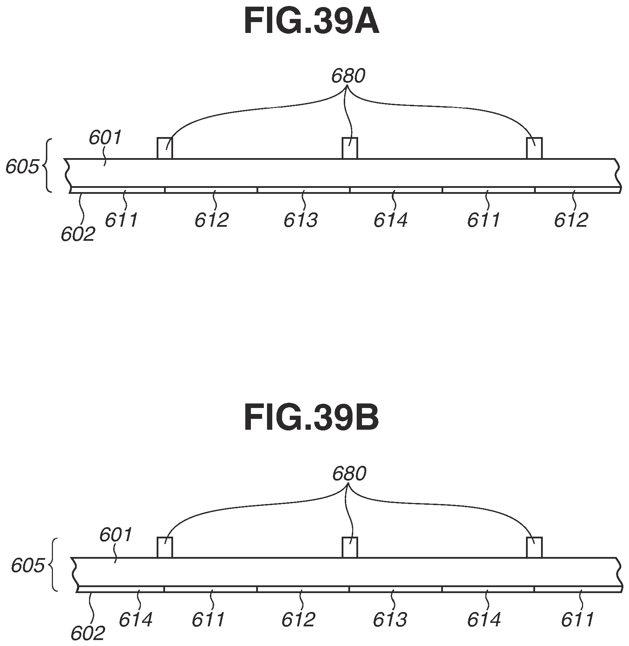

Fig. 39A is a diagram illustrating a second example of the positional relationship between the piezoelectric bodies 611 to 614 and the protrusions 680. The protrusions 680 in Fig. 39A are located between the electrode sections of the piezoelectric bodies 611 and 612 to which the alternating-current voltages A and B are connected, and between the electrode sections of the piezoelectric bodies 613 and 614 to which the alternating-current voltages NB and NA are connected. With the excitation by the piezoelectric bodies 611 and 613 as A-phase excitation and the excitation by the piezoelectric bodies 612 and 614 as B-phase excitation, thrust vibration is excited by the sum component of the A-phase excitation and the B-phase excitation. Feed vibration is excited by the difference component of the A-phase excitation and the B-phase excitation.

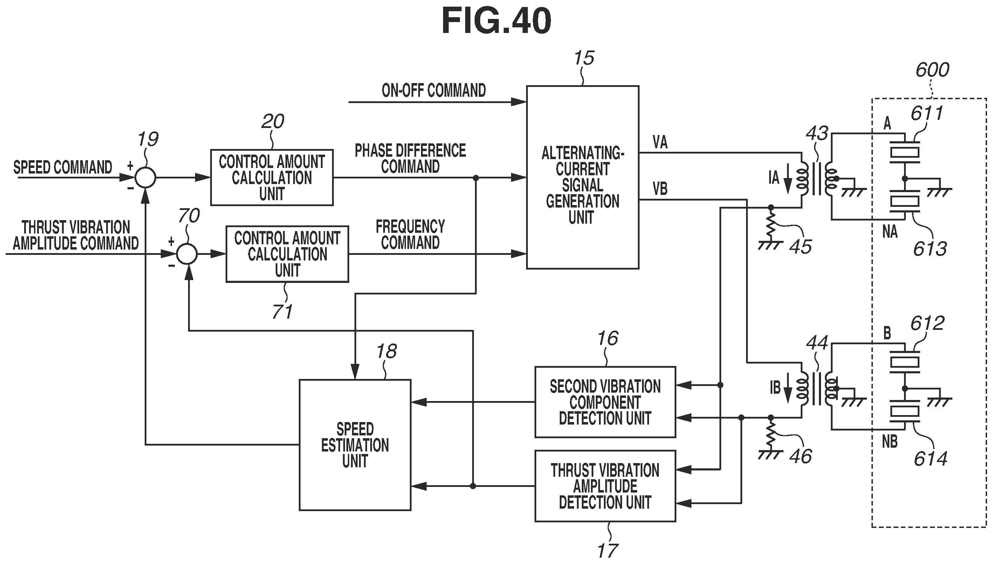

Fig. 40 is a diagram illustrating a third configuration example of the driving apparatus of the vibration actuator 600 according to the fourth embodiment of the present invention. Components similar to those illustrated in Fig. 2 are denoted by the same reference numerals, and a detailed description thereof will be omitted. A description of cases where the vector operation and other techniques described above are used will also be omitted.

The connection between the vibration actuator 600 and the transformers 43 and 44 and the connection of the resistors 45 and 46 are similar to those in the first configuration example of the driving apparatus of the vibration actuator 600 according to the fourth embodiment. Meanwhile, the connection of the current signals IA and IB to the second vibration component detection unit 16 and the thrust vibration amplitude detection unit 17 are different, since the positions of the protrusions 680 on the vibrating body 605 differs from that in the first configuration example of the driving apparatus of the vibration actuator 600 according to the fourth embodiment.

The current signals IA and IB are input to both the second vibration component detection unit 16 and the thrust vibration amplitude detection unit 17. (Current signal IA + current signal IB) represents the thrust vibration component, and (current signal IB - current signal IB) represents the feed vibration component. The second vibration component S and the thrust vibration amplitude are detected through the operation described in the foregoing first embodiment. The speed estimation unit 18 then detects the rotation speed of the contact body 606 (rotor).

Fig. 39B is a diagram illustrating a third example of the positional relationship between the piezoelectric bodies 611 to 614 and the protrusions 680.

The protrusions 680 are located between the electrode sections of the piezoelectric bodies 611 and 614 to which the alternating-current voltages A and NB are connected, and between the electrode sections of the piezoelectric bodies 612 and 613 to which the alternating-current voltage B and NA are connected. With the excitation by the piezoelectric bodies 611 and 613 as A-phase excitation and the excitation by the piezoelectric bodies 612 and 614 as B-phase excitation, thrust vibration is excited by the difference component of the A-phase excitation and the B-phase excitation. Feed vibration is excited by the sum component of the A-phase excitation and the B-phase excitation.

The case where the protrusions 680 of the vibration actuator 600 are located as illustrated in Fig. 39B will now be described. If this is driven by the driving apparatus of Fig. 40, contrary to the foregoing description, (current signal IA - current signal IB) represents a thrust vibration component and (current signal IA + current signal IB) a feed vibration component. The operations of the second vibration component detection unit 16 and the thrust vibration amplitude detection unit 17 thus use the reversed signals accordingly.

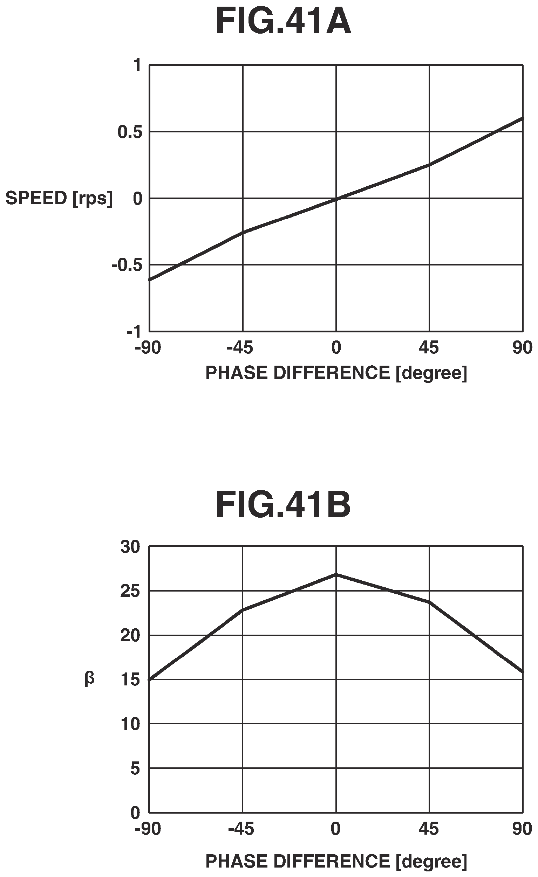

Even in the present embodiment, like the foregoing embodiments, torque can be estimated based on the estimated speed. The speed when a predetermined torque T0 occurs and the gradient of a change in torque to a change in speed are determined in advance with respect to the phase difference between the alternating-current signals VA and VB. Fig. 41A is a chart illustrating the phase difference between the alternating-current signals VA and VB and the speed (reference speed: V0) when the torque has a predetermined value T0. Fig. 41B is a chart illustrating the ratio (β) of a change in torque to a change in speed. Torque TR can be determined using Eq. 55.

[Exp. 55]

$$TR = T_0 + \beta_{(phase\ difference)} \cdot \left(V_S - V_{0(T_0, phase\ difference)}\right) \qquad \text{Eq. 55}$$

[Fifth Embodiment]

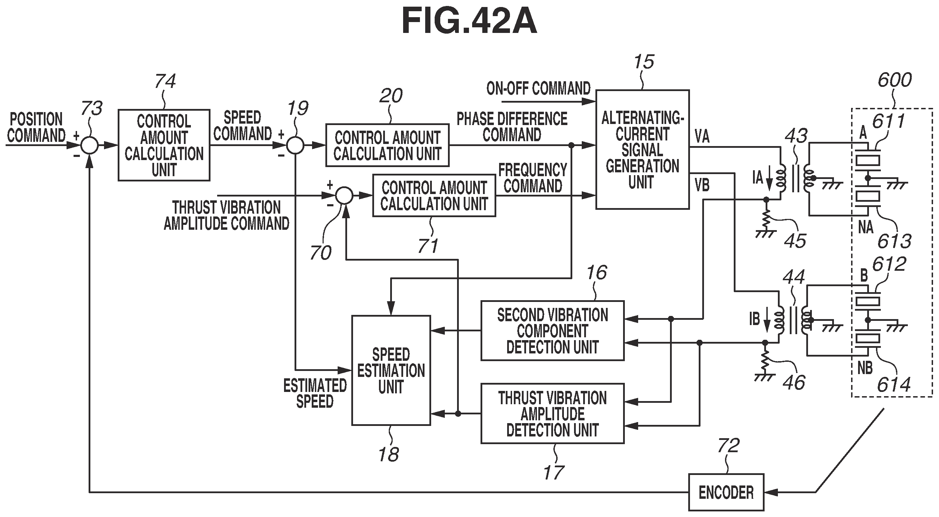

The foregoing embodiments have dealt with the control apparatuses that estimate speed or torque and control the speed or torque based on a speed or torque command value. The present embodiment describes an example where position control is performed using an estimated value of speed or estimated values of speed and torque. Fig. 42A is a diagram illustrating a first configuration example of a driving apparatus of a vibration actuator 600 according to a fifth embodiment of the present invention. Fig. 42A illustrates an example where minor-loop control of speed is applied to position control, where speed control using an estimated speed value according to the present invention is performed instead of detecting speed from differential information about a detected position.

Components similar to those illustrated in Fig. 40 are denoted by the same reference numerals, and a detailed description thereof will be omitted. A rotary encoder 72 is intended to detect a rotational position of the vibration actuator 600. A comparison unit 73 compares the position detected by the rotary encoder 72 with a position command from a not-illustrated command unit. The positional deviation is input to a control amount calculation unit 74 to generate a speed command signal.

Next, a comparison unit 19 compares the speed command signal with an estimated speed from the speed estimation unit 18. The comparison result is subjected to proportional-integral (PI) calculation by a control amount calculation unit 20, whereby a phase difference command signal is generated. In such a manner, the phase difference between the alternating-current signals VA and VB output from the alternating-current signal generation unit 15 is controlled, and speed and position are controlled.

The speed estimated by the speed estimation unit 18 is detected from the vibration amplitude of the vibrating body 605, and can thus be quickly detected even in a stopped state. This enables speed estimation in a short time after the alternating-current signal generation unit 15 is given an ON command by the ON-OFF signal from the not-illustrated command unit. To describe this effect, a description will be given of operation in a case of starting up the vibration actuator 600 from a state where the ON-OFF signal is OFF, torque is acting on the rotating shaft 607, and the vibration actuator 600 remains stationary due to a holding torque from the frictional force between the vibrating body 605 and the contact body 606.

First, suppose that the ON-OFF signal is switched from an OFF state to an ON state in a state in which the position command and the current position are the same. Since the positional deviation from the position command is 0, the alternating-current signal generation unit 15 then generates the alternating-current signals VA and VB with a phase difference of 0°. Next, the frequency of the alternating-current signals VA and VB approaches the resonant frequency of the vibrating body 605 based on the thrust vibration amplitude command, and the thrust vibration amplitude approaches a predetermined amplitude. Once the vibration amplitude of the vibrating body 605 reaches a certain level, the reduced frictional force between the vibrating body 605 and the contact body 606 falls below the torque acting on the rotating shaft 607, and the rotating shaft 607 starts to rotate. Here, the position is controlled depending on the position deviation and the estimated speed value, and the rotating shaft 607 returns to the starting position.

If this operation is performed using proportional-integral-derivative (PID) control of position, there would be a time delay in detecting the positional deviation due to the rigidity between the rotary encoder 72 and the contact body 606 and the resolution of the rotary encoder 72, resulting in a large deviation from the initial position. By contrast, in the case of using the estimated speed value, the deviation from the initial position can be reduced since the speed can be detected without being affected by the rigidity between the rotary encoder 72 and the contact body 606 or the resolution of the rotary encoder 72.

In the configuration of Fig. 42A, the control amount calculation unit 74 generates the speed command. Alternatively, a configuration may be employed to control the torque by generating a torque command and determining torque from information obtained by subtracting the reference speed from the estimated speed and multiplying the difference by the ratio ($\beta$) of a change in torque to a change in speed as described in the foregoing embodiments.

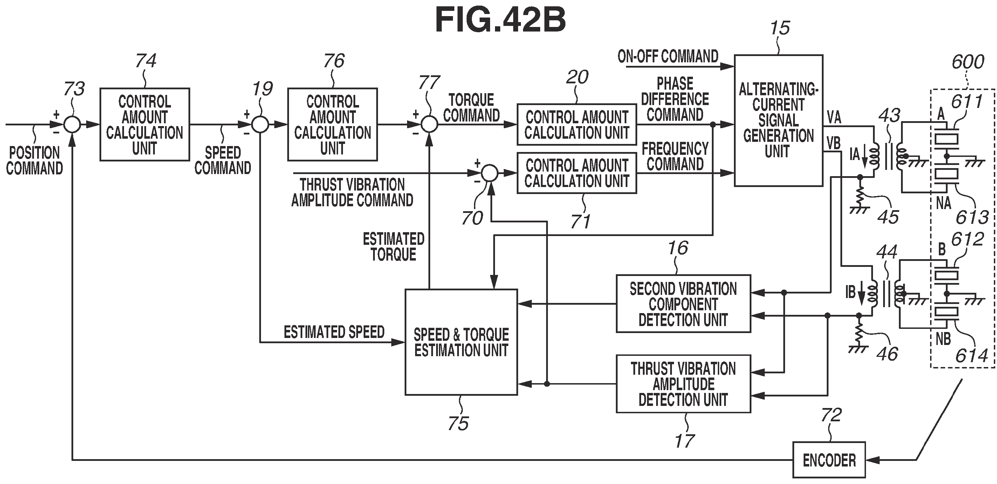

Fig. 42B is a diagram illustrating a second configuration example of the driving apparatus of the vibration actuator 600 according to the fifth embodiment of the present invention. Components similar to those illustrated in Fig. 42A are denoted by the same reference numerals, and a detailed description thereof will be omitted. A speed & torque estimation unit 75 inputs the detected second vibration component superposed on the vibrating body 605 and a component corresponding to the vibration amplitude in the direction in which the vibrating body 605 thrusts up the contact body 606, and estimates the rotation speed of the contact body 606 and the torque between the vibrating body 605 and the contact body 606. A control amount calculation unit 76 inputs a result of comparison between the speed command signal, the estimated speed from the speed & torque estimation unit 75, and the speed command signal from the control amount calculation unit 74, and performs PI calculation to generate a torque command signal. A comparison unit 77 compares the torque command signal with the estimated torque from the speed & torque estimation unit 75. The comparison result is input to the control amount calculation unit 20, and a phase difference command signal is generated by PI operation.

Compared to the configuration of Fig. 42A, the configuration of Fig. 42B includes an additional torque control loop, which enables faster control than with the configuration of Fig. 42A. That is, considering the starting state mentioned above, the magnitude of the externally applied torque can be detected in a state where the speed changes only slightly. This enables faster control than with the speed control loop alone.

[Sixth Embodiment]

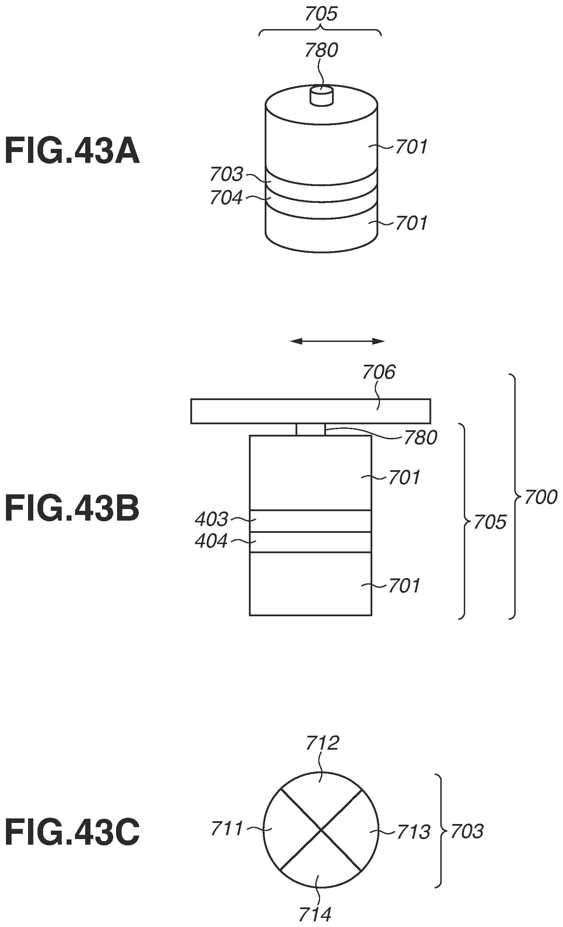

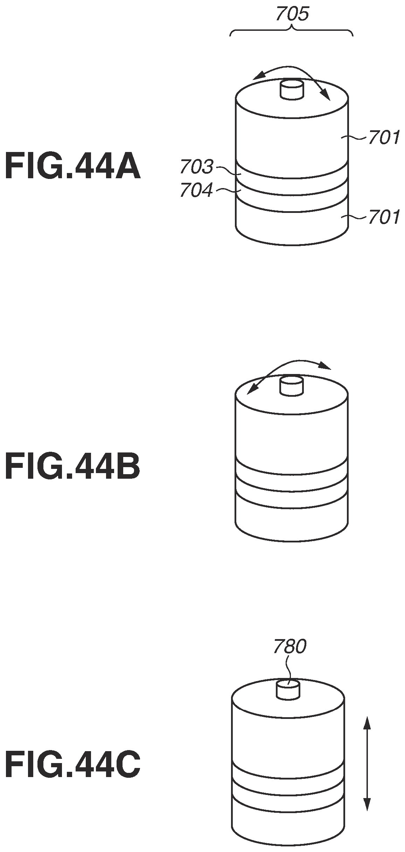

Figs. 43A to 43C are diagrams illustrating an example of a schematic configuration of a vibration actuator 700. Figs. 44A to 44C are diagrams illustrating vibration modes of the vibration actuator 700. The schematic configuration and operation principle of the vibration actuator 700 according to the sixth embodiment will now be described with reference to Figs. 43A to 43C and 44A to 44C.

As illustrated in Fig. 43B, the vibration actuator 700 according to the sixth embodiment includes a vibrating body 705 and a contact body 706. As illustrated in Fig. 43A, the vibrating body 705 is a cylindrical vibrating body made of a conductive material, and includes a piezoelectric body 703, a piezoelectric body 704, and elastic bodies 701 that sandwich these piezoelectric bodies from above and below and have a protrusion 780 at the cylinder top. As illustrated in Fig. 44C, the piezoelectric body 704 excites vibration that causes the vibrating body 705 to expand and contract in the height direction of the cylinder (expansion-contraction vibration mode). The piezoelectric body 703 is configured to excite two bending vibrations so that the vibrating body 705 bends in two orthogonal directions as illustrated in Figs. 44A and 44B. The piezoelectric bodies 703 and 704 are sandwiched and fixed between the elastic bodies 701 with a not-illustrated fastening member.

The contact body 706 illustrated in Fig. 43B is a plate-shaped moving body that is pressed into contact with the protrusion 780 of the vibrating body 705 at a constant pressing force and supported to be movable in the direction of the arrow (X direction) and the depth direction (Y direction) in the diagram by a not-illustrated pressing mechanism. This contact body 706 can be moved in any direction within the XY plane by the vibration excited in the vibrating body 705. Fig. 43C illustrates the layout of electrodes disposed on the piezoelectric body 703. The electrodes are insulated from each other. The electrodes are divided into four sectors of a circle. Electrodes 711 and 713 are electrodes for exciting a bending vibration of the vibrating body 705 in the X direction, and electrodes 712 and 714 are electrodes for exciting a bending vibration in the Y direction. In the following description, the electrodes 711, 712, 713, and 714 will be referred to as piezoelectric bodies 711, 712, 713, and 714.

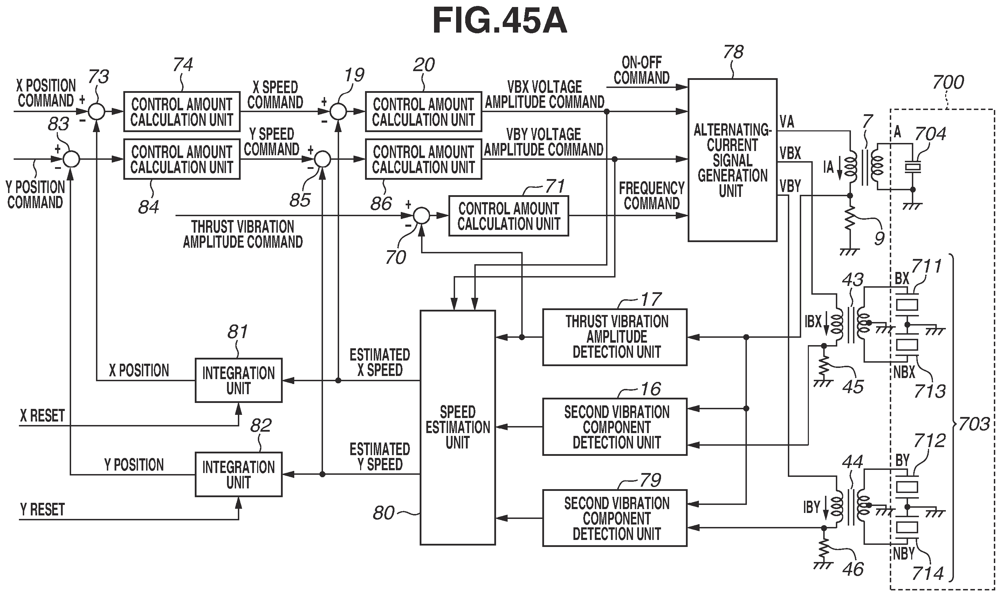

Fig. 45A is a diagram illustrating a first configuration example of a driving apparatus of the vibration actuator 700 according to the sixth embodiment, and illustrates a configuration of a control apparatus that controls the position of the contact body 706 within the XY plane.

An alternating-current voltage generation unit 78 outputs alternating-current signals VA, VBX, and VBY based on a frequency command from a control calculation unit 71, a VBX voltage amplitude command output from a control amount calculation unit 20, and a VBY voltage amplitude command output from a control calculation unit 86. The alternating-current signals VA and VBX, as well as the alternating-current signals VA and VBY, are signals with 90° different phases. The alternating-current signal VA is set to a predetermined amplitude, and the alternating-current signals VBX and VBY are set to amplitudes based on the VBX and VBY voltage amplitude commands, respectively. If the VBX and VBY voltage amplitude commands have negative values, the alternating-current signals VBX and VBY are output with their polarity inverted.

The alternating-current signal VA is connected to the primary winding of a transformer 7, and a resistor 9 for current detection is connected to the other end. A boosted alternating-current voltage A is applied to the piezoelectric body 704 of the vibration actuator 700 connected to the secondary winding. The alternating-current signals VBX and VBY are connected to the primary windings of transformers 43 and 44, and resistors 45 and 46 for current detection are connected to the other ends, respectively. A boosted alternating-current voltage BX and an alternating-current voltage VBX of inverted phase are then applied to the piezoelectric bodies 711 and 713 connected to the secondary winding. Similarly, a boosted alternating-current voltage BY and an alternating-current voltage VBY of inverted phase are applied to the piezoelectric bodies 712 and 714 connected to the secondary winding of the transformer 44.

Here, the inductances of the secondary windings of the transformers 7, 43, and 44 are frequency-matched with the damping capacitances of the piezoelectric bodies 704 and 711 to 714. As a result, currents substantially proportional to the vibration strain rates of the piezoelectric bodies 704 and 711 to 714 flow through the primary windings of the transformers 7, 43, and 44. The resistors 9, 45, and 46 convert the currents flowing through the primary windings of the connected transformers into voltages to generate current signals IA, IBX, and IBY.

The current signals represent respective different vibration states. The current signal IA (first detection signal) represents the expansion-contraction vibration mode (thrust vibration mode) of the vibrating body 704. The current signal IBX(second detection signal (X)) represents the bending vibration mode of the vibrating bodies 711 and 713 in the X direction (X-direction feed vibration mode), and the current signal IBY (second detection signal (Y)) represents the bending vibration mode of the vibrating bodies 712 and 714 in the Y direction (Y-direction feed vibration mode).

Next, a configuration related to speed estimation and control will be described. A thrust vibration amplitude detection unit 17 inputs the current signal IA, and detects the thrust vibration amplitude. A second vibration component detection unit 16 and a second vibration component detection unit 79 input the current signals IBX and IBY, and detect an X-direction component and a Y-direction component of the second vibration component, respectively. The X- and Y-direction components of the second vibration component detected here, the vibration amplitude of the vibrating body 704 in the expansion-contraction mode (threshold vibration mode), and the values of the VBX and VBY voltage amplitude commands are input to a speed estimation unit 80. Based on these inputs, the speed estimation unit 80 detects a speed in the X direction (estimated X speed) and a speed in the Y direction (estimated Y speed).

The estimated X and Y speeds detected are integrated by an integral unit 81 and an integral unit 82 and converted into an X position and a Y position, respectively. The X and Y positions indicate amounts of change (deviations) from an initial value of the integral unit 82. A comparison unit 73 and a comparison unit 83 compare the X and Y positions with an X-position command and a Y-position command from a not-illustrated command unit, respectively. Based on the respective comparison results, a control amount calculation unit 74 and a control amount calculation unit 84 generate an X speed command and a Y speed command. Next, a comparison unit 19 and a comparison unit 85 compare the X and Y speed commands with the estimated X and Y speeds, respectively. Based on the respective comparison results, the control amount calculation units 20 and 86 generate the VBX and VBY voltage amplitude commands. The control apparatus operating thus controls the positions of the contact body 706 in the X direction and Y direction.

Integration errors accumulated in the integral unit 81 and the integral unit 82 can be reset from the outside using an X reset signal and a Y reset signal, respectively.

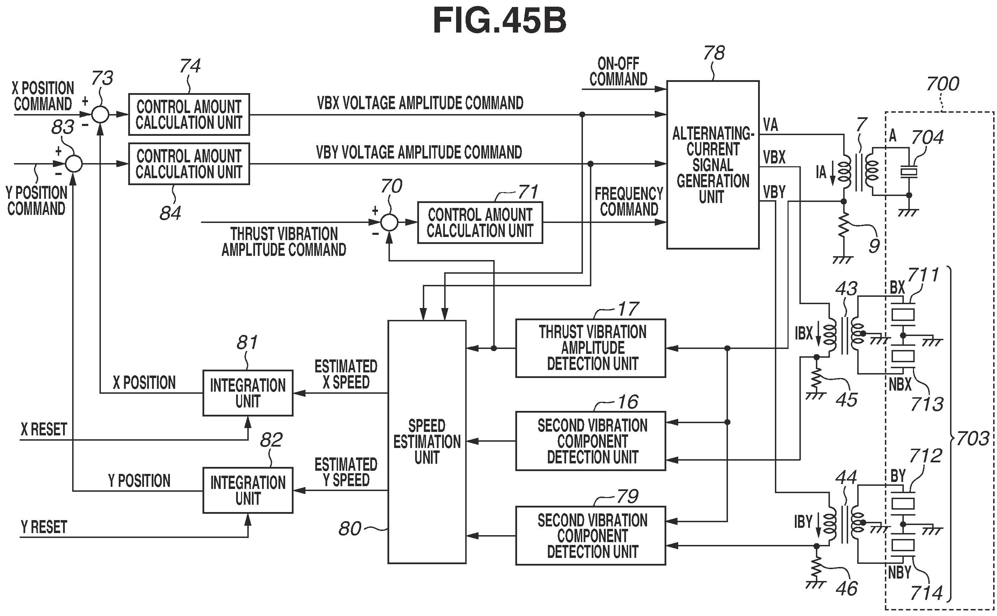

Fig. 45B is a diagram illustrating a second configuration example of the driving apparatus of the vibration actuator 700 according to the sixth embodiment. The configuration is that of Fig. 45A from which the minor loop control system for speed is deleted.

The control amount calculation units 74 and 84 perform PID control calculation to generate the VBX and VBY voltage amplitude commands.

The present invention is not limited to the foregoing embodiments, and various changes and modifications can be made without departing from the spirit and scope of the present invention. The following claims are therefore appended to make public the scope of the present invention.

This application claims the benefit of Japanese Patent Application No. 2023-139406, filed August 30, 2023, which is hereby incorporated by reference herein in its entirety.

Reference Signs List

# EP 4 773 500 A1

100, 200, 300, 400, 500, 600, 700 vibration actuator
*5*, 205, 305, 405, 501, 502, 503, 605, 705 vibrating body
6, 206, 306, 406, 506, 606, 706 contact body
80, 280, 380, 480, 580, 680, 780 protrusion
15, 78 alternating-current signal generation unit
16, 79 second vibration component detection unit
17 thrust vibration amplitude detection unit
18, 80 speed estimation unit
75 speed & torque estimation unit
19, 70, 73, 77, 83, 85 comparison unit
20, 71, 74, 76, 84, 86 control amount calculation unit
3, 4, 203, 204, 303, 304, 403, 404, 504 to 509, 611 to 614, 703, 704, 711 to 714 piezoelectric body
9, 10, 45, 46 resistor
7, 8, 43, 44, 61 to 65 transformer
34 CPU
50, 52 filter

## Claims

1. A control apparatus of a vibration actuator, the control apparatus comprising:

   a vibrating body including an elastic body and an electromechanical energy conversion element; and
   a contact body configured to contact the elastic body,
   wherein the vibrating body and the contact body are configured to move relatively in a predetermined moving direction due to vibration of the vibrating body,
   wherein the vibration includes:

   a first vibration component generated in the vibrating body by a voltage applied to the electromechanical energy conversion element; and
   a second vibration component occurring on the vibrating body due to contact of the contact body and the elastic body, and
   wherein the control apparatus is configured to detect a signal corresponding to the second vibration component and detect a relative speed between the vibrating body and the contact body based on the signal.

2. The control apparatus according to Claim 1,

   wherein the electromechanical energy conversion element is configured such that a first driving voltage based on a first signal and a second driving voltage based on a second signal are respectively applied thereto,
   wherein the first vibration component includes:

   a driving vibration in a first direction occurring based on one of a sum and a difference of a third vibration component occurring due to the first driving voltage and a fourth vibration component occurring due to the second driving voltage, and a driving vibration in a second direction occurring based on the other thereof,
   wherein the second vibration component includes at least one of the driving vibration in the first direction and the driving vibration in the second direction, and
   wherein the signal corresponding to the second vibration component is configured to detect the signal corresponding to the second vibration component based on a first detection signal configured to detect a vibration in a same direction as that of the third vibration component and a second detection signal configured to detect a vibration in a same direction as that of the fourth vibration component.

3. The control apparatus according to Claim 2, wherein the signal corresponding to the second vibration component is detected from a difference between an amplitude of the first detection signal and an amplitude of the second detection signal.

4. The control apparatus according to Claim 2, wherein the signal corresponding to the second vibration component is detected from at least one of parameters of a Lissajous figure drawn using the first detection signal and the second detection signal, the parameters varying depending on an inclination, the parameters including an inclination angle, a minor axis, a major axis, and a height.

5. The control apparatus according to Claim 4, wherein the Lissajous figure is drawn with the first detection signal on a first axis and the second detection signal on a second axis.

6. The control apparatus according to Claim 4, wherein the Lissajous figure is drawn with a sum signal of the first and second detection signals on a first axis and a difference signal of the first and second detection signals on a second axis.

7. The control apparatus according to Claim 2,

wherein a vector based on an amplitude and a phase of the first detection signal is defined as a first signal vector, wherein a vector based on an amplitude and a phase of the second detection signal is defined as a second signal vector,
wherein one of a sum and a difference of the first and second signal vectors is defined as a first vibration vector, and the other is defined as a second vibration vector,
wherein a vector component in a same direction as that of the first vibration vector is defined as a same-direction component, and a vector component in a direction normal to the first vibration vector is defined as a normal-direction component, and
wherein the signal corresponding to the second vibration component is detected from a difference between same-direction components of the first signal vector and the second signal vector, a difference between normal-direction components of the first signal vector and the second signal vector, and a ratio set based on a magnitude of the first vibration vector.

8. The control apparatus according to Claim 2,

wherein the first detection signal is defined as a first signal vector, and the second detection signal is defined as a second signal vector,
wherein one of a sum and a difference of the first and second signal vectors is defined as a first vibration vector, and the other is defined as a second vibration vector,
wherein a vector component in a same direction as that of the first vibration vector is defined as a same-direction component, and a vector component in a direction normal to the first vibration vector is defined as a normal-direction component, and
wherein the signal corresponding to the second vibration component is detected from the same-direction component of the second vibration vector, a normal-direction component of the second vibration vector, and a ratio set based on a magnitude of the first vibration vector.

9. The control apparatus according to Claim 2,

wherein one of a sum signal and a difference signal of the first and second detection signals is defined as a reference signal, and the other is defined as a signal to be measured,
wherein a phase of the reference signal is defined as a reference phase, and
wherein the signal corresponding to the second vibration component is detected by interval integration of the signal to be measured performed over a phase interval set relative to the reference phase.

10. The control apparatus according to Claim 2,

wherein one of a sum signal and a difference signal of the first and second detection signals is defined as a reference signal, and the other is defined as a signal to be measured,
wherein a phase of the reference signal is defined as a reference phase, and
wherein the signal corresponding to the second vibration component is detected by synchronous detection of the signal to be measured using a reference signal generated with a phase difference set relative to the reference phase.

11. The control apparatus according to Claim 2, wherein a first comparison signal corresponding to the first detection signal and a second comparison signal corresponding to the second detection signal are generated based on at least one of an amplitude, a phase difference, and a frequency of a voltage based on the first and second signals, and the signal corresponding to the second vibration component is detected from a difference between the first detection signal and the first comparison signal and a difference between the second detection signal and the second comparison signal.

12. The control apparatus according to Claim 2, wherein either a first comparison signal corresponding to a sum of the first and second detection signals or a second comparison signal corresponding to a difference of the first and second detection signals is generated based on at least one of an amplitude, a phase difference, and a frequency of a voltage based on the first and second signals, and the signal corresponding to the second vibration component is detected from a difference between the sum of the first and second detection signals and the first comparison signal or a difference between the difference of the first and second detection signals and the second comparison signal.

13. The control apparatus according to any one of Claims 2 to 12, wherein the relative speed is detected based on the signal corresponding to the second vibration component, an amplitude of the sum or the difference of the first and second detection signals, and a phase difference or an amplitude of the first and second signals or the first and second driving voltages.

14. The control apparatus according to any one of Claims 2 to 12, wherein the vibrating body has a first natural vibration and a second natural vibration, and is configured to excite the first natural vibration based on one of a sum and a difference of the first and second driving voltages and the second natural vibration based on the other.

15. The control apparatus according to Claim 1,

wherein the electromechanical energy conversion element is configured such that a first driving voltage based on a first signal and a second driving voltage based on a second signal are applied thereto,
wherein the first vibration component includes a driving vibration in a first direction occurring based on the first driving voltage, and a driving vibration in a second direction occurring based on the second driving voltage,
wherein the second vibration component includes a vibration component of at least one of the first and second directions, and
wherein the signal corresponding to the second vibration component is detected from a first detection signal configured to detect a vibration component in a same direction as the driving vibration in the first direction that includes the driving vibration in the first direction, and a second detection signal configured to detect a vibration component in a same direction as the driving vibration in the second direction that includes the driving vibration in the second direction.

16. The control apparatus according to Claim 15, wherein the signal corresponding to the second vibration component is detected from a difference between an amplitude of a sum of the first and second detection signals and an amplitude of a difference of the first and second detection signals.

17. The control apparatus according to Claim 15, wherein the signal corresponding to the second vibration component is detected from at least one of parameters of a Lissajous figure drawn using the first and second detection signals, the parameters varying depending on an inclination, the parameters including an inclination angle, a minor axis, a major axis, a height, and a width.

18. The control apparatus according to Claim 17, wherein the Lissajous figure is drawn with the first detection signal on a first axis and the second detection signal on a second axis.

19. The control apparatus according to Claim 17, wherein the Lissajous figure is drawn with a sum signal of the first and second detection signals on a first axis and a difference signal of the first and second detection signals on a second axis.

20. The control apparatus according to Claim 15,

wherein a vector based on an amplitude and a phase of the first detection signal is defined as a first vibration vector, and a vector based on an amplitude and a phase of the second detection signal is defined as a second vibration vector,
wherein a vector component in a same direction as that of the first vibration vector is defined as a same-direction component, and a vector component in a direction normal to the first vibration vector is defined as a normal-direction component, and
wherein the signal corresponding to the second vibration component is detected from a same-direction component of the second vibration vector, the normal-direction component of the second vibration vector, and a ratio set based on a magnitude of the first vibration vector.

21. The control apparatus according to Claim 15,

wherein a vector based on an amplitude and a phase of the first detection signal is defined as a first vibration vector, a vector based on an amplitude and a phase of the second detection signal is defined as a second vibration vector, a vector component in a same direction as that of the first vibration vector is defined as a same-direction component, and a vector component in a direction normal to the first vibration vector is defined as a normal-direction component, and
wherein the signal corresponding to the second vibration component is detected from a difference between a same-direction component of a sum of the first vibration vector and the second vibration vector and a same-direction component of a difference between the first and second vibration vectors, a difference between a normal-direction component of the sum of the first and second vibration vectors and a normal-direction component of a difference of the first and second vibration vectors, and a ratio set based on a magnitude of the first vibration vector.

22. The control apparatus according to Claim 15,

wherein one of the first and second detection signals is defined as a reference signal, and the other is defined as a signal to be measured,
wherein a phase of the reference signal is defined as a reference phase, and
wherein the signal corresponding to the second vibration component is detected by interval integration of the signal to be measured performed over a phase interval set relative to the reference phase.

23. The control apparatus according to Claim 15, wherein one of the first and second detection signals is defined as a reference signal, the other is defined as a signal to be measured, a phase of the reference signal is defined as a reference phase, and the signal corresponding to the second vibration component is detected by synchronous detection of the signal to be measured using a reference signal generated with a phase difference set relative to the reference phase.

24. The control apparatus according to Claim 15, wherein a first comparison signal corresponding to the first detection signal or a second comparison signal corresponding to the second detection signal is generated based on an amplitude, a phase difference, and a frequency of a voltage based on the first and second signals, and a signal corresponding to the second vibration component is detected from a difference between the first detection signal and the first comparison signal or a difference between the second detection signal and the second comparison signal.

25. The control apparatus according to any one of Claims 15 to 24, wherein the relative speed is detected based on the signal corresponding to the second vibration component, an amplitude of the first detection signal, and an amplitude or a phase difference of the first and second signals or the first and second driving voltages.

26. The control apparatus according to any one of Claims 2 to 12 and 15 to 24, wherein the relative speed is detected based on the signal corresponding to the second vibration component, and a frequency, an amplitude, and a phase difference of the first and second signals or the first and second driving voltages.

27. The control apparatus according to any one of Claims 2 to 12 and 15 to 24,

wherein the first vibration component includes a driving vibration in the first direction that vibrates, at a contact surface between the elastic body and the contact body, the elastic body in a direction perpendicular to the contact surface, and a driving vibration in the second direction that vibrates, at the contact surface, the elastic body in a relative moving direction of the elastic body and the contact body, and
wherein the second vibration component includes a vibration component in the same direction as the driving vibration in the first direction and a vibration component in the same direction as the driving vibration in the second direction.

28. The control apparatus according to any one of Claims 15 to 24, wherein the vibrating body has a first natural vibration and a second natural vibration, the first driving voltage is configured to excite the first natural vibration, and the second driving voltage is configured to excite the second natural vibration.

29. The control apparatus according to any one of Claims 2 to 12 and 15 to 24, wherein the vibrating body has an annular shape and includes a first electrode section and a second electrode section provided at different positions of the electromechanical energy conversion element.

30. The control apparatus according to any one of Claims 2 to 12 and 15 to 24, wherein the vibrating body is a plurality of independent vibrating bodies, electromechanical energy conversion elements respectively provided in the plurality of vibrating bodies are electrically connected in series, and the first and second driving voltages are applied across both ends of the electromechanical energy conversion elements connected in series.

31. The control apparatus according to any one of Claims 2 to 12 and 15 to 24, wherein the first and second detection signals are signals corresponding to output of the electromechanical energy conversion element.

32. The control apparatus according to any one of Claims 2 to 12 and 15 to 24, wherein the first and second detection signals are signals corresponding to currents flowing due to the first and second driving voltages.

33. The control apparatus according to Claim 32, wherein the signals corresponding to the currents are signals corresponding to motional currents proportional to vibration speed of the vibrating body.

34. The control apparatus according to any one of Claims 2 to 12 and 15 to 24, wherein the signal corresponding to the second vibration component varies with the relative speed.

35. The control apparatus according to any one of Claims 2 to 12 and 15 to 24, wherein an amplitude of the driving vibration in the first direction is controlled by setting a frequency or an amplitude of the mutually independent first and second signals.

36. The control apparatus according to Claim 1, wherein a force acting between the vibrating body and the contact body is detected based on a predetermined reference value of a speed and the speed.

37. The control apparatus according to Claim 1, wherein a displacement between the vibrating body and the contact body is detected based on an integrated value of the speed.

38. The control apparatus according to Claim 1, wherein the vibration actuator is controlled based on a speed command signal and the detected speed.

39. The control apparatus according to Claim 36, wherein the vibration actuator is controlled based on a force command signal and the detected force.

40. The control apparatus according to Claim 37, wherein the vibration actuator is controlled based on a displacement command signal and the detected displacement.

41. The control apparatus according to Claim 38, comprising a position detection unit configured to detect a position of the contact body,
wherein the control apparatus is configured to generate the speed command signal based on a position command signal and the detected position.

42. A vibration driving apparatus comprising:

a vibration actuator including a vibrating body and a contact body configured to contact an elastic body, the vibrating body including the elastic body and an electromechanical energy conversion element; and
a control apparatus according to any one of Claims 1 to 12 and 15 to 24,
wherein the vibrating body and the contact body are configured to move relatively in a predetermined moving direction due to vibration of the vibrating body.

**FIG.1A**

5 VIBRATING BODY

80 PROTRUSION

1 ELASTIC BODY

2 PIEZOELECTRIC ELEMENT

**FIG.1B**

2 PIEZOELECTRIC ELEMENT

4 ELECTRODE (PIEZOELECTRIC BODY)

3 ELECTRODE (PIEZOELECTRIC BODY)

**FIG.1C**

5

**FIG.1D**

5

**FIG.1E**

100 VIBRATION ACTUATOR

80

6 CONTACT BODY

1 5 VIBRATING BODY

2

# FIG.2

FREQUENCY COMMAND

ON-OFF COMMAND

PHASE DIFFERENCE COMMAND

SPEED COMMAND

CONTROL AMOUNT CALCULATION UNIT

ALTERNATING-CURRENT SIGNAL GENERATION UNIT

SPEED ESTIMATION UNIT

ESTIMATED SPEED VS

SECOND VIBRATION COMPONENT* DETECTION UNIT

THRUST VIBRATION AMPLITUDE DETECTION UNIT

*SECOND VIBRATION COMPONENT = VIBRATION COMPONENT OCCURRING ON VIBRATING BODY DUE TO REACTION FORCE RECEIVED FROM CONTACT BODY
THIRD VIBRATION COMPONENT = VIBRATION COMPONENT OCCURRING IN PIEZOELECTRIC BODY 3
FOURTH VIBRATION COMPONENT = VIBRATION COMPONENT OCCURRING IN PIEZOELECTRIC BODY 4

EP 4 773 500 A1

FIG.3A  FIG.3B  FIG.3C  FIG.3D  FIG.3E

V = -0.2 [rps]  V = 0 [rps]  V = 0.2 [rps]  V = 0.4 [rps]  V = 0.6 [rps]

# FIG.4A

# FIG.4B

# FIG.4C

# FIG.4D

# FIG.5A

TILT OF VIBRATION
ELLIPSE [degree]

SPEED [rps]

# FIG.5B

TILT OF VIBRATION
ELLIPSE [degree]

SPEED [rps]

# FIG.6A

DIFFERENCE IN CURRENT AMPLITUDE [App]

SPEED [rps]

# FIG.6B

DIFFERENCE IN CURRENT AMPLITUDE [App]

SPEED [rps]

**FIG.7A**

**FIG.7B**

FIG.8A

FIG.8B

FIG.8C

EP 4 773 500 A1

# FIG.9

FIG.10A

FIG.10B

FIG.10C

FIG.10D

# FIG.11A

EP 4 773 500 A1

# FIG.11B

EP 4 773 500 A1

# FIG.12A

# FIG.12B

EP 4 773 500 A1

# FIG.13A

SENSITIVITY
CORRECTION
COEFFICIENT $\gamma$

THRUST VIBRATION AMPLITUDE

# FIG.13B

OFFSET
CORRECTION
COEFFICIENT $\varepsilon$

THRUST VIBRATION AMPLITUDE

58

# FIG.13C

# FIG.13D

59

# FIG.14A

EP 4 773 500 A1

# FIG.14B

# FIG.15

```
                    ┌─────────┐
                    │  START  │
                    └─────────┘
                         │
                         ▼                    ⌐S101
        ┌────────────────────────────────────────┐
        │         SPEED COMMAND: Vcom             │
        │  PHASE DIFFERENCE COMMAND: Ph = 0°      │
        │         ON-OFF COMMAND: ON              │
        └────────────────────────────────────────┘
```

**SPEED COMMAND: Vcom**
**PHASE DIFFERENCE COMMAND: Ph = 0°**
**ON-OFF COMMAND: ON** — S101

**MEASUREMENT TIMING?** — S102 → NO

YES

**TS = THRUST VIBRATION AMPLITUDE**
**S = SECOND VIBRATION COMPONENT** — S103

$$\varepsilon = T1(Ph, TS)$$
$$\gamma = T2(Ph, TS)$$
$$V_S = \frac{S - \varepsilon}{\gamma}$$
— S104

**Vcom: VS** — S105

(>) → **Ph = Ph + dPh** — S109

**Ph > 90°** — S110 → NO

YES → **Ph = 90°** — S111

(<) → **Ph = Ph − dPh** — S106

**Ph < -90°** — S107 → NO

YES → **Ph = -90°** — S108

(=)

**STOP COMMAND?** — S112 → NO

YES

**ON-OFF COMMAND: OFF** — S113

**END**

# FIG.16A

```
          ┌──────────┐
          │  START   │
          └────┬─────┘
               │                              ⌐S201
   ┌───────────▼──────────────────────────────────┐
   │ THRUST VIBRATION AMPLITUDE COMMAND: TScom     │
   │ FREQUENCY COMMAND: Frq = F0                   │
   └───────────┬──────────────────────────────────┘
               │
   ┌───────────▼───────────┐          S202
   │                       │
NO ◀──  MEASUREMENT TIMING? ──
   │                       │
   └───────────┬───────────┘
            YES│                         ⌐S203
   ┌───────────▼──────────────────────┐
   │  TS = THRUST VIBRATION AMPLITUDE  │
   └───────────┬──────────────────────┘
               │                 S204
      >   ┌────▼─────┐   <
   ┌──────  TScom: TS  ──────┐
   │      └────┬─────┘       │
⌐S208         │=          ⌐S205
┌────▼─────┐  │      ┌─────▼──────┐
│Frq=Frq−dFrq│ │      │Frq=Frq+dFrq│
└────┬─────┘  │      └─────┬──────┘
     │   S209 │            │   S206
 ┌───▼────┐NO │       NO┌──▼─────┐
 │Frq<Fmin├───┤◀────────┤Frq>Fmax│
 └───┬────┘   │         └──┬─────┘
  YES│ ⌐S210  │         YES│ ⌐S207
 ┌───▼────┐   │         ┌──▼─────┐
 │Frq=Fmin│   │         │Frq=Fmax│
 └───┬────┘   │         └──┬─────┘
     └────────┤◀───────────┘
              │          S211
        ┌─────▼────────┐
   NO◀──  STOP COMMAND?  ──
        └─────┬────────┘
           YES│
          ┌───▼───┐
          │  END  │
          └───────┘
```

# FIG.16B

START

*S301*
**THRUST VIBRATION AMPLITUDE COMMAND: TScom**
**FREQUENCY COMMAND: Frq = F0**
**VOLTAGE AMPLITUDE COMMAND: VS = Vmin**

*S302*
**NO** ← **MEASUREMENT TIMING?**

**YES**

*S303*
**TS = THRUST VIBRATION AMPLITUDE**

*S304*
**TScom: TS**
>     =     <

*S308*
**VS = VS + dVS**

*S305*
**VS = VS − dVS**

*S309*
**VS > Vmax** → **NO**

*S306*
**NO** ← **VS < Vmin**

**YES**
*S310*
**VS = Vmax**

**YES**
*S307*
**VS = Vmin**

*S311*
**NO** ← **STOP COMMAND?**

**YES**

END

# FIG.17

EP 4 773 500 A1

FIG.18A

205

280

204

201

203

202

FIG.18B

205

203 204 203 204

FIG.18C

205

203 204 203 204

FIG.18D

200

206

280

203 204

205

FIG.19A

FIG.19B

FIG.19C

FIG.19D

# FIG.20A

# FIG.20B

**FIG.21**

# FIG.22A

FIG.22B

# FIG.23A

*405*

*480*

*403*
*404*
*401*

# FIG.23B

*407*

*406* **CONTACT BODY**

*480*

**PIEZOELECTRIC BODY**
*403*
*404*
**PIEZOELECTRIC BODY**

*401*

*405* **VIBRATING BODY**

*400*

FIG.24

# FIG.25A

$I_A$

Φ7

Φ8

$I_B$

# FIG.25B

$\alpha_A I_A + \alpha_B I_B$

Φ9

Φ10

$\alpha_A I_A - \alpha_B I_B$

# FIG.25C

# FIG.25D

FIG.26A

FIG.26B

FIG.27A

FIG.27B

FIG.27C

# FIG.28

$$\overrightarrow{\alpha_A I_A}$$

$$|\overrightarrow{\alpha_B I_B}| \cdot \sin\theta_B$$

$$\theta_B$$

$$\overrightarrow{\alpha_B I_B}$$

$$|\overrightarrow{\alpha_B I_B}| \cdot \cos\theta_B$$

FIG.29A

FIG.29B

FIG.29C

FIG.29D

# FIG.30A

# FIG.30B

# FIG.31A

TILT CORRECTION
COEFFICIENT

THRUST VIBRATION AMPLITUDE

# FIG.31B

OFFSET
CORRECTION
COEFFICIENT

THRUST VIBRATION AMPLITUDE

# FIG.32

EP 4 773 500 A1

# FIG.33

START

S401

SPEED COMMAND: Vcom
VB VOLTAGE AMPLITUDE COMMAND: VBcom = 0
ON-OFF COMMAND: ON

S402

MEASUREMENT TIMING? — NO

YES

S403

TS = THRUST VIBRATION AMPLITUDE
S = SECOND VIBRATION COMPONENT

S404

$\varepsilon$ = T5(VBcom, TS)
$\gamma$ = T6(VBcom, TS)
$V_S = \dfrac{S - \varepsilon}{\gamma}$

S405

Vcom: VS

> 

S409

VBcom = VBcom + dVB

S410

VBcom > VBmax — NO

YES

S411

VBcom = VBmax

=

<

S406

VBcom = VBcom − dVB

S407

VBcom < VBmin — NO

YES

S408

VBcom = VBmin

S412

STOP COMMAND? — NO

YES

S413

ON-OFF COMMAND: OFF

END

# FIG.34A

SPEED [rps] vs VB VOLTAGE AMPLITUDE [Vpp]

# FIG.34B

β vs VB VOLTAGE AMPLITUDE [Vpp]

# FIG.35

# FIG.36

EP 4 773 500 A1

# FIG.37A

# FIG.37B

# FIG.37C

# FIG.38A

# FIG.38B

SPEED COMMAND

THRUST VIBRATION AMPLITUDE COMMAND

ON-OFF COMMAND

VB VOLTAGE AMPLITUDE COMMAND

FREQUENCY COMMAND

19

20 CONTROL AMOUNT CALCULATION UNIT

70

71 CONTROL AMOUNT CALCULATION UNIT

15 ALTERNATING-CURRENT SIGNAL GENERATION UNIT

VA

VB

43

SA

600

A 611

NA

613

615

18 SPEED ESTIMATION UNIT

16 SECOND VIBRATION COMPONENT DETECTION UNIT

44

B 612

NB

17 THRUST VIBRATION AMPLITUDE DETECTION UNIT

SB

614

616

EP 4 773 500 A1

# FIG.39A

# FIG.39B

**FIG.40**

# FIG.41A

SPEED [rps]

PHASE DIFFERENCE [degree]

# FIG.41B

β

PHASE DIFFERENCE [degree]

**FIG.42A**

FIG.42B

**FIG.43A**

705

780

701

703

704

701

**FIG.43B**

706

780

701

403

404

701

705

700

**FIG.43C**

712

711

713

703

714

FIG.44A

FIG.44B

FIG.44C

# FIG.45A

# FIG.45B

## INTERNATIONAL SEARCH REPORT

| International application No. |
| --- |
| **PCT/JP2024/030122** |

| A. | CLASSIFICATION OF SUBJECT MATTER |
| --- | --- |

*H02N 2/06*(2006.01)i
FI: H02N2/06

According to International Patent Classification (IPC) or to both national classification and IPC

| B. | FIELDS SEARCHED |
| --- | --- |

Minimum documentation searched (classification system followed by classification symbols)

H02N2/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 02-074180 A (NEC CORPORATION) 14 March 1990 (1990-03-14) | 1, 42 |
|  | p. 2, lower right column, line 9 to p. 4, upper left column, line 20, fig. 1 |  |
| Y |  | 36-41 |
| A |  | 2-35 |
| Y | JP 2017-022938 A (CANON KABUSHIKI KAISHA) 26 January 2017 (2017-01-26) paragraph [0018], fig. 2 | 36, 39 |
| Y | JP 02-030452 A (MITSUBISHI ELECTRIC CORPORATION) 31 January 1990 (1990-01-31) p. 2, lower right column, lines 1-11, p. 3, upper left, column, lines 1-3, fig. 1-2 | 37, 40 |
| Y | JP 03-212174 A (CANON KABUSHIKI KAISHA) 17 September 1991 (1991-09-17) p. 6, lower left column, line 14 to lower right column, line 10, fig. 2 | 38, 41 |
| Y | JP 2012-110228 A (PANASONIC CORPORATION) 07 June 2012 (2012-06-07) paragraph [0026], fig. 7 | 41 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 October 2024** | **12 November 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan |  |
|  | Telephone No. |

Form PCT/ISA/210 (second sheet) (July 2022)

## INTERNATIONAL SEARCH REPORT
### Information on patent family members

International application No.

**PCT/JP2024/030122**

| Patent document cited in search report | | | Publication date (day/month/year) | Patent family member(s) | Publication date (day/month/year) |
|---|---|---|---|---|---|
| JP | 02-074180 | A | 14 March 1990 | (Family: none) | |
| JP | 2017-022938 | A | 26 January 2017 | (Family: none) | |
| JP | 02-030452 | A | 31 January 1990 | (Family: none) | |
| JP | 03-212174 | A | 17 September 1991 | US 5157300 A column 5, lines 35-57, fig. 2 EP 437319 A1 | |
| JP | 2012-110228 | A | 07 June 2012 | (Family: none) | |

Form PCT/ISA/210 (patent family annex) (July 2022)

**REFERENCES CITED IN THE DESCRIPTION**

**Patent documents cited in the description**

- JP 3191406 B

- JP 2023139406 A